# EUROPEAN PATENT APPLICATION

(11) **EP 3 459 976 A1**
(43) Date of publication of application: **27.03.2019**
(21) Application number: 17799231.0
(22) Date of filing: 10.05.2017
(51) Int. Cl.: C08F 8/00, C08K 3/34, C08L 101/02

(54) **THERMOPLASTIC ELASTOMER COMPOSITION, AND PRODUCTION METHOD THEREFOR**

(30) Priority: 16.05.2016 JP 2016098257
(71) Applicant: JXTG Nippon Oil & Energy Corporation, Chiyoda-ku Tokyo 100-8162 (JP)
(72) Inventor: CHINO Keisuke, Tokyo 100-8162 (JP); SUZUKI Hiroaki, Tokyo 100-8162 (JP)
(74) Representative: Hoffmann Eitle
(86) International application number: PCT/JP2017/017643
(87) International publication number: WO 2017/199806

(57) **Abstract**

A thermoplastic elastomer composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below, wherein
the elastomer component is at least one reaction product selected from the group consisting of specific reaction products (I) to (VI), and the composition further comprises an organically modified clay, a content ratio of which is 20 parts by mass or less relative to 100 parts by mass of the elastomer component.

## Description

### [Technical Field]

The present invention relates to a thermoplastic elastomer composition, and a method for producing the same.

### [Background Art]

Thermoplastic elastomers are materials which are industrially very useful because they can be melted at molding temperature during a molding process and can be shaped by a known resin molding technique. As an example of such thermoplastic elastomers, Japanese Unexamined Patent Application Publication No. 2006-131663 (PTL 1) discloses a thermoplastic elastomer comprising an elastomeric polymer which has a side chain containing a hydrogen-bond cross-linkable moiety having a carbonyl-containing group and a nitrogen-containing heterocycle and has another side chain containing a covalent-bond cross-linking moiety, and which has a glass-transition point of 25°C or below.

### [Citation List]

### [Patent Literature]

[PTL 1] Japanese Unexamined Patent Application Publication No. 2006-131663

### [Summary of Invention]

### [Technical Problem]

The thermoplastic elastomers described in the above PTL 1, however, are not necessarily sufficient in terms of tear strength and tensile strength based on modulus at 100% and strength at break.

The present invention has been made in view of the problems in the conventional art, and has an object to provide a thermoplastic elastomer composition which can achieve a higher level of tensile strength based on modulus at 100% and strength at break and which also can have a sufficiently high level of tear strength.

### [Solution to Problem]

The present inventors have continuously conducted intensive study to achieve the above-described object and consequently have found that a thermoplastic elastomer composition comprising at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below can be made to achieve a higher level of mechanical strength based on modulus at 100% and strength at break and also have a sufficiently high level of tear strength, when the elastomer component is at least one reaction product selected from the group consisting of the following reaction products (I) to (VI), and the composition further comprises an organically modified clay, a content ratio of which is 20 parts by mass or less relative to 100 parts by mass of the elastomer component. This finding has led to the completion of the present invention.

Specifically, a thermoplastic elastomer composition of the present invention is a thermoplastic elastomer composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below, wherein
the elastomer component is at least one reaction product selected from the group consisting of the following reaction products (I) to (VI):
a reaction product (I) of a maleic anhydride-modified elastomeric polymer with at least one compound among hydrocarbon compounds each having two or more substituents of at least one type selected from hydroxy groups, thiol groups, and amino groups;
a reaction product (II) of a hydroxy group-containing elastomeric polymer with a compound having two or more substituents of at least one type selected from carboxy groups, alkoxysilyl groups, and isocyanate groups;
a reaction product (III) of a carboxy group-containing elastomeric polymer with a compound having two or more substituents of at least one type selected from hydroxy groups, thiol groups, and amino groups;
a reaction product (IV) of an amino group-containing elastomeric polymer with a compound having two or more substituents of at least one type selected from carboxy groups, epoxy groups, alkoxysilyl groups, and isocyanate groups;
a reaction product (V) of an alkoxysilyl group-containing elastomeric polymer with a compound having two or more substituents of at least one type selected from hydroxy groups, carboxy groups, and amino groups; and
a reaction product (VI) of an epoxy group-containing elastomeric polymer with a compound having two or more substituents of at least one type selected from thiol groups and amino groups, and
the composition further comprises an organically modified clay, a content ratio of which is 20 parts by mass or less relative to 100 parts by mass of the elastomer component.

Moreover, in the aforementioned thermoplastic elastomer composition of the present invention, a main chain of the polymer contained as the elastomer component is preferably at least one selected from the group consisting of diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers.

### [Advantageous Effects of Invention]

According to the present invention, it is possible to provide a thermoplastic elastomer composition which can achieve a higher level of tensile strength based on modulus at 100% and strength at break and which also can have a sufficiently high level of tear strength.

### [Description of Embodiments]

Hereinafter, the present invention is described in detail based on preferred embodiments.

A thermoplastic elastomer composition of the present invention is a thermoplastic elastomer composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below, wherein
the elastomer component is at least one reaction product selected from the group consisting of the following reaction products (I) to (VI):
a reaction product (I) of a maleic anhydride-modified elastomeric polymer (hereinafter, sometimes simply referred to as "elastomeric polymer (E1)" for convenience) with at least one compound among hydrocarbon compounds each having two or more substituents of at least one type selected from hydroxy groups, thiol groups, and amino groups (hereinafter, sometimes simply referred to as "compound (M1)" for convenience);
a reaction product (II) of a hydroxy group-containing elastomeric polymer (hereinafter, sometimes simply referred to as "elastomeric polymer (E2)" for convenience) with a compound having two or more substituents of at least one type selected from carboxy groups, alkoxysilyl groups, and isocyanate groups (hereinafter, sometimes simply referred to as "compound M2" for convenience);
a reaction product (III) of a carboxy group-containing elastomeric polymer (hereinafter, sometimes simply referred to as "elastomeric polymer (E3)" for convenience) with a compound having two or more substituents of at least one type selected from hydroxy groups, thiol groups, and amino groups (hereinafter, sometimes simply referred to as "compound (M3)" for convenience);
a reaction product (IV) of an amino group-containing elastomeric polymer (hereinafter, sometimes simply referred to as "elastomeric polymer (E4)" for convenience) with a compound having two or more substituents of at least one type selected from carboxy groups, epoxy groups, alkoxysilyl groups, and isocyanate groups (hereinafter, sometimes simply referred to as "compound (M4)" for convenience);
a reaction product (V) of an alkoxysilyl group-containing elastomeric polymer (hereinafter, sometimes simply referred to as "elastomeric polymer (E5)" for convenience) with a compound having two or more substituents of at least one type selected from hydroxy groups, carboxy groups, and amino groups (hereinafter, sometimes simply referred to as "compound (M5)" for convenience); and
a reaction product (VI) of an epoxy group-containing elastomeric polymer (hereinafter, sometimes simply referred to as "elastomeric polymer (E6)" for convenience) with a compound having two or more substituents of at least one type selected from thiol groups and amino groups (hereinafter, sometimes simply referred to as "compound (M6)" for convenience), and
the composition further comprises an organically modified clay, a content ratio of which is 20 parts by mass or less relative to 100 parts by mass of the elastomer component.

### (Elastomer Component)

Such an elastomer component is at least one selected from the group consisting of the aforementioned elastomeric polymers (A) and (B), and is at least one selected from the group consisting of the reaction products (I) to (VI).

In each of the elastomeric polymers (A) and (B), the "side chain" refers to a side chain or a terminal of the elastomeric polymer. Such a side chain is basically formed, in each reaction product, by a reaction of a functional group (a maleic anhydride group or the like) in a polymer selected from the elastomeric polymers (E1) to (E6) for use in the production (a maleic anhydride-modified elastomeric polymer, a hydroxy group-containing elastomeric polymer, or the like), with a functional group in a compound selected as appropriate from the compounds (M1) to (M6) to be reacted with the polymer (for example, a hydrocarbon compound having two or more substituents of one type selected from hydroxy groups, thiol groups, and amino groups) .

In addition, the "side chain containing a hydrogen-bond cross-linkable moiety having a carbonyl-containing group and/or a nitrogen-containing heterocycle (hereinafter, sometimes simply referred to as "side chain (a)" for convenience)" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming the main chain of the elastomeric polymer (the main chain of the polymer contained as the elastomer component). Moreover, "containing a hydrogen-bond cross-linkable moiety and a covalent-bond cross-linking moiety in a side chain" is a concept including a case where side chains of both a side chain having a hydrogen-bond cross-linkable moiety (hereinafter, sometimes referred to as "side chain (a')" for convenience) and a side chain having a covalent-bond cross-linking moiety (hereinafter, sometimes referred to as "side chain (b)" for convenience) are contained, so that the side chains of the polymer contain both a hydrogen-bond cross-linkable moiety and a covalent-bond cross-linking moiety, as well as a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as "side chain (c)" for convenience) is contained, so that the side chain of the polymer contain both a hydrogen-bond cross-linkable moiety and a covalent-bond cross-linking moiety.

The main chain (the main chain of the polymer contained as the elastomer component:polymer forming a main chain portion thereof) of each of the elastomeric polymers (A) and (B) may be generally a known natural polymer or a synthetic polymer, wherein the polymer has a glass-transition point of room temperature (25°C) or lower (the main chain may be a so-called elastomer), and is not particularly limited. Accordingly, the elastomeric polymers (A) and (B) may be, for example, those which have an elastomeric polymer being a natural polymer, a synthetic polymer, or the like and having a glass-transition point of room temperature (25°C) or lower as a main chain, and which contain a side chain (a) containing a hydrogen-bond cross-linkable moiety having a carbonyl-containing group and/or a nitrogen-containing heterocycle; those which have an elastomeric polymer being a natural polymer, a synthetic polymer, or the like and having a glass-transition point of room temperature (25°C) or lower as a main chain, and which contain a side chain (a') having a hydrogen-bond cross-linkable moiety and a side chain (b) having a covalent-bond cross-linking moiety as side chains; those which have an elastomeric polymer being a natural polymer, a synthetic polymer, or the like and having a glass-transition point of room temperature (25°C) or lower as a main chain, and which contain a side chain (c) containing both a hydrogen-bond cross-linkable moiety and a covalent-bond cross-linking moiety; or the like.

Examples of the main chain of each of these elastomeric polymers (A) and (B) (the main chain of the polymer contained as the elastomer component: a polymer forming the main chain portion thereof) include diene-based rubbers such as natural rubber (NR), isoprene rubber (IR: polyisoprene), butadiene rubber (BR: polybutadiene), 1,2-butadiene rubber, styrene-butadiene rubber (SBR), styrene-butadiene block copolymer, acrylonitrile-butadiene rubber (NBR), chloroprene rubber (CR), butyl rubber (IIR), and ethylene-propylene-diene rubber (EPDM), as well as hydrogenated products thereof; olefin-based rubbers such as ethylene-propylene rubber (EPM), ethylene-acrylic rubber (AEM), ethylene-butene rubber (EBM), polyethyleneimine, chlorosulfonated polyethylene, acrylic rubber, fluororubber, polyethylene rubber, and polypropylene rubber; epichlorohydrin rubber; polysulfide rubbers; silicone rubbers; urethane rubbers; and the like.

The main chains of the elastomeric polymers (A) and (B) (the main chains of the polymers contained as the elastomer component: polymers forming main chain portions thereof) may also be those formed of an elastomeric polymer containing a resin component, and examples thereof include optionally hydrogenated polystyrene-based elastomeric polymers (for example, SBS, SIS, SEBS, and the like), polyolefin-based elastomeric polymers, polyvinyl chloride-based elastomeric polymers, polyurethane-based elastomeric polymers, polyester-based elastomeric polymers, polyamide-based elastomeric polymers, and the like.

The main chains of the elastomeric polymers (A) and (B) (the main chains of the polymers contained as the elastomer component) are each preferably at least one selected from diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers. In addition, the main chains of the elastomeric polymers (A) and (B) (the main chains of the polymers contained as the elastomer component) are each preferably a hydrogenated product of a diene-based rubber or an olefin-based rubber from the viewpoint of the absence of a double bond susceptible to aging, and preferably a diene-based rubber from the viewpoints of the low cost and the high reactivity (the presence of many double bonds capable of an ene reaction with a compound such as maleic anhydride).

Moreover, the elastomeric polymers (A) and (B) may be liquid or solid, and the molecular weights thereof are not particularly limited. The molecular weights may be selected, as appropriate, according to the application for which the thermoplastic elastomer composition of the present invention is used, a required physical property, or the like.

When the flowability upon heating (de-cross-linking, or the like) of the thermoplastic elastomer composition of the present invention is important, the above-described elastomeric polymers (A) and (B) are preferably liquid. For example, when the main chain portion is a diene-based rubber such as isoprene rubber or butadiene rubber, the weight average molecular weight of the main chain portion is preferably 1,000 to 100,000 and is particularly preferably about 1,000 to 50,000 to make the elastomeric polymers (A) and (B) liquid.

On the other hand, when the strength of the thermoplastic elastomer composition of the present invention is important, the elastomeric polymers (A) and (B) are preferably solid. For example, when the main chain portion is a diene-based rubber such as isoprene rubber or butadiene rubber, the weight average molecular weight of the main chain portion is preferably 100, 000 or higher, and particularly preferably about 500,000 to 1,500,000 to make the elastomeric polymers (A) and (B) solid.

The weight average molecular weight is a weight average molecular weight (in terms of polystyrene) measured by gel permeation chromatography (GPC). It is preferable to use tetrahydrofuran (THF) as a solvent for the measurement.

In the thermoplastic elastomer composition of the present invention, a mixture of two or more of the elastomeric polymers (A) and (B) can be used. In this case, the mixing ratio of the elastomeric polymers can be any according to the application for which the thermoplastic elastomer composition of the present invention is used, a required physical property, or the like.

In addition, the glass-transition points of the elastomeric polymers (A) and (B) are 25°C or below as mentioned above. This is because when the glass-transition points of the elastomeric polymers are within this range, the thermoplastic elastomer composition of the present invention exhibits rubber-like elasticity at room temperature. Meanwhile, the "glass-transition point" in the present invention is a glass-transition point measured by differential scanning calorimetry (DSC) . For the measurement, the rate of temperature rise is preferably 10°C/min.

The main chains of the elastomeric polymers (A) and (B) (the main chains of the polymers contained as the elastomer component) are preferably diene-based rubbers such as natural rubber (NR), isoprene rubber (IR), butadiene rubber (BR), 1,2-butadiene rubber, styrene-butadiene rubber (SBR), ethylene-propylene-diene rubber (EPDM), or butyl rubber (IIR) ; or olefin-based rubbers such as ethylene-propylene rubber (EPM), ethylene-acrylic rubber (AEM), or ethylene-butene rubber (EBM), because the resultant elastomeric polymers (A) and (B) have glass-transition points of 25°C or below, and a formed article made of the obtained thermoplastic elastomer composition shows rubber-like elasticity at room temperature (25°C). In addition, when an olefin-based rubber is used as the main chain of each of the elastomeric polymers (A) and (B), the obtained thermoplastic elastomer composition tends to have an improved tensile strength, and degradation of the composition tends to be suppressed more sufficiently because of the absence of double bonds.

The bound styrene content of the styrene-butadiene rubber (SBR) which can be used as the elastomeric polymers (A) and (B), the hydrogenation ratio of the hydrogenated elastomeric polymer which can be used as the elastomeric polymers (A) and (B), and the like are not particularly limited, and can be adjusted to any ratio according to the application for which the thermoplastic elastomer composition of the present invention is used, a physical property required for the composition, or the like.

In addition, when ethylene-propylene-diene rubber (EPDM), ethylene-acrylic rubber (AEM), ethylene-propylene rubber (EPM), or ethylene-butene rubber (EBM) is used as the main chain of the above-described elastomeric polymer (A) or (B) (the main chain of the polymer contained as the elastomer component), the degree of crystallinity therein is preferably less than 10% (more preferably 5 to 0%) especially from the viewpoint of expression of favorable rubber-like elasticity at room temperature. Moreover, when ethylene-propylene-diene rubber (EPDM), ethylene-acrylic rubber (AEM), ethylene-propylene rubber (EPM), or ethylene-butene rubber (EBM) is used as the main chain of the above-described elastomeric polymer (A) or (B), the ethylene content therein is preferably 10 to 90% by mole, and more preferably 30 to 90% by mole. The ethylene content within this range is preferable, because a thermoplastic elastomer (composition) formed therefrom is excellent in compression set and mechanical strengths, especially, tensile strength.

Further, the above-described elastomeric polymer (A) or (B) is preferably amorphous from the viewpoint of expression of favorable rubber-like elasticity at room temperature. Moreover, such elastomeric polymer (A) or (B) may be an elastomer partially having crystallinity (crystal structure), but even in this case, the degree of crystallinity is preferably less than 10% (particularly preferably 5 to 0%) . Here, such a degree of crystallinity can be obtained in such a way that diffraction peaks are measured by using an X-ray diffraction instrument (for example, one manufactured by Rigaku Corporation under the trade name "MiniFlex 300") as a measurement instrument and an integral ratio between the scattering peaks derived from the crystalline and amorphous structures is calculated.

In addition, as described above, the above-described elastomeric polymers (A) and (B) have, as a side chain, at least one of a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. Note that, in the present invention, the side chain (c) can also be regarded as a side chain functioning as a side chain (a') and also as a side chain (b). Each of the side chains is described below.

### <Side Chain (a'): Side Chain Containing Hydrogen-bond cross-linkable moiety>

The side chain (a') containing a hydrogen-bond cross-linkable moiety may be any, and the structure thereof is not particularly limited, as long as the side chain has a group that can form a cross-linkage by a hydrogen bond (for example, a hydroxy group, a hydrogen-bond cross-linkable moiety contained in the side chain (a) described later, or the like), and forms a hydrogen bond on the basis of the group. Here, the hydrogen-bond cross-linkable moiety is a moiety through which polymer molecules (elastomer molecules) are cross-linked by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like) . Hence, when both a hydrogen acceptor and a hydrogen donor are not present in side chains of elastomer molecules, no cross-linkage by a hydrogen bond is formed. For this reason, only when both a hydrogen acceptor and a hydrogen donor are present in side chains of elastomer molecules, a hydrogen-bond cross-linkable moiety can be considered to be present in the system. Note that, in the present invention, if both a portion that can functions as a hydrogen acceptor (for example, a carbonyl group or the like) and a portion that can functions as a hydrogen donor (for example, a hydroxy group or the like) are present in side chains of elastomer molecules, the portion that can functions as a hydrogen acceptor and the portion that can functions as a donor of the side chains are considered to be hydrogen-bond cross-linkable moieties.

The hydrogen-bond cross-linkable moiety in such a side chain (a') is preferably a hydrogen-bond cross-linkable moiety having a carbonyl-containing group and/or a nitrogen-containing heterocycle (a hydrogen-bond cross-linkable moiety contained in the side chain (a)), which will be described below, from the viewpoints of the formation of a stronger hydrogen bond and the like. Specifically, the side chain (a') is more preferably the side chain (a) described later. Moreover, from the same viewpoints, the hydrogen-bond cross-linkable moiety in the side chain (a') is more preferably a hydrogen-bond cross-linkable moiety having a carbonyl-containing group and a nitrogen-containing heterocycle.

### <Side Chain (a): Side Chain Containing Hydrogen-bond cross-linkable moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any, as long as the side chain (a) has a carbonyl-containing group and/or a nitrogen-containing heterocycle, and the other aspect of the structure are not particularly limited. The hydrogen-bond cross-linkable moiety more preferably has a carbonyl-containing group and a nitrogen-containing heterocycle.

The carbonyl-containing group is not particularly limited, as long as the group contains a carbonyl group. Specific examples thereof include amide, ester, imide, carboxy group, carbonyl group, and the like. The carbonyl-containing group may be a group introduced to the main chain (the polymer of the main chain portion) by using a compound capable of introducing a carbonyl-containing group to a main chain. The compound capable of introducing a carbonyl-containing group to a main chain is not particularly limited, and specific examples thereof include ketones, carboxylic acids, derivatives thereof, and the like.

Examples of the carboxylic acids include organic acids having saturated or unsaturated hydrocarbon groups, and the hydrocarbon groups may be any of aliphatic, alicyclic, or aromatic ones, and the like. Specific examples of the carboxylic acid derivatives include carboxylic anhydrides, amino acids, thiocarboxylic acids (mercapto group-containing carboxylic acids), esters, amino acids, ketones, amides, imides, dicarboxylic acids and their monoesters, and the like.

In addition, specific examples of the carboxylic acids, the derivatives thereof, and the like include carboxylic acids such as malonic acid, maleic acid, succinic acid, glutaric acid, phthalic acid, isophthalic acid, terephthalic acid, p-phenylenediacetic acid, p-hydroxybenzoic acid, p-aminobenzoic acid, and mercaptoacetic acid, as well as these carboxylic acids containing substituents; acid anhydrides such as succinic anhydride, maleic anhydride, glutaric anhydride, phthalic anhydride, propionic anhydride, and benzoic anhydride; aliphatic esters such as maleic acid esters, malonic acid esters, succinic acid esters, glutaric acid esters, and ethyl acetate; aromatic esters such as phthalic acid esters, isophthalic acid esters, terephthalic acid esters, ethyl-m-aminobenzoate, and methyl-p-hydroxybenzoate; ketones such as quinone, anthraquinone, and naphthoquinone; amino acids such as glycine, tyrosine, bicine, alanine, valine, leucine, serine, threonine, lysine, aspartic acid, glutamic acid, cysteine, methionine, proline, and N- (p-aminobenzoyl) -β-alanine; amides such as maleamide, maleamidic acid (maleic monoamide), succinic monoamide, 5-hydroxyvaleramide, N-acetylethanolamine, N,N'-hexamethylene bis(acetamide), malonamide, cycloserine, 4-acetamidophenol, and p-acetamidebenzoic acid; imides such as maleimide and succinimide; and the like.

Of these examples, the compound capable of introducing a carbonyl group (carbonyl-containing group) is preferably a cyclic acid anhydride such as succinic anhydride, maleic anhydride, glutaric anhydride, or phthalic anhydride, and is particularly preferably maleic anhydride.

In addition, when the side chain (a) has a nitrogen-containing heterocycle, the structure or the like of the nitrogen-containing heterocycle is not particularly limited, as long as the nitrogen-containing heterocycle is introduced to the main chain directly or through an organic group. It is also possible to use, as the nitrogen-containing heterocycle, one containing a heteroatom other than a nitrogen atom, such as a sulfur atom, an oxygen atom, or a phosphorus atom, in the heterocycle, as long as a nitrogen atom is contained in the heterocycle. Here, the use of the nitrogen-containing heterocycle in the side chain (a) is preferable because the presence of the heterocycle structure results in a stronger hydrogen bond forming the cross-linkage, so that the obtained thermoplastic elastomer composition of the present invention has an improved tensile strength.

In addition, the above-described nitrogen-containing heterocycle may have a substituent, and examples of the substituent include alkyl groups such as a methyl group, an ethyl group, an (iso)propyl group, and a hexyl group; alkoxy groups such as a methoxy group, an ethoxy group, and an (iso)propoxy group; groups consisting of a halogen atom such as a fluorine atom, a chlorine atom, a bromine atom, or an iodine atom; a cyano group; an amino group; an aromatic hydrocarbon group; an ester group; an ether group; an acyl group; a thioether group; and the like, any ones of which can also be used in combination. The position of substitution of such a substituent is not particularly limited, and the number of such substituents is not limited.

Moreover, the above-described nitrogen-containing heterocycle may have aromatic properties, but does not necessarily have to have aromatic properties. A nitrogen-containing heterocycle having aromatic properties is preferable, because the obtained thermoplastic elastomer composition of the present invention is further improved in compression set and mechanical strength.

In addition, such a nitrogen-containing heterocycle is preferably, but not particularly limited to, a 5-membered ring or a 6-membered ring, from the viewpoints that the hydrogen bond becomes more strongly, and the compression set and the mechanical strength are further improved. Specific examples of the nitrogen-containing heterocycle include pyrrololine, pyrrolidone, oxindole (2-oxindole), indoxyl (3-oxindole), dioxindole, isatin, indolyl, phthalimidine, β-isoindigo, monoporphyrin, diporphyrin, triporphyrin, azaporphyrin, phthalocyanine, hemoglobin, uroporphyrin, chlorophyll, phylloerythrin, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, oxylindole, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, benzoxazole, benzoisoxazole, anthranyl, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, hydroxyethyl isocyanurate, derivatives thereof, and the like. Of these examples, preferred examples of particularly the 5-membered nitrogen-containing rings include the compounds described below (cyclic structures represented by the chemical formulae), triazole derivatives represented by the following general formula (10), and imidazole derivatives represented by the following general formula (11). In addition, these may have the above-described various substituents, and may be subjected to hydrogen addition or elimination.

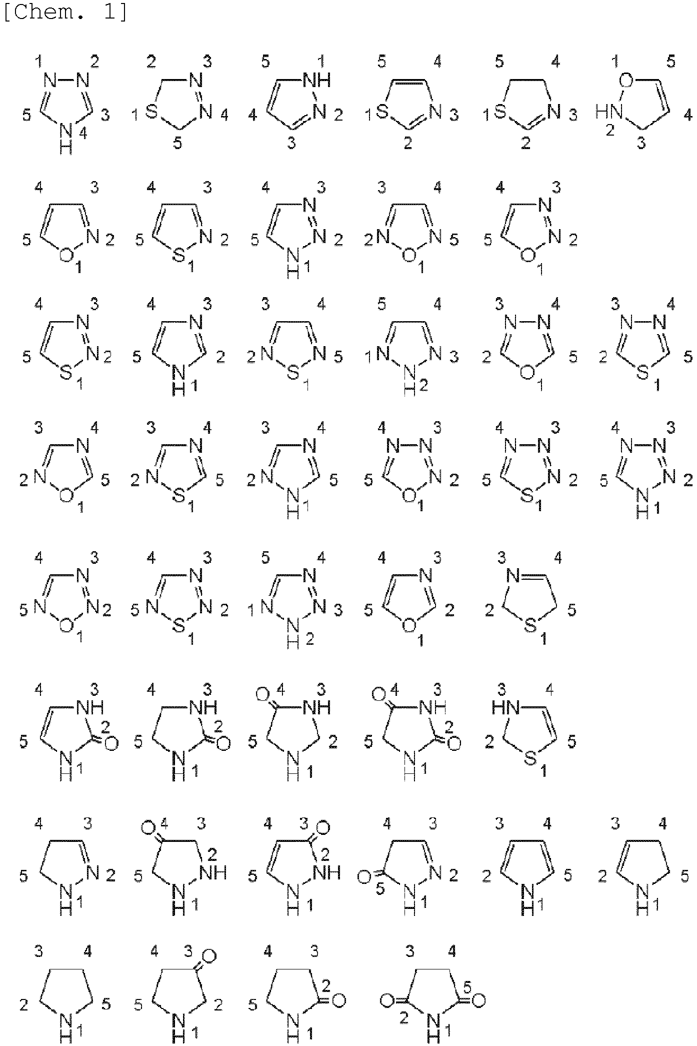

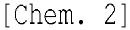

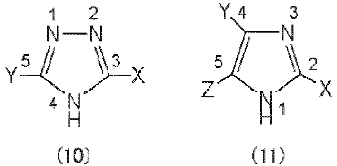

The substituents X, Y, and Z in the general formulae (10) and (11) are each independently a hydrogen atom, an alkyl group having 1 to 30 carbon atoms, an aralkyl group having 7 to 20 carbon atoms, an aryl group having 6 to 20 carbon atoms, or an amino group. Note that one of X and Y in the above-described general formula (10) is not a hydrogen atom, and similarly at least one of X, Y, and Z in the above-described general formula (11) is not a hydrogen atom.

In addition to a hydrogen atom and an amino group, specific examples of the substituents X, Y, and Z include, linear-chain alkyl groups such as a methyl group, an ethyl group, a propyl group, a butyl group, a pentyl group, an octyl group, a dodecyl group, and a stearyl group; branched alkyl groups such as an isopropyl group, an isobutyl group, a s-butyl group, a t-butyl group, an isopentyl group, a neopentyl group, a t-pentyl group, a 1-methylbutyl group, a 1-methylheptyl group, and a 2-ethylhexyl group; aralkyl groups such as a benzyl group and a phenethyl group; aryl groups such as a phenyl group, tolyl groups (o-, m-, and p-), a dimethylphenyl group, and a mesityl group; and the like.

Of these examples, the substituents X, Y, and Z are each preferably an alkyl group, especially, a butyl group, an octyl group, a dodecyl group, an isopropyl group, or a 2-ethylhexyl group, because the obtained thermoplastic elastomer composition of the present invention has good processability.

Meanwhile, preferred examples of the nitrogen-containing 6-membered rings include the compounds described below. These compounds may also have the above-described various substituents (for example, the substituents which may be possessed by the above-described nitrogen-containing heterocycles), or may also be subjected to hydrogen addition or hydrogen elimination.

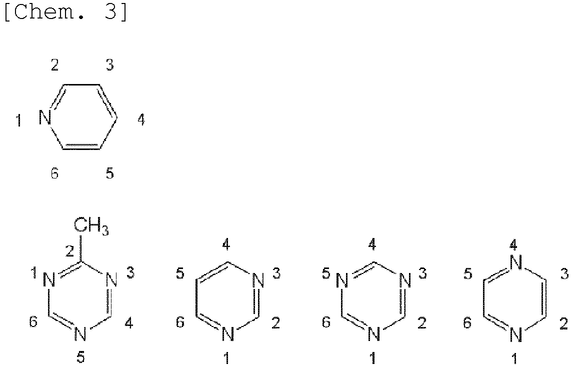

In addition, it is also possible to use condensation products of any one of the above-described nitrogen-containing heterocycles with a benzene ring or condensation products of any ones of the nitrogen-containing heterocycles, and specific preferred examples thereof include condensed rings shown below. These condensed rings may also have the above-described various substituents, and may also be subjected to addition or elimination of hydrogen atoms.

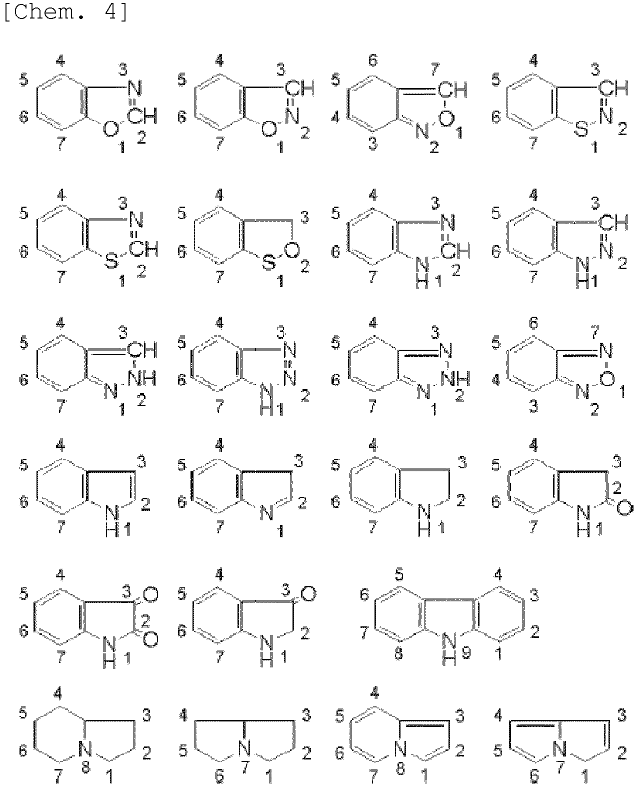

Among others, the nitrogen-containing heterocycle is preferably at least one selected from a triazole ring, an isocyanurate ring, a thiadiazole ring, a pyridine ring, an imidazole ring, a triazine ring, and a hydantoin ring, and is preferably at least one selected from a triazole ring, a thiadiazole ring, a pyridine ring, an imidazole ring, and a hydantoin ring, because the obtained thermoplastic elastomer composition of the present invention is excellent in recyclability, compression set, hardness, and mechanical strengths, especially, tensile strength.

In addition, when the side chain (a) contains both the above-described carbonyl-containing group and the above-described nitrogen-containing heterocycle, the above-described carbonyl-containing group and the above-described nitrogen-containing heterocycle may be introduced to the main chain as side chains independent from each other, and are preferably introduced to the main chain as a single side chain in which the above-described carbonyl-containing group and the above-described nitrogen-containing heterocycle are linked to each other through another group. Accordingly, as the side chain (a), it is preferable that a side chain containing a hydrogen-bond cross-linkable moiety having the above-described carbonyl-containing group and the above-described nitrogen-containing heterocycle be introduced to the main chain as a single side chain, and it is more preferable that a side chain containing a structural portion represented by the following general formula (1): 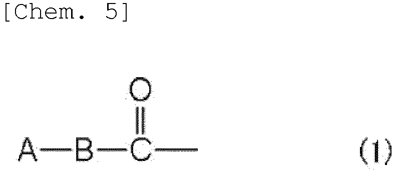 [in the formula (1), A is a nitrogen-containing heterocycle, and B is a single bond; an oxygen atom, an amino group represented by a formula NR' (R' is a hydrogen atom or an alkyl group having 1 to 10 carbon atoms), or a sulfur atom; or an organic group optionally containing any of the atoms or groups] be introduced to the main chain as a single side chain. Accordingly, the hydrogen-bond cross-linkable moiety of the side chain (a) preferably contains a structural portion represented by the above-described general formula (1).

Here, a specific example of the nitrogen-containing heterocycle A in the above-described formula (1) is any of the nitrogen-containing heterocycles listed above as the examples. In addition, a specific example of the substituent B in the above-described formula (1) is a single bond; an oxygen atom, a sulfur atom, or an amino group represented by the formula NR' (where R' is a hydrogen atom or an alkyl group having 1 to 10 carbon atoms) (hereinafter, an amino group represented by the formula NR' is simply referred to as "amino group NR''' for convenience); an alkylene or aralkylene group having 1 to 20 carbon atoms and optionally containing any of the atoms or groups; an alkylene ether group (an alkyleneoxy group, for example,-O-CH₂CH₂- group), an alkyleneamino group (for example, -NH-CH₂CH₂- group or the like), or an alkylene thioether group (an alkylenethio group, for example, -S-CH₂CH₂- group) having 1 to 20 carbon atoms and having any of the atoms or groups at a terminal; an aralkylene ether group (an aralkyleneoxy group), an aralkyleneamino group, or an aralkylene thioether group having 1 to 20 carbon atoms and having any of them at a terminal; or the like.

Here, examples of the alkyl group having 1 to 10 carbon atoms selectable as R' in the above amino group NR' include a methyl group, an ethyl group, a propyl group, a butyl group, a pentyl group, a hexyl group, a heptyl group, an octyl group, a nonyl group, a decyl group, isomers thereof, and the like. One serving as the substituent B in the above-described formula (1), i.e., any of the oxygen atom, the sulfur atom, and the amino group NR'; as well as the oxygen atoms, amino groups NR', and sulfur atoms in the alkylene ether group, alkyleneamino group, alkylene thioether group, aralkylene ether group, aralkyleneamino group, aralkylene thioether group having 1 to 20 carbon atoms and having any of the atoms or groups at a terminal, preferably forms a conjugated system, such as an ester group, an amide group, an imide group, or a thioester group, in combination with the adjacent carbonyl group.

Of these examples, the substituent B is preferably an oxygen atom, sulfur atom, or amino group forming a conjugated system; or an alkylene ether group, an alkyleneamino group, or an alkylene thioether group having 1 to 20 carbon atoms, having any of the atoms or groups at a terminal, and forming a conjugated system, and particularly preferably an amino group (NH), an alkyleneamino group (-NH-CH₂-group, -NH-CH₂CH₂-group, or -NH-CH₂CH₂CH₂-group), an alkylene ether group (-O-CH₂-group, -O-CH₂CH₂-group, or -O-CH₂CH₂CH₂-group).

In addition, when the side chain (a) is a side chain containing a hydrogen-bond cross-linkable moiety having the above-described carbonyl-containing group and the above-described nitrogen-containing heterocycle, the hydrogen-bond cross-linkable moiety having the above-described carbonyl-containing group and the above-described nitrogen-containing heterocycle is more preferably a single side chain represented by the following formula (2) or (3), which is introduced to the main chain of the above-described polymer at the α position or β position of the side chain. 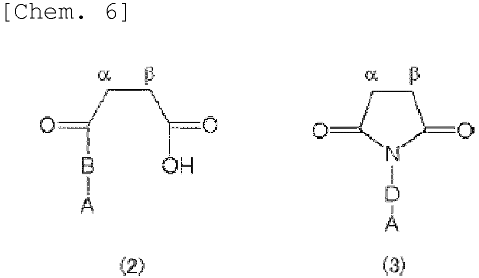 [In the formula, A is a nitrogen-containing heterocycle, B and D are each independently a single bond; an oxygen atom, an amino group NR' (where R' is a hydrogen atom or an alkyl group having 1 to 10 carbon atoms), or a sulfur atom; or an organic group optionally containing any of the atoms or groups.]

Here, the nitrogen-containing heterocycle A is basically the same as the nitrogen-containing heterocycle A of the above-described formula (1), and the substituents B and D are each independently basically the same as the substituent B in the above-described formula (1). Note that, among the examples listed for the substituent B in the above-described formula (1), the substituent D in the above-described formula (3) is preferably a single bond; an alkylene or aralkylene group having 1 to 20 carbon atoms, optionally containing an oxygen atom, a nitrogen atom, or a sulfur atom, and forming a conjugated system, and is particularly preferably a single bond. Specifically, it is preferable to form an alkyleneamino group or an aralkyleneamino group having 1 to 20 carbon atoms and optionally containing an oxygen atom, a nitrogen atom, or a sulfur atom, together with the imide nitrogen of the above-described formula (3), and it is particularly preferable that the nitrogen-containing heterocycle be directly bonded (through a single bond) to the imide nitrogen of the above-described formula (3). Specific examples of the above-described substituent D include a single bond; the above-described alkylene ether, aralkylene ether group, or the like having 1 to 20 carbon atoms and having an oxygen atom, a sulfur atom, or an amino group at a terminal; a methylene group, an ethylene group, a propylene group, a butylene group, a hexylene group, a phenylene group, and a xylylene group, isomers thereof, and the like.

In addition, when the side chain (a) is a side chain containing a hydrogen-bond cross-linkable moiety having the above-described carbonyl-containing group and the above-described nitrogen-containing heterocycle, the hydrogen-bond cross-linkable moiety of the side chain (a) preferably contains a structural portion represented by the following general formula (101): 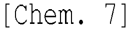 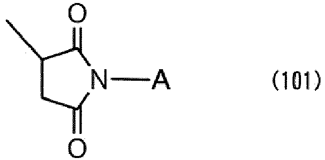 [in the formula (101), A is a nitrogen-containing heterocycle] . The nitrogen-containing heterocycle A in the formula (101) is basically the same as the nitrogen-containing heterocycle A of the above-described formula (1). In addition, from the viewpoints of high modulus and high strength at break, the hydrogen-bond cross-linkable moiety of the side chain (a) is more preferably one having the structure represented by the following general formula (102):

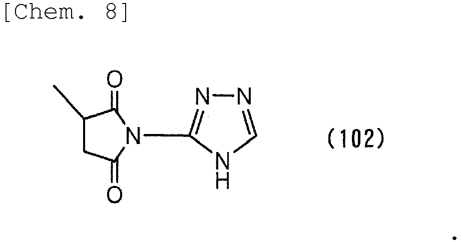

Moreover, the side chain (a) is particularly preferably a group represented by the above-described general formula (102) .

The ratio between the above-described carbonyl-containing group and the above-described nitrogen-containing heterocycle contained in the thermoplastic elastomer is not limited to a particular ratio, but is preferably in a range of 1:1 to 3:1 (more preferably 1:1, 2:1, or 3:1) because complementary interaction is more likely to be created, and because such a thermoplastic elastomer is easy to produce.

The side chain (a) containing a hydrogen-bond cross-linkable moiety having a carbonyl-containing group and/or a nitrogen-containing heterocycle is preferably introduced at a ratio (introduction ratio) of 0.1 to 50% by mole, and more preferably introduced at a ratio of 1 to 30% by mole, relative to 100% by mole of the main chain portion. If the introduction ratio of the side chain (a) is lower than 0.1% by mole, the tensile strength upon the cross-linking may be insufficient in some cases . Meanwhile, if the introduction ratio exceeds 50% by mole, the cross-linking density increases, so that the rubber elasticity may be lost in some cases. Specifically, it is preferable that the introduction ratio be within the above-described range, because the interaction between side chains of the above-described thermoplastic elastomer leads to efficient formation of cross-linkages between molecules, so that the tensile strength is high upon cross-linking, and the recyclability is excellent.

When a side chain (a-i) containing a hydrogen-bond cross-linkable moiety having the above-described carbonyl-containing group and a side chain (a-ii) containing a hydrogen-bond cross-linkable moiety having the above-described nitrogen-containing heterocycle are each independently introduced as the side chain (a), the above-described introduction ratio is calculated by taking a set of the side chain (a-i) containing a carbonyl-containing group and the side chain (a-ii) containing a nitrogen-containing heterocycle as a single side chain (a) based on the ratio between these side chains. Note that when any one of the side chains (a-i) and (a-ii) is in excess, the above-described introduction ratio can be obtained based on the excessive side chain.

In addition, for example, when the main chain portion is ethylene-propylene rubber (EPM), the above-described introduction ratio is such that the amount of monomers to which the side chain portion is introduced is about 0.1 to 50 units per 100 ethylene and propylene monomer units.

Moreover, the side chain (a) is preferably a side chain containing a hydrogen-bond cross-linkable moiety formed by a reaction of a compound capable of forming a hydrogen-bond cross-linkable moiety (for example, a compound capable of introducing a nitrogen-containing heterocycle) upon a reaction with a functional group of a polymer (the elastomeric polymer (E1) to (E6)) that forms the main chain after the reaction. When any of the above-described compounds (M1) to (M6) is used as a compound capable of introducing a nitrogen-containing heterocycle, the compound may be one, for example, having a substituent that reacts with the functional group in the elastomeric polymer (E1) to (E6) (for example, a hydroxy group, a thiol group, an amino group, or the like), and having a structure in which a nitrogen-containing heterocycle is contained in the constitution of the compound (M1) to (M6).

Here, the position at which the nitrogen-containing heterocycle is bonded in the side chain (a) is described. Note that the nitrogen heterocycle is referred to as a "nitrogen-containing n-membered ring compound (n≥3)" for convenience.

The bonding positions ("positions 1 to n") described below are based on the IUPAC nomenclature. For example, in a case of a compound having three nitrogen atoms having unshared electron pairs, the bonding position is determined according to the order based on the IUPAC nomenclature. Specifically, the bonding positions are shown in the 5-membered, 6-membered, and condensed nitrogen-containing heterocycles listed as examples above.

In the side chain (a), the bonding position of the nitrogen-containing n-membered ring compound which is bonded to the copolymer directly or through an organic group is not particularly limited, and may be any bonding position (position 1 to position n). Preferably, the bonding position is position 1 or position 3 to position n of the nitrogen-containing n-membered ring compound.

When the nitrogen-containing n-membered ring compound contains one nitrogen atom (for example, a pyridine ring or the like), position 3 to position (n-1) are preferable, because intramolecular chelate formation easily occurs, and the composition formed therefrom is excellent in physical properties such as tensile strength. By the selection of the bonding position of the nitrogen-containing n-membered ring compound, the elastomeric polymer tends to easily undergo cross-linking among molecules of the elastomeric polymer by hydrogen bonds, ionic bonding, coordinate bonds, or the like, and tends to be excellent in recyclability and excellent in mechanical properties, especially, tensile strength.

### <Side Chain (b): Side Chain Containing Covalent-Bond Cross-Linking Moiety>

In the present description, the "side chain (b) containing a covalent-bond cross-linking moiety" means that a covalent-bond cross-linking moiety (a moiety in which a cross-linkage is formed by at least one bond selected from the group consisting of amide, ester, lactone, urethane, ether, thiourethane, thioether, and urea bond) is chemically stably bonded (covalently bonded) to an atom (usually, a carbon atom) forming the main chain of the elastomeric polymer. Here, the side chain (b) is a side chain containing a covalent-bond cross-linking moiety. In this regard, when the side chain (b) containing a covalent-bonding moiety further contains a group capable of forming a hydrogen bond and forms a cross-linkage by a hydrogen bond between side chains, the side chain (b) is used as a side chain (c) described later (note that, when both a hydrogen donor and a hydrogen acceptor, which allow the formation of a hydrogen bond between side chains of elastomers, are not contained, for example, when only side chains simply containing ester groups (-COO-) are present in the system, such groups do not function as the hydrogen-bond cross-linkable moieties, because the ester groups (-COO-) alone cannot form a hydrogen bond, in particular. Meanwhile, when side chains of the elastomers have a structure having both a moiety to serve as a hydrogen donor and a moiety to serve as a hydrogen acceptor for a hydrogen bond, such as a carboxy group or a triazole ring, for example, a hydrogen bond is formed between the side chains of the elastomers, which means that hydrogen-bond cross-linkable moieties are contained. In addition, for example, when an ester group and a hydroxy group are coexistent in side chains of elastomers and these groups form a hydrogen bond between the side chains, the moieties forming the hydrogen bond serve as hydrogen-bond cross-linkable moieties. For this reason, the side chain (b) may be used as the side chain (c) in some cases depending on the structure of the side chain (b) itself, the structure of the side chain (b) and the type of a substituent of another side chain, or the like). In addition, the "covalent-bond cross-linking moiety" described herein is a moiety which cross-links polymer molecules (elastomer molecules) to each other by a covalent bond.

The side chain (b) containing a covalent-bond cross-linking moiety is not particularly limited, and may be formed, for example, in each reaction product by a reaction of a functional group in an elastomeric polymer (a maleic anhydride-modified elastomeric polymer, a hydroxy group-containing elastomeric polymer, or the like) used in the production with a functional group in a compound to be reacted with the polymer (for example, a hydrocarbon compound containing two or more substituents of at least one type selected from hydroxy groups, thiol groups, and amino groups). The cross-linkage at the covalent-bond cross-linking moiety of the side chain (b) is preferably formed by at least one bond selected from the group consisting of amide, ester, lactone, urethane, ether, urea bond, thiourethane, and thioether.

Moreover, as the "compound capable of forming a covalent-bond cross-linking moiety (compound that forms a covalent bond) " upon a reaction with an elastomeric polymer (a maleic anhydride-modified elastomeric polymer, a hydroxy group-containing elastomeric polymer, or the like) used in the production of each of the aforementioned reaction products, an appropriate compound may be selected and used from among the compounds (M1) to (M6) for use in the production of the aforementioned reaction products (a hydrocarbon compound having two or more substituents of at least one type selected from hydroxy groups, thiol groups, and amino groups, a compound having two or more substituents of at least one type selected from carboxy groups and alkoxysilyl groups, a compound having two or more substituents of at least one type selected from hydroxy groups, thiol groups, and amino groups, a compound having two or more substituents of at least one type selected from carboxy groups and epoxy groups, and a compound having two or more substituents of at least one type selected from hydroxy groups and carboxy groups). Examples of such compound include a polyamine compound having two or more amino groups in one molecule; a polyol compound having two or more hydroxy groups in one molecule; a polyisocyanate compound having two or more isocyanate (NCO) groups in one molecule; a polythiol compound having two or more thiol groups (mercapto groups); a polyepoxy compound having two or more epoxy groups in one molecule; a polycarboxy compound having two or more carboxy groups in one molecule; a polyalkoxysilyl compound having two or more alkoxysilyl groups; and the like. Such a compound (compound capable of forming a covalent-bond cross-linking moiety) can be a compound capable of introducing both the hydrogen-bond cross-linkable moiety and the covalent-bond cross-linking moiety depending on the type of the substituent of the compound, the degree of the progress of a reaction in the case where the reaction is carried out by using the compound, or the like (for example, when a covalent bond cross-linking moiety is formed by using a compound having three or more hydroxy groups, two of the hydroxy groups react with functional groups of an elastomeric polymer having the a functional group in a side chain, and the remaining one hydroxy group is left as a hydroxy group in some cases depending on the degree of the progress of the reaction, and in this case, a moiety that can form a hydrogen-bond cross-linking can also be introduced). For this reason, each of the compounds (compounds capable of forming a covalent-bond cross-linking moiety) listed as examples herein can also be a "compound that forms both a hydrogen-bond cross-linkable moiety and a covalent-bond cross-linking moiety." From such a viewpoint, in the case of forming the side chain (b), the side chain (b) may be formed by selecting a compound as appropriate according to the target design, controlling the degree of the progress of the reaction as appropriate, or doing the like. Note that when such a compound (compound capable of forming a covalent-bond cross-linking moiety) to be reacted with the elastomeric polymer has a heterocycle, the compound makes it possible to simultaneously produce a hydrogen-bond cross-linkable moiety as well more efficiently, which means that the side chain having the covalent-bond cross-linking moiety can be efficiently formed as the side chain (c) described later. For this reason, specific examples of such compounds each having a heterocycle are described especially together with the side chain (c) as preferred compounds for producing the side chain (c). Note that because of its structure, the side chain (c) can also be regarded as a preferred mode of side chains such as the side chain (a) and the side chain (b).

Examples of the polyamine compound include alicyclic amines, aliphatic polyamines, aromatic polyamines, nitrogen-containing heterocyclic amines, and the like described below.

Specific examples of the alicyclic amines include 1-amino-3-aminomethyl-3,5,5-trimethylcyclohexane, bis-(4-aminocyclohexyl)methane, diaminocyclohexane, di-(aminomethyl)cyclohexane, and the like.

In addition, examples of the aliphatic polyamines include, but are not particularly limited to, methylenediamine, ethylenediamine, propylenediamine, 1,2-diaminopropane, 1,3-diaminopentane, hexamethylenediamine, diaminoheptane, diaminododecane, diethylenetriamine, diethylaminopropylamine, N-aminoethylpiperazine, triethylenetetramine, N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, N,N',N"-trimethylbis(hexamethylene)triamine, and the like.

Examples of the aromatic polyamines and the nitrogen-containing heterocyclic amines include, but are not particularly limited to, diaminotoluene, diaminoxylene, tetramethylxylylenediamine, tris(dimethylaminomethyl)phenol, m-phenylenediamine, diaminodiphenylmethane, diaminodiphenyl sulfone, 3-amino-1,2,4-triazole, and the like.

In addition, one or more hydrogen atoms in each of the polyamine compounds may be substituted by an alkyl group, an alkylene group, an aralkylene group, an oxy group, an acyl group, a halogen atom, or the like, or the skeleton of each polyamine compound may contain a heteroatom such as an oxygen atom or a sulfur atom.

In addition, one of the polyamine compounds may be used alone, or two or more thereof may be used in combination. When two or more thereof are used in combination, the mixing ratio can be adjusted to any ratio according to the application for which the thermoplastic elastomer (composition) of the present invention is used, or physical properties required for the thermoplastic elastomer (composition) of the present invention, and the like.

Among the polyamine compounds listed as examples above, hexamethylenediamine, N,N'-dimethyl-1,6-hexanediamine, diaminodiphenyl sulfone, and the like are preferable, because they provide high effects of improvement in compression set and mechanical strengths, especially, tensile strength.

The molecular weights or skeletons of the polyol compounds are not particularly limited, as long as the polyol compounds have two or more hydroxy groups. Examples of the polyol compounds include polyether polyols, polyester polyols, and other polyols shown below, mixed polyols thereof, and the like.

Specific examples of the polyether polyols include polyols each obtained by addition of at least one selected from ethylene oxide, propylene oxide, butylene oxide, and styrene oxide to at least one selected from polyols such as ethylene glycol, diethylene glycol, propylene glycol, dipropylene glycol, glycerin, 1,1,1-trimethylolpropane, 1,2,5-hexanetriol, 1,3-butanediol, 1,4-butanediol, 4,4'-dihydroxyphenylpropane, 4,4'-dihydroxyphenylmethane, and pentaerythritol; polyoxytetramethylene oxide; and the like. One of these polyether polyols may be used alone, or two or more thereof may be used in combination.

Specific examples of the polyester polyols include condensation polymers of one, two, or more low-molecular weight polyols such as ethylene glycol, propylene glycol, butanediol, pentanediol, hexanediol, cyclohexanedimethanol, glycerin, 1,1,1-trimethylolpropane, and others with one, two, or more low-molecular weight carboxylic acids or oligomeric acids such as glutaric acid, adipic acid, pimelic acid, suberic acid, sebacic acid, terephthalic acid, isophthalic acid, dimer acids, and others; ring-opening polymers of propiolactone, valerolactone, and the like; and the like. One of these polyester polyols may be used alone, or two or more thereof may be used in combination.

Specific examples of the other polyols include polymer polyols, polycarbonate polyols; polybutadiene polyols; hydrogenated polybutadiene polyols; acrylic polyols; low-molecular weight polyols such as ethylene glycol, diethylene glycol, propylene glycol, dipropylene glycol, butanediol, pentanediol, hexanediol, polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), trishydroxyethyl isocyanurate, polypropylene glycol stearylamine (for example, N,N-bis(2-methyl-2-hydroxyethyl)stearylamine), and the like. One of these polyols may be used alone, or two or more thereof may be used in combination

Examples of the polyisocyanate compounds include diisocyanate compounds including aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), and 1,5-naphthalene diisocyanate (NDI), aliphatic polyisocyanates such as hexamethylene diisocyanate (HDI), trimethylhexamethylene diisocyanate (TMHDI), lysine diisocyanate, and norbornane diisocyanatomethyl (NBDI), alicyclic polyisocyanates such as trans-cyclohexane-1,4-diisocyanate, isophorone diisocyanate (IPDI), H₆XDI (hydrogenated XDI), H₁₂MDI (hydrogenated MDI), and HgTDI (hydrogenated TDI), and the like; polyisocyanate compounds such as polymethylene polyphenylene polyisocyanate; carbodiimide-modified polyisocyanates of these isocyanate compounds; isocyanurate-modified polyisocyanate of these isocyanate compounds; urethane prepolymers obtained by reactions of these isocyanate compounds with the polyol compounds listed as examples above; and the like. One of these polyisocyanate compounds may be used alone, or two or more thereof may be used in combination.

The molecular weight, the skeleton, or the like of each of the polythiol compounds is not particularly limited, as long as the polythiol compounds have two or more thiol groups. Specific examples of the polythiol compounds include methanedithiol, 1,3-butanedithiol, 1,4-butanedithiol, 2,3-butanedithiol, 1,2-benzenedithiol, 1,3-benzenedithiol, 1,4-benzenedithiol, 1,10-decanedithiol, 1,2-ethanedithiol, 1,6-hexanedithiol, 1,9-nonanedithiol, 1,8-octanedithiol, 1,5-pentanedithiol, 1,2-propanedithiol, 1,3-propadithiol, toluene-3,4-dithiol, 3,6-dichloro-1,2-benzenedithiol, 1,5-naphthalenedithiol, 1,2-benzenedimethanethiol, 1,3-benzenedimethanethiol, 1,4-benzenedimethanethiol, 4,4'-thiobisbenzenethiol, 2,5-dimercapto-1,3,4-thiadiazole, 1,8-dimercapto-3,6-dioxaoctane, 1,5-dimercapto-3-thiapentane, 1,3,5-triazine-2,4,6-trithiol (trimercapto-triazine), 2-di-n-butylamino-4,6-dimercapto-s-triazine, trimethylolpropane tris (β-thiopropionate), trimethylolpropane tris(thioglycollate), polythiols (THIOKOL or thiol-modified polymers (resins, rubbers, and the like)), tris-[(3-mercaptopropionyloxy)-ethyl] isocyanurate, and the like. One of these polythiol compounds may be used alone, or two or more thereof may be used in combination.

In addition, the molecular weights, skeletons, and so on of the aforementioned polyepoxy compounds are not particularly limited, as long as the polyepoxy compounds have two or more epoxy groups. Specific examples of the polyepoxy compounds include bisphenol A diglycidyl ether (bisphenol A type epoxy resin), bisphenol F diglycidyl ether (bisphenol F type epoxy resin), 3,4-epoxycyclohexyl methyl-3'4'-epoxycyclohexane carboxylate, DCPD type epoxy resin, epoxy novolac resin, orthocresol novolac type epoxy resin, and one of these compounds may be used alone or two or more thereof may be used in combination.

Moreover, the molecular weights, skeletons, and so on of the aforementioned polycarboxy compounds are not particularly limited, as long as the polycarboxy compounds have two or more carboxy groups. Specific examples of the polycarboxy compounds include oxalic acid, malonic acid, succinic acid, glutaric acid, adipic acid, pimelic acid, suberic acid, azelaic acid, sebacic acid, phthalic acid, isophthalic acid, terephthalic acid, propanetricarboxylic acid, and benzenetricarboxylic acid, and one of these compounds may be used alone or two or more thereof may be used in combination.

Moreover, the molecular weights, skeletons, and so on of the aforementioned polyalkoxysilyl compounds are not particularly limited, as long as the polyalkoxysilyl compounds have two or more alkoxysilyl groups. Specific examples of the polyalkoxysilyl compounds include tris(trimethoxysilylpropyl) isocyanurate, bis(triethoxysilylpropyl)tetrasulfide, 1,6-bis(trimethoxysilyl)hexane, and bis[3-(trimethoxysilyl)propyl]amine, and one of these compounds may be used alone or two or more thereof may be used in combination.

Note that the elastomeric polymer (B) having the side chain (b) has, in a portion of the side chain (b), at least one cross-linkage at the covalent-bond cross-linking moiety, specifically, at least one cross-linkage by a covalent bond formed by a reaction of the functional group (maleic anhydride group, hydroxy group, carboxy group, amino group, alkoxysilyl group, or epoxy group) of the elastomeric polymer used in the production of the above-described reaction product, with the above-described compound (compound capable of forming a covalent-bond cross-linking moiety) in one molecule, and, in particular, has two or more cross-linkages preferably, 2 to 20 cross-linkages more preferably, and 2 to 10 cross-linkages further preferably.

In addition, it is preferable that the cross-linkage at the covalent-bond cross-linking moiety of the side chain (b) preferably contain a tertiary amino bond (-N=) or an ester bond (-COO-) , because the compression set and the mechanical strength (elongation at break and strength at break) of the obtained thermoplastic elastomer (composition) can be improved more easily. Note that, in this case, when an elastomer having a side chain containing a group capable of forming a hydrogen bond with the tertiary amino bond (-N=) or the ester bond (-COO-) is contained (for example, in the case where another elastomer having a side chain containing a hydroxy group or the like is present, or other cases), the covalent-bond cross-linking moiety can function as a side chain (c) described later. For example, it is considered that, in the case of an elastomeric polymer (B) has the side chain (a) as the side chain (a') (i.e., in the case where the elastomeric polymer (B) is an elastomeric polymer having both the side chains (a) and (b)), and where the cross-linkage at the covalent-bond cross-linking moiety contains the tertiary amino bond and/or the ester bond, these groups and groups in the side chain (a) (side chain containing a carbonyl-containing group and/or a nitrogen-containing heterocycle) form hydrogen bonds (interact with each other), making it possible to further improve the cross-linking density. Note that from the viewpoint of forming the side chain (b) having a structure containing a tertiary amino bond (-N=) or an ester bond (-COO-), the compound (compound capable of forming a covalent-bond cross-linking moiety) for use in a reaction with the elastomeric polymer used in the production of the above-described reaction product is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), or polypropylene glycol stearylamine (for example, N,N-bis(2-methyl-2-hydroxyethyl)stearylamine), among those listed above as examples.

Note that even when the compound (compound capable of forming a covalent-bond cross-linking moiety) for use in a reaction with the elastomeric polymer used in the production of the above-described reaction product is used, a hydrogen-bond cross-linkable moiety is also introduced in some cases, depending on the degree of the progress of the reaction, the type of substituent, the stoichiometric ratio between the raw materials used, and the like. Hence, preferred structures of the covalent-bond cross-linking moiety are described together with preferred structures of a covalent-bond cross-linking moiety in the side chain (c).

### <Side Chain (c): Side Chain Containing Both Hydrogen-bond cross-linkable moiety and Covalent-Bond Cross-Linking Moiety>

The side chain (c) contains both a hydrogen-bond cross-linkable moiety and a covalent-bond cross-linking moiety in a single side chain. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a). In addition, as the covalent-bond cross-linking moiety contained in the side chain (c), the same covalent-bond cross-linking moiety as that in the side chain (b) can be used (the same cross-linkages can be used as preferred cross-linkage thereof) .

The side chain (c) can be formed by selecting, as appropriate, an elastomeric polymer for use in the production of the above-described reaction product, and a compound capable of forming a hydrogen-bond cross-linkable moiety and a covalent-bond cross-linking moiety (compound that introduces both a hydrogen-bond cross-linkable moiety and a covalent-bond cross-linking moiety) from among the compounds to be reacted with the polymer, and then by causing a reaction using the selected polymer and compound.

The side chain (c) is preferably one formed by a reaction of an elastomeric polymer having a functional group in a side chain (the polymer for forming a main chain portion) with a compound that forms both a hydrogen-bond cross-linkable moiety and a covalent-bond cross-linking moiety upon a reaction with the functional group (a compound that introduces both a hydrogen-bond cross-linkable moiety and a covalent-bond cross-linking moiety). The compound that forms both a hydrogen-bond cross-linkable moiety and a covalent-bond cross-linking moiety (compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like.

Note that, as the heterocycle-containing polyols, polyamines, and polythiols, it is possible to use any one containing a heterocycle (particularly preferably a nitrogen-containing heterocycle) as appropriate among the same polyols, polyamines, and polythiols as those listed above. Specifically, examples of the heterocycle-containing polyols include, but are not particularly limited to, bis or tris(2-hydroxyethyl)isocyanurate, Kojic acid, dihydroxydithiane, and tris(hydroxyethyl)triazine. In addition, examples of the heterocycle-containing polyamines include, but are not particularly limited to, acetoguanamine, piperazine, bis(aminopropyl)piperazine, benzoguanamine, and melamine. Moreover, examples of the heterocycle-containing polythiols include dimercaptothiadiazole and tris-[(3-mercaptopropionyloxy)-ethyl]-isocyanurate. Accordingly, the side chain (c) is preferably one obtained by a reaction of an elastomeric polymer having a functional group in a side chain (the polymer for forming a main chain portion) with a heterocyclic-containing polyol, polyamine, or polythiol, or the like.

In addition, the elastomeric polymer (B) having the side chain (c) has at least one cross-linkage, and in particular, preferably two or more cross-linkages, more preferably 2 to 20 cross-linkages, and further preferably 2 to 10 cross-linkages at the covalent-bond cross-linking moiety in a portion of the side chain (c) in one molecule. Additionally, it is preferable that the cross-linkage at the covalent-bond cross-linking moiety of the side chain (c) contain a tertiary amino bond (-N=) or an ester bond (-COO-), because the compression set and the mechanical strength (elongation at break and strength at break) of the obtained thermoplastic elastomer (composition) are further improved.

### (Regarding Structures Preferred as Covalent-Bond Cross-Linking Moieties in Side Chains (b) and (c))

Regarding the side chains (b) and/or (c), suppose a case where the cross-linkage at the covalent-bond cross-linking moiety contains a tertiary amino bond (-N=) or an ester bond (-COO-), and the binding site of such a bond also functions as a hydrogen-bond cross-linkable moiety. Such a case is preferable because the compression set and the mechanical strengths (elongation at break and strength at break) of the obtained thermoplastic elastomer (composition) are improved to higher levels. When a tertiary amino bond (-N=) or an ester bond (-COO-) in a side chain having a covalent-bond cross-linking moiety forms a hydrogen bond with another side chain as described above, the covalent-bond cross-linking moiety containing a tertiary amino bond (-N=) or an ester bond (-COO-) also comprises a hydrogen-bond cross-linkable moiety, and can function as the side chain (c).

Suppose, for example, a case where the elastomeric polymer (B) has the side chain (a) as the side chain (a'), and has a covalent-bond cross-linking moiety containing the tertiary amino bond and/or the ester bond. In such a case, when the tertiary amino bond and/or the ester bond forms a hydrogen bond (interacts) with a group in the side chain (a), the cross-linking density can be further improved, presumably. Here, preferred examples of the compound that can form a covalent-bond cross-linking moiety containing the tertiary amino bond and/or the ester bond upon a reaction with a functional group of the polymer constituting a main chain (compound capable of forming both a hydrogen-bond cross-linkable moiety and a covalent-bond cross-linking moiety) include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine) .

The above-described cross-linkage at the covalent-bond cross-linking moiety in the side chain (b) and/or the side chain (c) is preferably one containing at least one structure represented by any one of the following general formulae (4) to (6), and is more preferably one in which G in the formulae contains a tertiary amino bond or an ester bond (note that when a structure shown below contains a hydrogen-bond cross-linkable moiety, the side chain having the structure is used as a side chain (c)).

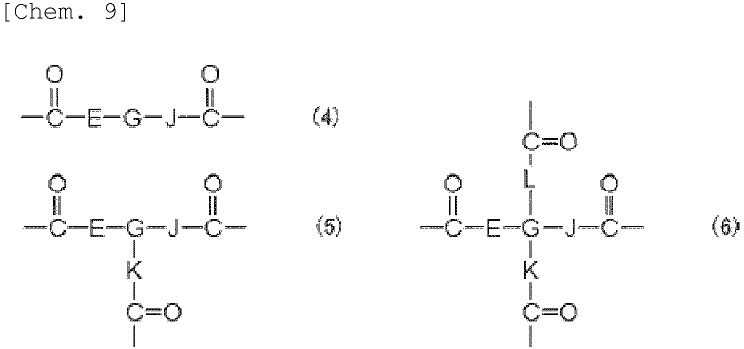

In the above-described general formulae (4) to (6), E, J, K, and L are each independently a single bond; an oxygen atom, an amino group NR' (where R' is a hydrogen atom or an alkyl group having 1 to 10 carbon atoms), or a sulfur atom; or an organic group optionally containing any of the atoms or groups, and G is a linear-chain, branched-chain, or cyclic hydrocarbon group having 1 to 20 carbon atoms and optionally containing an oxygen atom, a sulfur atom, or a nitrogen atom.

Here, the substituents E, J, K, and L are each independently basically the same as the substituent B in the above-described general formula (1).

In addition, examples of the substituent G include alkylene groups such as a methylene group, an ethylene group, a 1,3-propylene group, a 1,4-butylene group, a 1,5-pentylene group, a 1,6-hexylene group, a 1,7-heptylene group, a 1,8-octylene group, a 1,9-nonylene group, a 1,10-decylene group, a 1,11-undecylene group, and a 1,12-dodecylene group; N,N-diethyldodecylamine-2,2'-diyl, N,N-dipropyldodecylamine-2,2'-diyl, N,N-diethyloctylamine-2,2'-diyl, N,N-dipropyloctylamine-2,2'-diyl, N,N-diethylstearylamine-2,2'-diyl, and N,N-dipropylstearylamine-2,2'-diyl; a vinylene group; divalent alicyclic hydrocarbon groups such as a 1,4-cyclohexlene group; divalent aromatic hydrocarbon groups such as a 1,4-phenylene group, a 1,2-phenylene group, a 1,3-phenylene group, and a 1,3-phenylenebis(methylene) group; trivalent hydrocarbon groups such as propane-1,2,3-triyl, butane-1,3,4-triyl, trimethylamine-1,1',1"-triyl, and triethylamine-2,2',2"-triyl; trivalent cyclic hydrocarbons containing an oxygen atom, a sulfur atom, or a nitrogen atom such as an isocyanurate group and a triazine group; tetravalent hydrocarbon groups represented by the following formulae (12) and (13); substituents formed by combining any ones of them; and the like. In addition, the substituents G in these formulae each preferably have a structure of an isocyanurate group (isocyanurate ring) from the viewpoints of achieving high heat resistance and high strength thanks to hydrogen bonds. More specifically, the substituents G in these formulas are preferably groups represented by the following general formula (111) and groups represented by the following general formula (112) from the viewpoints of achieving high heat resistance and high strength thanks to hydrogen bonds.

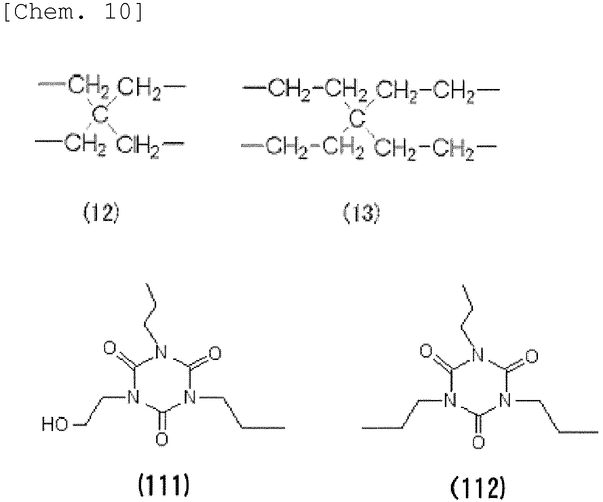

Moreover, the above-described cross-linkage at the covalent-bond cross-linking moiety of the side chain (c) preferably contains at least one structure represented by any one of the following formulae (7) to (9), which is bonded to the main chain of the above-described elastomeric polymer at the α position or the β position, and more preferably contains at least one structure represented by any one of the following formulae (7) to (9), in which G contains a tertiary amino group (the structures shown in the formulae (7) to (9) contain hydroxy groups and carbonyl groups, and can be considered as structures containing both a hydrogen-bond cross-linkable moiety and a covalent-bond cross-linking moiety, and a side chain having such a structure can function as the side chain (c)).

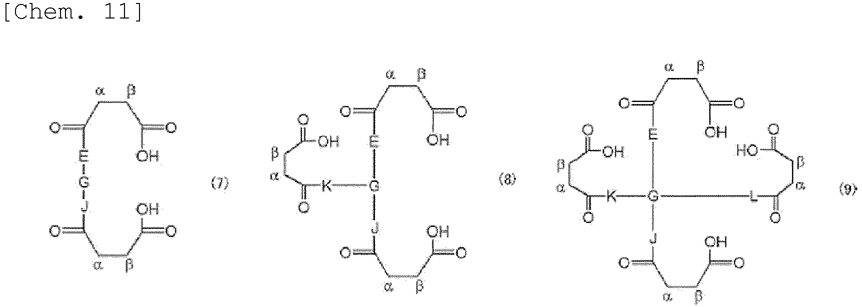

In the formulae (7) to (9), the substituents E, J, K, and L are each independently basically the same as the substituents E, J, K, and L in the above-described formulae (4) to (6), and the substituent G is basically the same as the substituent G in the above-described formula (4) to (6).

In addition, specific preferred examples of the structure represented by any one of the formulae (7) to (9) include structures represented by the following formula (14) to (25): 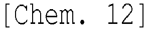 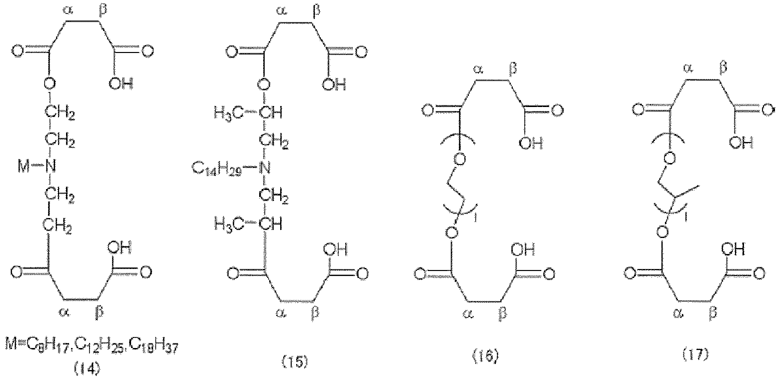 (In the formulae, 1 represents an integer of 1 or greater.) 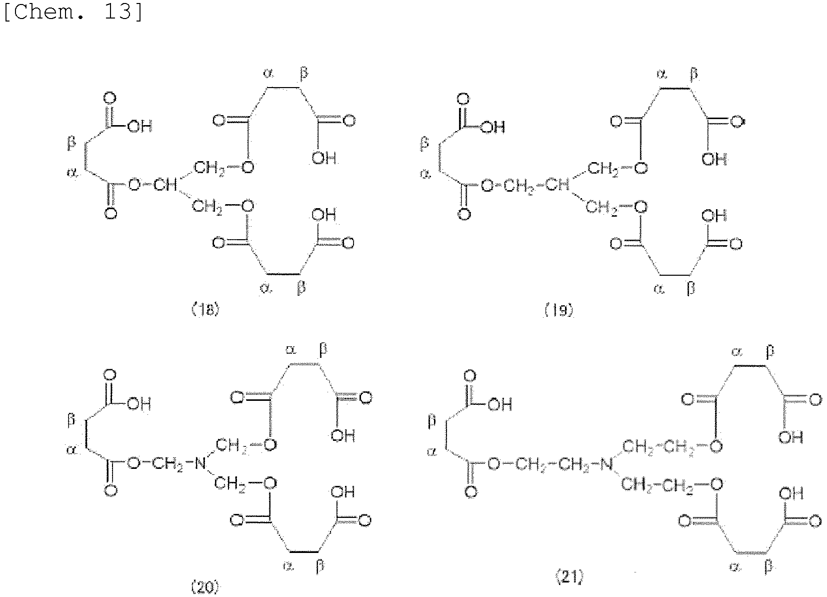 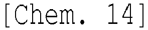 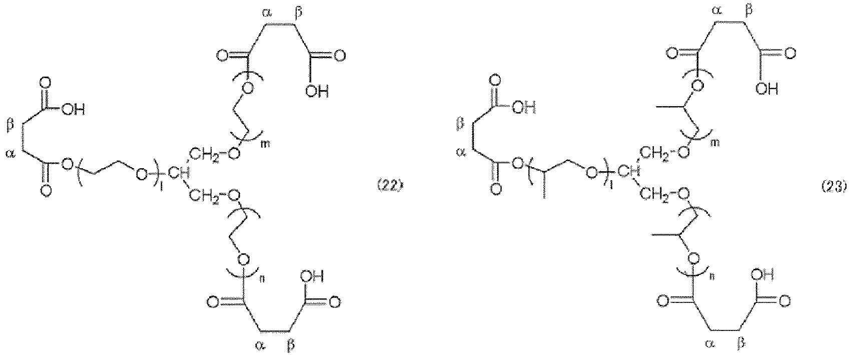 (In the formulae, 1, m, and n each independently represent an integer of 1 or greater.)

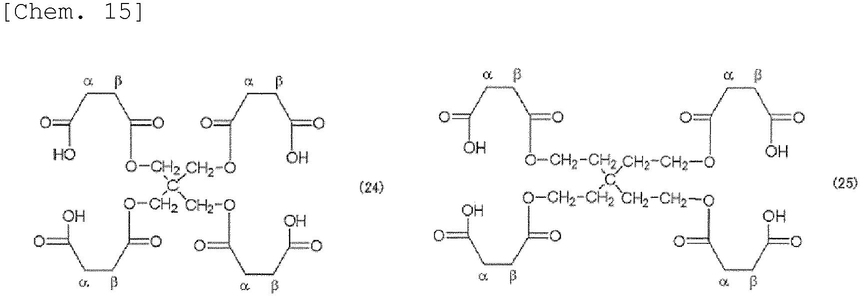

In addition, a cross-linkage at the above-described covalent-bond cross-linking moiety in each of the side chains (b) and (c) may be formed by a reaction of a maleic anhydride group with a hydroxy group or an amino group. For example, in the case of the reaction product (I), the cross-linkage may be formed in such a way that the maleic anhydride group in the elastomeric polymer and a compound containing a hydroxy group or an amino group react with each other to form a covalent-bond cross-linking moiety and thereby cross-link polymer molecules.

In addition, in these side chains (b) and (c), the cross-linkage at the covalent-bond cross-linking moiety is more preferably formed by at least one bond selected from the group consisting of amide, ester, urethane, thiourethane, urea bond, ether, and thioether.

Hereinabove, the preferred embodiments of the side chain (a'), the side chain (a), the side chain (b), and the side chain (c) are described. The groups (structures) and the like of the side chains in these polymers can be identified by ordinarily used analytic techniques such as NMR and IR spectrometry.

In addition, the elastomeric polymer (A) is an elastomeric polymer having the side chain (a) and having a glass-transition point of 25°C or below, whereas the elastomeric polymer (B) is an elastomeric polymer containing a hydrogen-bond cross-linkable moiety and a covalent-bond cross-linking moiety in a side chain and having a glass-transition point of 25°C or below (a polymer having both the side chain (a') and the side chain (b) as side chains, or a polymer containing at least one side chain (c) in a side chain, or the like). As the elastomer component, one of the elastomeric polymers (A) and (B) may be used alone, or a mixture of two or more thereof may be used.

Note that the elastomeric polymer (B) may be either a polymer having both a side chain (a') and a side chain (b), or a polymer having a side chain (c). From the viewpoint that a stronger hydrogen bond is formed, the hydrogen-bond cross-linkable moiety contained in the side chain of the elastomeric polymer (B) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle).

In addition, the at least one elastomer component selected from the group consisting of the elastomeric polymers (A) and (B) is at least one reaction product selected from the group consisting of:
a reaction product (I) of a maleic anhydride-modified elastomeric polymer (E1) with at least one compound (M1) selected from hydrocarbon compounds each having two or more substituents of at least one type selected from hydroxy groups, thiol groups, and amino groups;
a reaction product (II) of a hydroxy group-containing elastomeric polymer (E2) with a compound (M2) having two or more substituents of at least one type selected from carboxy groups, alkoxysilyl groups, and isocyanate groups;
a reaction product (III) of a carboxy group-containing elastomeric polymer (E3) with a compound (M3) having two or more substituents of at least one type selected from hydroxy groups, thiol groups, and amino groups;
a reaction product (IV) of an amino group-containing elastomeric polymer (E4) with a compound (M4) having two or more substituents of at least one type selected from carboxy groups, epoxy groups, alkoxysilyl groups, and isocyanate groups;
a reaction product (V) of an alkoxysilyl group-containing elastomeric polymer (E5) with a compound (M5) having two or more substituents of at least one type selected from hydroxy groups, carboxy groups, and amino groups; and
a reaction product (VI) of an epoxy group-containing elastomeric polymer (E6) with a compound (M6) having two or more substituents of at least one type selected from thiol groups and amino groups.

Such a reaction product used in the elastomer component can be produced with the reaction speed at cross-linking portions sufficiently controlled during the production. For this reason, the present inventors speculate that the cross-linking points in the obtained reaction product are more uniformly formed than those in a conventional other elastomer component. Therefore, use of this reaction product enables the tear strength to be enhanced to a higher level.

Each of these elastomeric polymers (E1) to (E6) may be produced by a commonly used method, for example, by a method of graft polymerization of a compound (for example, a maleic anhydride or the like) that can introduce a functional group depending on a target design into the polymer that can form the main chain portion of the elastomeric component under commonly employed conditions, for example, by stirring under heating or the like. In addition, it is also possible to use commercially available products as the elastomeric polymers (E1) to (E6).

Moreover, the glass-transition points of these elastomeric polymers (E1) to (E6) are preferably 25°C or below as is the case with the foregoing elastomer components. If the glass-transition point of the elastomeric polymer is within this range, the thermoplastic elastomer composition obtained in the present invention can exhibit rubber-like elasticity at room temperature. Note that a preferable range of the weight average molecular weight of the main chain portion of the elastomeric polymers (E1) to (E6) is the same as the aforementioned preferable range of the weight average molecular weight of the main chain portion of the elastomeric polymers (A) and (B).

Examples of the maleic anhydride-modified elastomeric polymer (E1) include: maleic anhydride-modified isoprene rubbers such as LIR-403 (manufactured by KURARAY CO., LTD.) and LIR-410A (prototype provided by KURARAY CO., LTD.); maleic anhydride-modified ethylene-propylene rubbers such as Nucrel (manufactured by DUPONT-MITSUI POLYCHEMICALS CO., LTD), Yukaron (manufactured by Mitsubishi Chemical Corporation), TAFMER M (for example, MP0610 (manufactured by Mitsui Chemicals, Inc.), and MP0620 (manufactured by Mitsui Chemicals, Inc.)); maleic anhydride-modified ethylene-butene rubbers such as TAFMER M (for example, MA8510, MH7010, MH7020 (manufactured by Mitsui Chemicals, Inc.), MH5010, MH5020 (manufactured by Mitsui Chemicals, Inc.), and MH5040 (manufactured by Mitsui Chemicals, Inc.); maleic anhydride-modified polyethylenes such as Adtex series (maleic anhydride-modified EVA, maleic anhydride-modified EMA (manufactured by Japan Polypropylene Corporation)), HPR series (maleic anhydride-modified EEA, maleic anhydride-modified EVA (manufactured by DuPont-Mitsui Polyolefin)), Bondfast series (maleic anhydride-modified EMA (manufactured by Sumitomo Chemical Company, Limited)), Dumilan series (maleic anhydride-modified EVOH (manufactured by Takeda Pharmaceutical Company Limited)), Bondine (ethylene-acrylic acid ester-maleic anhydride ternary copolymer (manufactured by ATOFINA)), Tuftec (maleic anhydride-modified SEBS, M1943 (manufactured by Asahi Kasei Corporation)), Kraton (maleic anhydride-modified SEBS, FG1901 and FG1924 (manufactured by Kraton Polymers)), Tufprene (maleic anhydride-modified SBS, 912 (manufactured by Asahi Kasei Corporation)), Septon (maleic anhydride-modified SEPS (manufactured by KURARAY CO., LTD.)), Rexpearl (maleic anhydride-modified EVA, ET-182G, 224M, and 234M (manufactured by Japan Polypropylene Corporation)), and Auroren (maleic anhydride-modified EVA, 200S and 250S (manufactured by NIPPON PAPER Chemicals CO., LTD.)); maleic anhydride-modified polypropylenes such as ADMER (for example, QB550 and LF128 (manufactured by Mitsui Chemicals, Inc.)); and the like.

In addition, from the viewpoints of a high molecular weight and high strength, the maleic anhydride-modified elastomeric polymer (E1) is more preferably a maleic anhydride-modified ethylene-propylene rubber or a maleic anhydride-modified ethylene-butene rubber.

Meanwhile, examples of the hydroxy group-containing elastomeric polymer (E2) include hydroxy group-containing BR, hydroxy group-containing SBR, hydroxy group-containing IR, hydroxy group-containing natural rubbers, polyvinyl alcohols, ethylene-vinyl alcohol copolymers, and the like.

Among these hydroxy group-containing elastomeric polymers (E2), an elastomeric polymer having hydroxy groups in both terminals is preferable from the viewpoints that the polymer can be easily obtained industrially and has excellent physical properties. Among them, a hydroxy group-containing BR, hydroxy group-containing IR, or ethylene-vinyl alcohol copolymer is more preferable, and a hydroxy group-containing BR is even more preferable.

Examples of the carboxy group-containing elastomeric polymers (E3) include carboxy group-containing BR, carboxy group-containing SBR, carboxy group-containing IR, carboxy group-containing natural rubbers, polyacrylic acids, ethylene-acrylic acid copolymers, poly(meth)acrylates, ethylene-(meth)acrylate copolymers, and the like.

As such a carboxy group-containing elastomeric polymer (E3), carboxy group-containing IR, an ethylene-acrylic acid copolymer, or an ethylene-(meth)acrylate copolymer is preferable, and carboxy group-containing IR is more preferable from the viewpoints that the polymer can be easily obtained industrially and has excellent physical properties.

Further, examples of the amino group-containing elastomeric polymers (E4) include amino group-containing BR, amino group-containing SBR, amino group-containing IR, amino group-containing natural rubbers, amino group-containing polyethylene imines, and the like.

As such an amino group-containing elastomeric polymer (E4), an amino group-containing polyethylene imine is more preferable from the viewpoints that the polymer can be easily obtained industrially and has excellent physical properties.

As for the amino group-containing elastomeric polymer (E4), the amine value is preferably 1 to 50 mmol/g, more preferably 5 to 40 mmol/g, and further preferably 10 to 30 mmol/g. If the amine value is less than the lower limit, it is necessary to add a large amount of the polymer, and the physical properties tend to deteriorate due to a decrease in the cross-linking density. Meanwhile, if the amine value exceeds the upper limit, the cross-linking density tends to be too high even with addition of a small amount of the polymer. As such an amine value, a value measured by a potentiometric titration method can be employed.

Examples of the alkoxysilyl group-containing elastomeric polymer (E5) include alkoxysilyl group-containing BR, alkoxysilyl group-containing SBR, alkoxysilyl group-containing IR, alkoxysilyl group-containing natural rubbers, alkoxysilyl group-containing polyethylene, alkoxysilyl group-containing polypropylene, and the like.

As such an alkoxysilyl group-containing elastomeric polymer (E5), an alkoxysilyl group-containing polyethylene is more preferable from the viewpoints that the polymer can be easily obtained industrially and has excellent physical properties.

Examples of the epoxy group-containing elastomeric polymer (E6) include epoxy group-containing BR, epoxy group-containing SBR, epoxy group-containing IR, epoxy group-containing natural rubbers, and the like.

As such an epoxy group-containing elastomeric polymer (E6), an epoxy group-containing SBR is more preferable from the viewpoints that the polymer can be easily obtained industrially and has excellent physical properties.

As the hydrocarbon compound used as the compound (M1) and having two or more substituents of at least one type selected from hydroxyl groups, thiol groups, and amino groups, there is a compound having a hydrocarbon compound as a main skeleton among the foregoing polyol compounds, polythiol compounds, and polyamine compounds. The hydrocarbon group in the main skeleton is preferably an aliphatic hydrocarbon compound (more preferably an aliphatic hydrocarbon compound having 1 to 20 carbon atoms) . Further, as the hydrocarbon compound used as the compound (M1) and having two or more substituents of at least one type selected from hydroxyl groups, thiol groups, and amino groups, pentaerythritol, ethanedithiol, and ethanediamine are preferable and pentaerythritol is more preferable from the viewpoints that the polymer can be easily obtained industrially and has excellent physical properties with a high cross-linking density.

As the compound used as the compound (M2) and having two or more substituents of at least one type selected from carboxy groups, alkoxysilyl groups, and isocyanate groups, the aforementioned polycarboxy compounds, polyalkoxysilyl compounds, and polyisocyanate compounds can be preferably used. Among them, 2,6-pyridinedicarboxylic acid, 2,4-pyridine dicarboxylic acid, or xylylene diisocyanate (XDI) is more preferable from the viewpoints that the polymer can be easily obtained industrially and has excellent physical properties.

Further, as the compound used as the compound (M3) and having two or more substituents of at least one type selected from hydroxyl groups, thiol groups, and amino groups, the aforementioned polyol compounds, polythiol compounds, and polyamine compounds are preferably used. Among them, tris(hydroxyethyl) isocyanurate, 2,4-diamino-6-phenyl-1,3,5-triazine, or tris[(3-mercaptopropionyloxy)-ethyl] isocyanurate is more preferable from the viewpoints that the compound can be easily obtained industrially and has excellent physical properties.

As the compound used as the compound (M4) and having two or more substituents of at least one type selected from carboxy groups, epoxy groups, alkoxysilyl groups, and isocyanate groups, the above-mentioned polycarboxy compounds, polyepoxy compounds, polyalkoxysilyl compounds, and polyisocyanate compounds can be preferably used. Among them, 2,6-pyridinedicarboxylic acid, 2,4-pyridinedicarboxylic acid, or tris(2,3-epoxypropyl) isocyanurate is more preferable from the viewpoints that the compound can be easily obtained industrially and has excellent physical properties.

As the compound used as the compound (M5) and having two or more substituents of at least one type selected from hydroxy groups, carboxy groups, and amino groups, the above-mentioned polyol compounds and polycarboxy compounds can be preferably used. Among them, tris(hydroxyethyl) isocyanurate, 2,6-pyridinedicarboxylic acid, and 2,4-pyridinedicarboxylic acid are more preferable from the viewpoints that the compound can be easily obtained industrially and has excellent physical properties.

Further, as the compound used as the compound (M6) and having two or more substituents of at least one type selected from thiol groups and amino groups, the above-mentioned polythiol compounds and polyamine compounds can be preferably used. Among them, tris[(3-mercaptopropionyloxy)-ethyl] isocyanurate, or 2,4-diamino-6-phenyl-1,3,5-triazine is more preferable.

Here, the main chains of the aforementioned elastomeric polymers (E1) to (E6) are the same as those explained as the main chains of the aforementioned elastomeric polymers (A) and (B) (the preferable examples are also the same) for the following reason. In the case of any of the elastomeric polymers (E1) to (E6) for use to produce the reaction products, a substituent contained in any of the compounds (M1) to (M6) for use to produce the reaction products reacts with a portion of a functional group (a maleic anhydride group, a hydroxy group, a carboxy group, an amino group, an alkoxysilyl group, or an epoxy group) in the polymer to form a side chain having a structure derived from the main skeleton of the compound (M1) to (M6), but the main chain of the polymer basically does not change between before and after the reaction. For this reason, the main chain of each of the reaction products (I) to (VI) (the main chain of the elastomeric polymer (A) or (B)) is one derived from the main chain of the elastomeric polymer (E1) to (E6).

Moreover, among these reaction products (I) to (VI), reaction products in Examples (reaction products of elastomeric polymers (E) and compounds (M) listed in Table 1 concerning Examples described below) are preferable from the viewpoints that they can be industrially easily obtained, and they have superior physical properties.

A method for producing the reaction products (I) to (VI) each for use as the elastomer component is not particularly limited. It is possible to use a method for obtaining the reaction product (I) to (VI) as appropriate by selecting an elastomeric polymer (E1) to (E6) and a compound (M1) to (M6) to be reacted with the elastomeric polymer as appropriate, and causing a reaction between them as appropriate to form the side chains according to the target design. The conditions for the reaction (temperature condition, atmosphere condition, and the like) may be set depending on types of the functional group and the main chain of the elastomeric polymer (E1) to (E6) as a raw material for obtaining the reaction product, and further depending on the type of the compound (M1) to (M6) to be reacted with the elastomeric polymer.

Moreover, in the case of preparing the reaction product (I) to (VI), the preparation can be made, for example, in such a way that a polymer selected as appropriate from the elastomeric polymers (E1) to (E6) according to the target design is added to a pressure kneader, and a compound selected from the compounds (M1) to (M6) to be reacted with the polymer is added thereto during stirring to cause a reaction. In this process, a temperature that can make the reaction proceed can be set as appropriate. Note that the preparation for any of the reaction products (I) to (VI) may employ a method for forming a composition simultaneously with preparation for an elastomer component in such a way that a polymer selected as appropriate from the elastomeric polymers (E1) to (E6) for use to prepare the reaction product (I) to (VI) is mixed with an organically modified clay before the polymer is mixed with a compound selected from the compounds (M1) to (M6), and thereafter the compound is added to cause a reaction (a method in which an organically modified clay is added first). Note that, for the preparation of the composition, it is preferable to employ the foregoing method in which the organically modified clay is added first because the dispersibility of the organically modified clay is improved to lead to a higher level of heat resistance.

### (Organically Modified Clay)

The organically modified clay according to the present invention is not particularly limited, but, for example, any clay organically modified by an organically modifying agent may be used favorably. As such an "organically modified clay", a preferable clay is in a state where an organically modifying agent such as a quaternary ammonium salt is introduced between layers (for example, the organically modifying agent is inserted between the layers). Here, a method for introducing an organically modifying agent between layers of a clay is not particularly limited. For example, it is possible to employ, as appropriate, a method using the cation exchangeability of a clay such as montmorillonite, which is a layered mineral, to introduce an organically modifying agent between layers of the clay. In this way, an organically modified clay can be obtained easily by using a publicly known method, as appropriate, in which a clay being a layered mineral is treated with an organically modifying agent such that the organically modifying agent is introduced between layers of the clay. Note that use of such an organically modified clay makes it possible to more easily delaminate the layers of the clay and accordingly more efficiently disperse a single-layered clay into an organic solvent or a resin.

A clay to be organically modified by an organically modifying agent (clay before organic modification) is not particularly limited, but any publicly known clay can be used as appropriate. Examples of the clay include montmorillonite, saponite, hectorite, beidellite, stevensite, nontronite, vermiculite, halloysite, mica, fluorinated mica, kaolinite, pyrophyllite, smectite, sericite, illite, glauconite, chlorite, talc, zeolite, hydrotalcite, and the like. The clay may be a natural product or a synthetic product.

In addition, an organically modifying agent usable to organically modify such clay is not particularly limited, but any known organically modifying agent capable of organically modifying a clay can be used as appropriate. For example, it is possible to use as appropriate a publicly known organically modifying agent such as hexylammonium ions, octylammonium ions, 2-ethylhexylammonium ions, dodecylammonium ions, laurylammonium ions, octadecylammonium ions, dioctyldimethylammonium ions, trioctylammonium ions, dioctadecyldimethylammonium ions, trioctylammonium ions, dioctadecyldimethylammonium ions, trioctadecylammonium ions, dimethylstearylbenzylammonium ions, oleylbis(2-hydroxylethyl)methylammonium ions, or trimethylstearylbenzylammonium ions.

From the viewpoint that higher levels of tensile strength and tear strength can be exerted, the organically modifying agent is preferably at least one organically modifying agent selected from ammonium salts represented by the following general formula (I) :

R₂N⁺(CH₃)₂·X⁻ (I)

(in the formula (I), Rs each independently represent at least one selected from alkyl groups and aralkyl groups and X⁻ represents a counter anion).

As an alkyl group which can be selected as R in the general formula (I), a preferably alkyl group has 1 to 40 (more preferably 1 to 30, and further preferably 1 to 20) carbon atoms. If the number of carbon atoms exceeds the upper limit, the molecules of the organically modifying agent (ammonium salt) are too large to get into between layers of a clay, and therefore it tends to be difficult to organically modify the clay. Examples of an alkyl group which can be selected as R in the general formula (I) include methyl, ethyl, propyl, hexyl, oleyl, octyl, decyl, dodecyl, octadecyl group (stearyl group), and the like. Among them, a methyl or octadecyl group (stearyl group) is preferable, and an octadecyl group (stearyl group) is more preferable from the viewpoint that higher levels of tensile strength and tear strength can be exerted.

Meanwhile, an aralkyl group which can be selected as R in the general formula (I), a preferable aralkyl group has 6 to 30 (more preferably 6 to 25, and further preferably 6 to 20) carbon atoms. If the number of carbon atoms exceeds the upper limit, the molecules of the organically modifying agent (ammonium salt) are too large to get into between layers of a clay, and therefore it tends to be difficult to organically modify the clay. Examples of such an aralkyl group include a benzyl group, a phenethyl group, a naphthylmethyl group, a fluorenylmethyl group, and the like. Among them, a benzyl group is more preferable from the viewpoint that higher levels of tensile strength and tear strength can be exerted.

Then, X⁻ represents a counter anion. Such a counter anion is not particularly limited. Examples thereof include halide ions such as chloride ion, bromide ion, and iodide ion, and borate ions such as borate anion, tetrafluoroborate anion, and hexafluoroborate anion.

Such an organically modifying agent is preferably one represented by the above general formula (I) and containing both an ammonium salt (A) in which the two Rs in the formula (I) are alkyl groups and an ammonium salt (B) in which one of the two Rs in the general formula (I) is an alkyl group whereas the other R is an aralkyl group from the viewpoint that higher levels of tensile strength and tear strength can be exerted. Here, an example of the ammonium salt (A) is a dimethyldioctadecylammonium salt or the like, and an example of the ammonium salt (B) is a dimethylstearylbenzylammonium salt or the like.

As the organically modified clay, a clay organically modified by a quaternary ammonium salt can be used preferably from the viewpoint that higher levels of tensile strength and tear strength can be exerted. Examples of preferably usable quaternary ammonium salts for a clay include, but are not particularly limited to, trimethylstearylammonium salts, salts of oleylbis(2-hydroxylethyl), methylammonium salts, dimethylstearylbenzylammonium salts, dimethyloctadecylammonium salts, and mixtures of two or more thereof. Note that as the quaternary ammonium salt for an organically modified clay, a dimethylstearylbenzylammonium salt, a dimethyloctadecylammonium salt, or a mixture thereof can be used more preferably, and a mixture of a dimethylstearylbenzylammonium salt and a dimethyloctadecylammonium salt can be used further preferably from the viewpoint of improvement in tensile strength and heat resistance.

In addition, as the organically modified clay, a commercially available one can be used, and it is possible to use, for example, those manufactured by KUNIMINE INDUSTRIES CO. , LTD. under the trade names of "Kunfil-D36," "Kunfil-B1," "Kunfil-HY, " and the like, as well as those manufactured by HOJUN Co., Ltd. under the trade names of "S-BEN series (C, E, W, WX, N-400, NX, NX80, NZ, NZ70, NE, NEZ, NO12S, and NO12," and "ORGANITE series (D, T), and the like as needed. Among the commercially available organically modified clays, those manufactured by KUNIMINE INDUSTRIES CO., LTD. under the trade name of "Kunfil-D36" and manufactured by HOJUN Co., Ltd. under the trade name of "S-BEN series WX" can be used preferably. Note that these commercially available organically modified clays are each in a state where an organically modifying agent is introduced between layers of the clay.

### (Composition)

The thermoplastic elastomer composition of the present invention comprises the elastomer component and the clay.

Although it is not exactly clear why the thermoplastic elastomer composition of the present invention can exert a sufficiently high level of tear strength, the present inventors speculate as follows. Specifically, first of all, in the present invention, the elastomer component comprises an elastomeric polymer containing a side chain having at least a hydrogen-bond cross-linkable moiety (a polymer containing at least one of: the side chain (a); the side chain (a') and the side chain (b); and the side chain (c) in a side chain (s)). For this reason, when such an elastomeric polymer is used in combination with an organically modified clay, interactions between the organically modified clay and hydrogen-bond cross-linkable moieties occur (such as the formation of new hydrogen bonds), so that the elastomer component is plane cross-linked by utilizing the surfaces of the clay. Then, the present inventors speculate that the formation of the plane cross-linking makes it possible to suppress the stress concentration at each cross-linking point, so that the resultant elastomer component can express very high levels of tensile stress and tear strength. Note that, in the present invention, the hydrogen bonds formed by the hydrogen-bond cross-linkable moieties in the side chains also allow the composition to retain flowability (formability). Furthermore, depending on the constitution, the composition can be also made to additionally express higher mechanical strength, sufficient self-repairing property, and so on. Still further, in the case where the composition in the present invention contains an elastomer component containing a covalent-bond cross-linking moiety in a side chain (contains the elastomeric polymer (B), for example), the flowability of rubber molecule chains can be controlled by the side chains containing the covalent-bond cross-linking moieties. For this reason, the present inventors speculate that, in the case of using an elastomer component containing a covalent-bond cross-linking moiety in a side chain (the elastomeric polymer (B), for example), the thermoplastic elastomer composition can also express a higher level of resistance to compression set in addition. Moreover, in the case where the hydrogen-bond cross-linkable moiety and the covalent-bond cross-linking moiety are present in the elastomer component (such as cases where: the elastomeric polymer (B) is contained; a mixture of the elastomeric polymer (B) with another elastomeric polymer is contained; a mixture of the elastomeric polymer (A) with the elastomeric polymer (B) is contained; and a mixture of the elastomeric polymer (A) with an elastomeric polymer containing the side chain (b) other than the elastomeric polymer (B) is used), the presence of the hydrogen-bond cross-linkable moiety and the covalent-bond cross-linking moiety enables the obtained thermoplastic elastomer composition to express both inhibition of flowing (improvement in mechanical strength) attributed to covalent bonds during use and flowability (formability) attributed to cleavage of hydrogen bonds during heating. Thus, the present inventors speculate that properties required depending on an application can be exerted, as appropriate, by changing the constitution as appropriate according to the type of a side chain.

Note that, the above-described elastomeric polymer having a side chain (b) other than the elastomeric polymer (B) can be obtained by a method for producing the elastomeric polymer having the side chain (b) by: using an elastomeric polymer having a functional group (for example, a cyclic acid anhydride group) in a side chain; and causing the elastomeric polymer to react with a compound capable of forming a covalent-bond cross-linking moiety (compound that forms a covalent bond) upon a reaction with the functional group.

The thermoplastic elastomer composition of the present invention comprises the elastomer component and the organically modified clay, and the amount of the organically modified clay contained is 20 parts by mass or less relative to 100 parts by mass of the elastomer component. If the amount of the organically clay contained exceeds the upper limit, the tear strength decreases. The amount of the clay contained in the thermoplastic elastomer composition is more preferably 0.1 to 10 parts by mass, further preferably 0.5 to 5 parts by mass, and particularly preferably 1 to 3 parts by mass relative to 100 parts by mass of the elastomer component. If the amount of the clay contained is less than the lower limit, the amount of the organically modified clay contained is so small that sufficient effects tend not to be obtained. Meanwhile, if the amount of the clay contained exceeds the upper limit, the cross-linking is so strong that the tear strength tends to decrease rather, which makes it difficult to use the thermoplastic elastomer composition for various applications (which deteriorates the practicability).

The thermoplastic elastomer composition of the present invention comprises the elastomer component and the organically modified clay.

As for the elastomer component, the present inventors speculate that, in the case where the thermoplastic elastomer composition contains an elastomer component containing a covalent-bond cross-linking moiety in a side chain (contains the elastomeric polymer (B), for example), the thermoplastic elastomer composition can also express a higher level of resistance to compression set owing to the side chains containing the covalent-bond cross-linking moieties. In addition, in the case where the hydrogen-bond cross-linkable moiety and the covalent-bond cross-linking moiety are present in the elastomer component (such as cases where: the elastomeric polymer (B) is contained; a mixture of the elastomeric polymer (B) with another elastomeric polymer is contained; a mixture of the elastomeric polymer (A) with the elastomeric polymer (B) is contained; and a mixture of the elastomeric polymer (A) with an elastomeric polymer containing the side chain (b) other than the elastomeric polymer (B) is used), the presence of the hydrogen-bond cross-linkable moiety and the covalent-bond cross-linking moiety also enables the obtained thermoplastic elastomer composition to express both a higher level of mechanical strength attributed to the covalent bonds during use and a higher level of flowability (formability) attributed to cleavage of hydrogen bonds during heating. Thus, the present inventors speculate that properties required depending on an application can be exerted, as appropriate, by changing the constitution as appropriate according to the type of a side chain. Note that, the above-described elastomeric polymer having a side chain (b) other than the elastomeric polymer (B) can be obtained by a method for producing the elastomeric polymer having the side chain (b) by: using an elastomeric polymer having a functional group (for example, a cyclic acid anhydride group) in a side chain; and causing the elastomeric polymer to react with a compound capable of forming a covalent-bond cross-linking moiety (compound that forms a covalent bond) upon a reaction with the functional group. Also in this case, as the compound capable of forming a covalent-bond cross-linking moiety (compound that forms a covalent bond), it is possible to use the above-described "compound capable of forming a covalent-bond cross-linking moiety (compound that forms a covalent bond)".

In addition, as the organically modified clay, it is preferable that a clay in a single-layered morphology (single-layered clay) be present in the composition. The presence of such a clay in the single-layered morphology can be confirmed by observing the surface of the composition under a transmission electron microscope (TEM).

Moreover, regarding the thermoplastic elastomer composition of the present invention, when randomly selected three or more measurement points in a size of 5.63 µm² on the surface of the thermoplastic elastomer composition are observed under a transmission electron microscope (TEM), 50% or more (more preferably 70% or more, further preferably 80 to 100%, and particularly preferably 85 to 100%) of all the organically modified clay based on the number is preferably present as the single-layered clay in all the measurement points. If the abundance ratio of the single-layered clay is less than the lower limit, the elongation at break and the strength at break tend to decrease. Note that the abundance ratio (proportion) of such a single-layered clay can be determined as follows. Specifically, a transmission electron microscope (for example, one manufactured by JEOL Ltd. under the trade name of "JEM-2010") is used; 10 g of the thermoplastic elastomer composition is prepared as a sample; three or more measurement points in a size of 5.63 µm² on the surface of the thermoplastic elastomer composition are each observed; the number of the single-layered clay and the number of the organically modified clay of multi-layer state are determined in each TEM image obtained by such observation; and the abundance ratio (proportion) of the single-layered clay relative to all the clay is calculated and determined based on these numbers for each of the measurement points (each of the TEM images) . Note that in a multi-layered structure before taking the single-layer morphology, the interlayer distance of a general organically modified clay is about 20 to 40 angstroms (2 to 4 nm) (here, the interlayer distance of montmorillonite before organic modification is usually about 9.8 angstroms). In addition, when a general organically modified clay is dispersed in an organic solvent and is delaminated into single layers, the interlayer distance thereof is 50 angstroms or more (> 5 nm). Hence, layers observed in a TEM image may be determined as single layers based on the observation that the interlayer distance between the observed layers is wider than such an interlayer distance. As described above, layers may be determined to be in a single-layer state, for example, based on the observation that the layers have an interval of 5 nm or more, and, in some cases, layers may be determined to be in a single-layer state based on the observation that the layers have an interval of several tens of nanometers or more, although it depends on the type of the organically modified clay.

Note that, in a case where the single-layered clay is contained at the above-described proportion (the abundance ratio) in the composition, the clay is contained more dispersedly than in a case where a multi-layered organically modified clay is dispersed as it is (this is because the multi-layered organically modified clay is decomposed to form a single-layered clay), and hence the clay can be dispersed in the composition with a higher dispersibility. Thus, in the case where the single-layered organically modified clay is present at the above-described proportion in the composition, it is possible to obtain the higher dispersibility, and accordingly enhance the heat resistance and the strength at break to higher levels than in the case where the multi-layered organically modified clay is present as it is in the composition. For this reason, it is more preferable that the clay in a single-layered state be contained at the above-described proportion, and this causes the organically modified clay to be more dispersed, making it possible to more efficiently improve the heat resistance and the strength at break. In addition, a method for causing the single-layered clay to be contained at the above-described proportion (the abundance ratio) is not particularly limited. For example, it is possible to cause the composition to contain the single-layered clay at the above-described proportion more efficiently by employing a method in the production of the above-described reaction product (I) to (VI), the method including: before a reaction of an elastomeric polymer (any of the elastomeric polymers (E1) to (E6)) with a compound (any of the compounds (M1) to (M6)), adding (first adding) an organically modified clay to the elastomeric polymer (E1) to (E6) as a raw material; and thereafter causing the resultant elastomeric polymer to react with the compound.

In addition, the thermoplastic elastomer composition of the present invention is preferably such that when randomly selected three or more measurement points in a size of 5.63 µm² on the surface of the thermoplastic elastomer composition are observed under a transmission electron microscope, 1 to 100 (more preferably 3 to 80, and further preferably 5 to 50) single layers of the clay per square micrometer be dispersed in all the measurement points. If the number of single layers of the clay is less than the lower limit, the amount of the clay is so small that sufficient effects tend not to be obtained. Note that the number of the single layers of the clay can be determined by obtaining a TEM image by the same method as that for measuring the abundance ratio (proportion) of the single-layered clay.

Note that, depending on the type of the elastomer component used, properties suitable for an application can be imparted as appropriate to the thermoplastic elastomer composition of the present invention. For example, in the case of the thermoplastic elastomer composition containing the elastomeric polymer (A) as the elastomer component, properties stemming from the side chain (a) can be imparted to the composition, so that, especially, the elongation at break, the strength at break, and the flowability can be improved. Meanwhile, in the case of the thermoplastic elastomer composition containing the elastomeric polymer (B) as the elastomer component, properties stemming from the covalent-bond cross-linking moiety in the side chain can be imparted to the composition, so that, especially, the resistance to compression set (anti-compression set property) can be improved. Note that, in the case of the thermoplastic elastomer composition containing the elastomeric polymer (B) as the elastomer component, not only properties stemming from the covalent-bond cross-linking moiety, but also properties stemming from the hydrogen-bond cross-linkable moiety (the hydrogen-bond cross-linkable moiety described for the side chain (a')) can be imparted to the composition, so that the thermoplastic elastomer composition can achieve further improvement in the resistance to compression set while retaining the flowability (formability). Thus, desired properties according to an application can be also exerted more efficiently by changing, as appropriate, the type of the side chain, the type of the polymer (B), or the like.

In addition, regarding the thermoplastic elastomer composition of the present invention, the thermoplastic elastomer composition containing the elastomeric polymer (A) as the elastomer component and the thermoplastic elastomer composition containing the elastomeric polymer (B) as the elastomer component may be produced separately, and then mixed with each other to prepare a thermoplastic elastomer composition containing the elastomeric polymers (A) and (B) as the elastomer components. In addition, in the present invention, it is only necessary that at least any of the elastomeric polymers (A) and (B) be contained as the elastomer component. However, from the viewpoint of utilizing properties of covalent-bond cross-linking moieties more efficiently by causing the covalent-bond cross-linking moieties to be present in the composition, an additional elastomeric polymer having the side chain (b) other than the elastomeric polymer (B) may be mixed and used. For example, in the case where the elastomeric polymer (A) is used as the elastomer component and where an additional elastomeric polymer having the side chain (b) other than the elastomeric polymer (B) is also used in combination, the composition can be provided, owing to the side chains contained in the composition, with substantially the same properties as those of the thermoplastic elastomer composition using the elastomeric polymer (B) containing a hydrogen-bond cross-linkable moiety and a covalent-bond cross-linking moiety in a side chain. In addition, when the thermoplastic elastomer composition containing the elastomeric polymers (A) and (B) as the elastomer components is produced, or when a thermoplastic elastomer composition containing the elastomeric polymer (A) and the additional elastomeric polymer having the side chain (b) other than the elastomeric polymer (B) is produced, desired properties can also be exerted, as appropriate, by changing, as appropriate, the ratio between these components (for example, the elastomeric polymer (A) component and the elastomeric polymer (B) component).

In addition, when the thermoplastic elastomer composition of the present invention contains the elastomeric polymers (A) and (B) as the elastomer components, the content ratio of the elastomeric polymer (A) to the elastomeric polymer (B) is preferably 1:9 to 9:1, and more preferably 2:8 to 8:2 in terms of the mass ratio ([polymer (A)]:[polymer (B)]). If the content ratio of the polymer (A) is less than the lower limit, the flowability (formability) and the mechanical strength tend to be insufficient. Meanwhile, if the content ratio of the polymer (A) exceeds the upper limit, the resistance to compression set tends to decrease.

Moreover, when the thermoplastic elastomer composition of the present invention contains the elastomeric polymer (A) and the additional elastomeric polymer having the side chain (b) other than the elastomeric polymer (B) (hereinafter, sometimes referred to as "elastomeric polymer (C)"), the content ratio of the elastomeric polymer (A) to the elastomeric polymer (C) is preferably 1:9 to 9:1, and more preferably 2:8 to 8:2 in terms of mass ratio ([elastomeric polymer (A)] : [elastomeric polymer (C)]). If the content ratio of the polymer (A) is less than the lower limit, the flowability (formability) and the mechanical strength tend to be insufficient. Meanwhile, if the content ratio of the polymer (A) exceeds the upper limit, the resistance to compression set tends to decrease.

In addition, regarding the thermoplastic elastomer composition of the present invention, when both the side chain (a') and the side chain (b) are present in the composition, the total amount of the side chain (a') and the total amount of the side chain (b) are preferably 1:9 to 9:1, and more preferably 2:8 to 8:2 based on the mass ratio. If the total amount of the side chain (a') is less than the lower limit, the flowability (formability) and the mechanical strength tend to be insufficient. Meanwhile, if the total amount of the side chain (a') exceeds the upper limit, the resistance to compression set tends to decrease. Note that such a side chain (a') is a concept including the side chain (a). For this reason, also when only the side chain (a) is contained as the side chain (a'), it is preferable that both the side chain (a) and the side chain (b) be present in the composition at the above-described mass ratio.

If necessary, the thermoplastic elastomer composition of the present invention can contain various additives such as polymer components other than the elastomer component (hereinafter, simply referred to as "other polymers"), paraffin oil, reinforcing agents (bulking agents), hydrogen bond-reinforcing agents (bulking agents), bulking agents to which an amino group is introduced (hereinafter, simply referred to as "amino group-introduced bulking agent"), amino group-containing compounds other than the amino group-introduced bulking agents, metal element-containing compounds (hereinafter, simply referred to as "metal salts"), maleic anhydride-modified polymers, anti-aging agents, antioxidants, pigments (dyes), plasticizers other than the paraffin oil, thixotropy-imparting agents, ultraviolet absorbers, flame retardants, solvents, surfactants (including leveling agents), thermally expandable microcapsules, pre-expanded microcapsules, dispersing agents, dehydrating agents, corrosion inhibitors, adhesiveness imparting agents, antistats, antimicrobial agents, fungicides, and fillers; and the like, unless the object of the present invention is not impaired. These additives and the like are not particularly limited, and commonly used ones (known ones) can be used, as appropriate. For example, the aforementioned other polymers, paraffin oil, reinforcing agents, anti-aging agents, antioxidants, pigments (dyes), and plasticizers described below can be used, as appropriate.

As the other polymers, it is possible to preferably use: an additional elastomeric polymer having the side chain (b) other than the elastomeric polymer (B); an α-olefin-based resin having no chemical-bond cross-linking moiety; and a styrene block copolymer having no chemical-bond cross-linking moiety. The "chemical-bond cross-linking moiety" mentioned herein means a moiety in which a cross linkage is formed by a chemical bond such as a hydrogen bond or a covalent bond. Accordingly, "having no chemical-bond cross-linking moiety" mentioned in the present invention means a state not having a cross linkage formed by a chemical bond (for example, a hydrogen bond, a covalent bond, and the like).

As the α-olefin-based resin having no chemical-bond cross-linking moiety, preferably used is a resin that neither contains any functional group (for example, a hydroxy group, a carbonyl group, a carboxyl group, a thiol group, an amide group, or an amino group) capable of forming a cross-linking point by chemical bonding, nor contains a bonding moiety at which high polymer chains are directly cross-linked (such as a cross-linking moiety by a covalent bond). Moreover, such an α-olefin-based resin having no chemical-bond cross-linking moiety is a polymer that does not have at least any of the aforementioned side chain (a), side chain (a'), side chain (b), side chain (c), and the like.

Then, the "α-olefin-based resin" mentioned herein is an α-olefin homopolymer or an α-olefin copolymer. The "α-olefin" mentioned herein is an alkene containing a carbon-carbon double bond at the α position (alkene containing a carbon-carbon double bond at the terminal: note that such an alkene may be in the form of a linear chain or a branched chain, and preferably has 2 to 20 carbon atoms (more preferably 2 to 10 carbon atoms). Examples thereof include ethylene, propylene, 1-butene, 1-pentene, 1-hexene, 1-heptene, 1-octene, 1-nonene, 1-decene, and the like.

The α-olefin-based resin having no chemical-bond cross-linking moiety may be any polymer of α-olefin (ploy-α-olefin: which may be a homopolymer or a copolymer). Examples thereof include, but are not particularly limited to, polyethylene, polypropylene, ethylene-propylene copolymer, ethylene-butene copolymer, propylene-ethylene-butene copolymer, and the like. Among the α-olefin-based resins having no chemical-bond cross-linking moiety, polypropylene, polyethylene, and ethylene-propylene copolymer are preferable from the viewpoint of compatibility with the base elastomer. Incidentally, one of these α-olefin-based resins having no chemical-bond cross-linking moiety may be used alone or two or more thereof may be used in combination.

In the α-olefin-based resin having no chemical-bond cross-linking moiety, the degree of crystallinity is preferably 10% or more, more preferably 10 to 80%, and further preferably 10 to 75%. If the degree of crystallinity is less than the lower limit, the resinous properties are so weak that it tends to be difficult to enhance the levels of mechanical properties and flowability. Meanwhile, if the degree of crystallinity exceeds the upper limit, the resinous properties are so strong that it tends to be difficult to exert the mechanical properties at higher levels in a well-balanced manner. Here, the degree of crystallinity can be obtained in such a way that diffraction peaks are measured by using an X-ray diffraction instrument (for example, one manufactured by Rigaku Corporation under the trade name "MiniFlex 300") as a measurement instrument and an integral ratio between the scattering peaks derived from crystalline and amorphous structures is calculated.

In addition, the α-olefin-based resin having no chemical-bond cross-linking moiety preferably has a melt flowrate (MFR) of 40 g/10 min or more at 190°C under a load of 2.16 kg which is measured according to JIS K6922-2 (published in 2010) . If the melt flowrate (MFR) is less than the lower limit, the α-olefin-based resin tends to have difficulty in improving the flowability even when blended in the composition. Here, the melt flowrate (MFR) is a value measured according to the B method described in JIS K6922-2 (published in 2010) and can be obtained by using, as a melt flowrate measurement instrument, an instrument manufactured by Toyo Seiki Seisaku-sho, Ltd. under the trade name "Melt Indexer G-01". Specifically, 3 g of the α-olefin-based resin is added to the furnace of the instrument, is heated to a temperature of 190°C, and then is left for 5 minutes at 190°C. Thereafter, under the conditions of the temperature kept at 190°C and a load of 2.16 kg, a mass (g) of the composition is measured, as the melt flowrate, which flows out for 10 minutes from an opening of the tubular orifice member having a diameter of 1 mm and a length of 8 mm, and connected to a lower portion of the furnace (the resin is left for 5 minutes at temperature of 190°C in the furnace, and then the measurement of the mass of the elastomer flowing out is started after the start of the load application).

Moreover, the weight average molecular weight (Mw) of the α-olefin-based resin having no chemical-bond cross-linking moiety is preferably 10,000 to 2,000,000, both inclusive, more preferably 30,000 to 1,500,000, both inclusive, and further preferably 50,000 to 1,250,000, both inclusive. If the weight average molecular weight is less than the lower limit, the mechanical strength tends to decrease. Meanwhile, if the weight average molecular weight exceeds the upper limit, the compatibility with the elastomer component decreases so much that phase separation tends to easily occur.

In addition, the number average molecular weight (Mn) of the α-olefin-based resin having no chemical-bond cross-linking moiety is preferably 10,000 to 2,000,000, both inclusive, more preferably 30,000 to 1,500,000, both inclusive, and further preferably 50,000 to 1,250,000, both inclusive. If the number average molecular weight is less than the lower limit, the mechanical strength tends to decrease. Meanwhile, if the number average molecular weight exceeds the upper limit, the compatibility with the elastomer component tends to decrease so much that phase separation tends to easily occur.

In addition, the polydispersity index (Mw/Mn) of the α-olefin-based resin having no chemical-bond cross-linking moiety is preferably 10 or less, and more preferably 1.5 to 5. If the value of the polydispersity index (Mw/Mn) is less than the lower limit, the flowability tends to decrease. Meanwhile, if the value exceeds the upper limit, the compatibility with the elastomer component tends to decrease.

The aforementioned weight average molecular weight (Mw), number average molecular weight (Mn) and polydispersity index (Mw/Mn) of the α-olefin-based resin can be determined by what is termed gel permeation chromatography (GPC). Then, "Prominence GPC system" manufactured by Shimadzu Corporation can be used for a specific instrument and conditions for measuring such molecular weights and so on.

The glass-transition point of the α-olefin-based resin having no chemical-bond cross-linking moiety is preferably -150 to 5°C, and more preferably-125 to 0°C. If the glass-transition point is less than the lower limit, the melting point is so low that the heat resistance tends to decrease. Meanwhile, if the glass-transition point exceeds the upper limit, the rubber elasticity of the elastomer component blended with the α-olefin-based resin tends to decrease. The "glass-transition point" mentioned herein is a glass-transition point measured by differential scanning calorimetry (DSC) as described above. In such DSC measurement, it is preferable to set the rate of temperature rise at 10°C/min.

A method for producing the α-olefin-based resin having no chemical-bond cross-linking moiety is not particularly limited, but any known method can be employed as appropriate. As such an α-olefin-based resin, a commercially available product may be used, and examples thereof usable as appropriate include ones manufactured by Mitsui Chemicals, Inc. under the trade name "TAFMER"; manufactured by Japan Polyethylene Corporation under the trade names "NOVATEC HD", " NOVATEC LD", " NOVATEC LL", and "KERNEL"; manufactured by Prime Polymer Co., Ltd. under the trade names "HI-NEX", "NEO-ZEX", "ULTZEX", "Evolue", "Prime Polypro", "POLY FINE", and "MOSTRON L"; and manufactured by SunAllomer Ltd. under the name of PP; and the like.

When the thermoplastic elastomer composition of the present invention further contains the α-olefin-based resin having no chemical-bond cross-linking moiety, the amount of the contained α-olefin-based resin having no chemical-bond cross-linking moiety (content ratio) is preferably 250 parts by mass or less, more preferably 5 to 250 parts by mass, further preferably 10 to 225 parts by mass, particularly preferably 25 to 200 parts by mass, and most preferably 35 to 175 parts by mass relative to 100 parts by mass of the elastomer component. If the amount of the contained α-olefin-based resin having no chemical-bond cross-linking moiety is less than the lower limit, the flowability tends to deteriorate. Meanwhile, if the amount of the α-olefin-based resin contained exceeds the upper limit, the mechanical properties (strength at break and compression set) tend to deteriorate.

When the thermoplastic elastomer composition of the present invention further contains the α-olefin-based resin having no chemical-bond cross-linking moiety, the amount of the contained α-olefin-based resin having no chemical-bond cross-linking moiety is preferably 1 to 50% by mass, more preferably 3 to 45% by mass, and further preferably 5 to 40% by mass relative to the total amount of the composition. If the amount of the contained α-olefin-based resin having no chemical-bond cross-linking moiety is less than the lower limit, the flowability tends to deteriorate. Meanwhile, if the amount of the α-olefin-based resin contained exceeds the upper limit, the mechanical properties (tensile strength at break and compression set) tend to deteriorate.

Then, as the other polymer, a styrene block copolymer having no chemical-bond cross-linking moiety is preferable from the viewpoint that the styrene block copolymer does not interfere with a cross-linking reaction of the base elastomer. In the case of using such a styrene block copolymer, the styrene block copolymer basically does not interfere with the cross-linking structure of the base elastomeric polymer (the elastomer composition) or the cross-linking reaction thereof during the production, nor does it impairs physical properties peculiar to the base structure of the cross-linked elastomer. Thus, the present inventors speculate that superior mechanical properties (especially, tensile property, compression set, and the like) stemming from the styrene block copolymer can be reflected in (imparted to) the thermoplastic elastomer composition of the present invention while properties stemming from the elastomer component are sufficiently retained therein, so that the thermoplastic elastomer composition of the present invention can be made to achieve higher levels of the properties.

Such a styrene block copolymer being a component preferably used in the thermoplastic elastomer composition of the present invention is one having no chemical-bond cross-linking moiety. The "having no chemical-bond cross-linking moiety" mentioned herein has the same meaning as defined above. Thus, as the styrene block copolymer having no chemical-bond cross-linking moiety, preferably used is a polymer that neither contains any functional group (for example, a hydroxy group, a carbonyl group, a carboxyl group, a thiol group, an amide group, or an amino group) capable of forming a cross-linking point by chemical bonding, nor contains a bonding moiety in which high polymer chains are directly cross-linked (such as a cross-linking moiety by a covalent bond) . Moreover, such a styrene block copolymer having no chemical-bond cross-linking moiety is a polymer that does not have at least any of the aforementioned side chain (a), side chain (a'), side chain (b), side chain (c), and the like.

Then, the "styrene block copolymer" mentioned herein may be a polymer having a styrene block structure in any moiety. In general, the styrene block copolymer has styrene block structures. Moieties of the styrene block structures are flocculated to form physically cross-linking points (physically pseudo-cross-linking points) at normal temperature, and the physically pseudo-cross-linking points decompose when heated. Based on these properties, the styrene block copolymer is usable as a thermoplastic substance having rubber-like properties (such as elasticity) at normal temperature.

From the viewpoint that the rubber elasticity and thermoplasticity can be both achieved, preferable copolymers as the styrene block copolymer having no chemical-bond cross-linking moiety (hereinafter, sometimes simply referred to as "styrene block copolymer having no chemical-bond cross-linking moiety") include a styrene-isoprene-styrene block copolymer (SIS), a styrene-ethylene-propylene-styrene block copolymer (SEPS), styrene-ethylene-ethylene-propylene-styrene block copolymer (SEEPS), a styrene-butadiene-styrene block copolymer (SBS), a styrene-ethylene-butylene-styrene block copolymer (SEBS), a styrene-isoprene-butadiene-styrene block copolymer (SIBS), and products thereof generated by addition of hydrogen (so-called hydrogenated products). Among them, SEBS and SEEPS are more preferable. One of these styrene block copolymers may be used alone, or two or more thereof may be used in combination.

Then, the styrene block copolymer having no chemical-bond cross-linking moiety is preferably a styrene block copolymer in which the styrene content is 20 to 40% by mass (more preferably, 25 to 37% by mass) . If the styrene content is less than the lower limit, the thermoplasticity tends to decrease due to a decrease in the styrene block component. Meanwhile, if the styrene content exceeds the upper limit, the rubber elasticity tends to decrease due to a decrease in the olefin component. Here, the styrene content in the styrene block copolymer can be measured by a method in accordance with the IR method described in JIS K6239 (published in 2007).

Moreover, the weight average molecular weight (Mw) of the styrene block copolymer having no chemical-bond cross-linking moiety is preferably 200,000 to 700,000, both inclusive, more preferably 300,000 to 600,000, both inclusive, and further preferably 350,000 to 550,000, both inclusive. If the weight average molecular weight is less than the lower limit, the heat resistance tends to decrease. Meanwhile, if the weight average molecular weight exceeds the upper limit, the compatibility with the elastomeric polymer tends to decrease.

Further, the number average molecular weight (Mn) of the styrene block copolymer having no chemical-bond cross-linking moiety is preferably 100,000 to 600,000, both inclusive, more preferably 150,000 to 550,000, both inclusive, and further preferably 200,000 to 500,000, both inclusive. If the number average molecular weight is less than the lower limit, the heat resistance tends to decrease. Meanwhile, if the number average molecular weight exceeds the upper limit, the compatibility with the elastomeric polymer (the aforementioned elastomer component) tends to decrease.

In addition, the polydispersity index (Mw/Mn) of the styrene block copolymer having no chemical-bond cross-linking moiety is preferably 5 or less, and more preferably 1 to 3. Here, these weight average molecular weight (Mw), number average molecular weight (Mn), and polydispersity index (Mw/Mn) can be determined by what is termed gel permeation chromatography (GPC) . Then, "Prominence GPC system" manufactured by Shimadzu Corporation can be used for a specific instrument and conditions for measuring such molecular weights and so on.

Further, the glass-transition point of the styrene block copolymer having no chemical-bond cross-linking moiety is preferably -80 to -40°C, and more preferably -70 to -50°C. If the glass-transition point is less than the lower limit, the heat resistance tends to decrease due to a low melting point. Meanwhile, if the glass-transition point exceeds the upper limit, the rubber elasticity tends to decrease. Here, the "glass-transition point" mentioned herein is a glass-transition point measured by differential scanning calorimetry (DSC) as described above. In such DSC measurement, it is preferable to set the rate of temperature rise at 10°C/min.

A method for producing the styrene block copolymer having no chemical-bond cross-linking moiety is not particularly limited, but any known method can be employed as appropriate. As such a styrene block copolymer, a commercially available product may be used, and it is possible to use, as appropriate, any of copolymers: manufactured by Kraton Corporation under the trade names of "G1633", "G1640", "G1641", "G1642", "G1643", "G1645", "G1650", "G1651", "G1652", "G1654", "G1657", and "G1660"; manufactured by KURARAY CO., LTD. under the trade names of "S4055", "S4077", "S4099", "S8006", "S4044", "S8006", "S4033", "S8004", "S8007", and "S8076"; manufactured by Asahi Kasei Corporation under the trade names of "Tuftec H1041", "Tuftec N504", "Tuftec H1272", "Tuftec M1911", "Tuftec M1913", and "Tuftec MP10"; and manufactured by ARONKASEI CO., LTD. under the trade names of "AR-710", "AR-720", "AR-731", "AR-741", "AR-750", "AR-760", "AR-770", "AR-781", and "AR-791"; and the like, for example.

Then, when the thermoplastic elastomer composition of the present invention further contains the styrene block copolymer having no chemical-bond cross-linking moiety, the amount of the contained styrene block copolymer having no chemical-bond cross-linking moiety (content ratio) is preferably 10 to 400 or less parts by mass, more preferably 15 to 350 parts by mass, further preferably 20 to 300 parts by mass, and particularly preferably 30 to 250 parts by mass relative to 100 parts by mass of the elastomer component. If the amount of the contained styrene block copolymer having no chemical-bond cross-linking moiety is less than the lower limit, the amount of the contained styrene block copolymer having no chemical-bond cross-linking moiety is so small that the sufficient effects tend not to be obtained particularly in the flowability and the processability. Meanwhile, if the amount of the styrene block copolymer contained exceeds the upper limit, the properties peculiar to the base structure of the cross-linked elastomer (the properties stemming from the aforementioned elastomer component) tend to be weak.

Moreover, when the thermoplastic elastomer composition of the present invention further contains the styrene block copolymer having no chemical-bond cross-linking moiety, the amount of the contained styrene block copolymer having no chemical-bond cross-linking moiety is preferably 5 to 60% by mass, more preferably 7 to 45% by mass, and further preferably 10 to 30% by mass relative to the total amount of the thermoplastic elastomer composition. If the amount of the contained styrene block copolymer having no chemical-bond cross-linking moiety is less than the lower limit, the amount of the styrene block copolymer contained is so small that the sufficient effects tend not to be obtained particularly in the flowability and the processability. Meanwhile, if the amount of the styrene block copolymer contained exceeds the upper limit, the properties peculiar to the base structure of the cross-linked elastomer (the properties stemming from the aforementioned elastomer component) tend to be weak.

Note that the thermoplastic elastomer composition of the present invention may also use, as the other polymers described above, for example, polymers of types other than the α-olefin-based resin having no chemical-bond cross-linking moiety and the styrene block copolymer having no chemical-bond cross-linking moiety, as needed. Examples of the polymers of other types include polytetrafluoroethylene (PTFE), polyisobutylene, polymethyl methacrylate, polystearyl methacrylate, polybutyl methacrylate, polypropyl methacrylate, fluorine rubber, silicone rubber (MQ), oxidized polypropylene, polydimethylsiloxane, butyl rubber (IIR), polyvinyl chloride, natural rubber (NR), polyisoprene (IR: isoprene rubber), polybutadiene (BR: butadiene rubber), styrene butadiene rubber (SBR), and polystyrene.

Then, the paraffin oil is preferably used as an additive component (another component: an additive) further contained in the thermoplastic elastomer composition of the present invention from the viewpoint that the paraffin oil can further improve the flowability of the composition without deteriorating the physical properties of the composition. Note that, in the case of using the paraffin oil in combination with the styrene block polymer described above, it is possible to cause the block polymer to absorb the oil component, so that improvement in processability (enhancement in flowability) by the addition of the oil and enhancement in the mechanical properties by the addition of the styrene-based block polymer can be both achieved at sufficiently high levels. This leads to higher levels of production processability such as extrusion processability and injection moldability while more sufficiently maintaining the mechanical properties and the heat resistance. Moreover, in the case of using the paraffin oil, the thermoplastic elastomer composition tends to achieve such excellent extrusion processability that, when the composition heated is extruded from an orifice (such for example as an orifice having an opening with a diameter of 1 mm), for example, a cord-like composition extruded from the opening of the orifice has a shape (strand shape) sufficiently uniform in thickness and has a surface without any fluff. Such a paraffin oil is not particularly limited, but any known paraffin oil may be used as appropriate.

Then, when such a paraffin oil is measured by correlation ring analysis (n-d-M ring analysis) according to ASTM D3238-85 to obtain a percentage of the number of paraffin's carbon atoms to the total number of carbon atoms (paraffin part: C_{P}), a percentage of the number of naphthene' s carbon atoms to the total number of carbon atoms (naphthene part: C_{N}), and a percentage of the number of aromatic carbon atoms to the total number of carbon atoms (aromatic part: C_{A}), it is preferable that the paraffin oil have 60% or more as the percentage (C_{P}) of the number of paraffin's carbon atoms to the total number of carbon atoms.

Moreover, in the paraffin oil, a kinematic viscosity at 40°C measured according to JIS K 2283 (published in 2000) is preferably 50 mm²/s to 700 mm²/s, more preferably 150 to 600 mm²/s, and further preferably 300 to 500 mm²/s. If the kinematic viscosity (v) is less than the lower limit, oil bleeding tends to occur. Meanwhile, if the kinematic viscosity (v) exceeds the upper limit, sufficient flowability tends not to be imparted. As the kinematic viscosity of the paraffin oil, a value is employed which is measured under a temperature condition of 40°C according to JIS K 2283 (published in 2000) . For example, a value may be employed which is automatically measured under a temperature condition of 40°C by using a Cannon-Fenske Viscometer (for example, one manufactured by SIBATA SCIENTIFIC TECHNOLOGY LTD. under the trade name "SO series") according to JIS K 2283 (published in 2000).

Further, in the paraffin oil, an aniline point measured by a U-tube method according to JIS K 2256 (published in 2013) is preferably 80°C to 145°C, more preferably 100 to 145°C, and further preferably 105 to 145°C. As the aniline point of the paraffin oil, a value is employed which is measured by the U-tube method according to JIS K 2256 (published in 2013) . For example, a value may be employed which is measured by using, for example, an aniline point tester (for example, one manufactured by Tanaka Scientific Limited. under the trade name "aap-6") according to JIS K 2256 (published in 2013).

Then, as the paraffin oil, any commercially available paraffin oil can be used as appropriate. Examples of paraffin oils usable as appropriate include oils manufactured by JXTG Nippon Oil & Energy Corporation under the trade names of "Super Oil M Series P200", "Super Oil M Series P400", and "Super Oil M Series P500S"; oils manufactured by Idemitsu Kosan Co., Ltd. under the trade names of "Diana Process Oil PW90", "Diana Process Oil PW150", and "Diana Process Oil PW380"; oils manufactured by JAPAN SUN OIL COMPANY, LTD. under the trade names of "SUNPAR series" (110, 115, 120, 130, 150, 2100, 2280, and so on); oils manufactured by Exxon Mobil Corporation under the trade names of "Gargoyle Arctic series (1010, 1022, 1032, 1046, 1068, 1100, and so on)"; and the like.

When the paraffin oil is further contained in the thermoplastic elastomer composition of the present invention, the amount of the paraffin oil contained is preferably 10 to 600 parts by mass, more preferably 50 to 550 parts by mass, further preferably 75 to 500 parts by mass, and particularly preferably from 100 to 400 parts by mass relative to 100 parts by mass of the elastomer component. If the amount of the paraffin oil contained is less than the lower limit, the amount of the paraffin oil contained is so small that the effects that can be obtained by the addition of the paraffin oil (in particular, the effects of enhancing the flowability and the processability) tend to be insufficient in some cases. Meanwhile, if the amount of the paraffin oil contained exceeds the upper limit, bleeding of the paraffin oil tends to be induced easily.

When the paraffin oil is further contained in the thermoplastic elastomer composition of the present invention, the amount of the paraffin oil contained is preferably 20 to 60% by mass, more preferably 25 to 55% by mass, and further preferably 35 to 55% by mass relative to the total amount of the thermoplastic elastomer composition. If the amount of the paraffin oil contained is less than the lower limit, the amount of the paraffin oil contained is so small that the sufficient effects tend not to be obtained in the flowability and the processability, in particular. Meanwhile, if the amount of the paraffin oil contained exceeds the upper limit, bleeding of the paraffin oil tends to be induced easily.

From the viewpoints of improvements in the flowability and the mechanical properties, the thermoplastic elastomer composition of the present invention is preferably one containing a combination of the α-olefin-based resin having no chemical-bond cross-linking moiety, the paraffin oil, and the styrene block copolymer having no chemical-bond cross-linking moiety. In other words, the thermoplastic elastomer composition of the present invention is more preferably one comprising the elastomer component, the organically modified clay, the α-olefin-based resin having no chemical-bond cross-linking moiety, the paraffin oil, and the styrene block copolymer having no chemical-bond cross-linking moiety. The thermoplastic elastomer composition thus comprising the elastomer component, the organically modified clay, the α-olefin-based resin, the paraffin oil, and the styrene block copolymer tends to exert not only a sufficiently high level of tear strength but also a higher level of tensile strength such as strength at break in a well-balanced manner.

Meanwhile, as the reinforcing agents (bulking agents) that can be further contained in the thermoplastic elastomer composition of the present invention, there are carbon black, silica, calcium carbonate, and the like. As such silica, wet silica is preferably used.

As the anti-aging agents, for example, compounds such as hindered phenol-based compounds and aliphatic and aromatic hindered amine-based compounds can be used as appropriate. In addition, as the antioxidants, for example, butylhydroxytoluene (BHT), butylhydroxyanisole (BHA), and the like can be used as appropriate. Meanwhile, as the pigments, for example, inorganic pigments such as titanium dioxide, zinc oxide, ultramarine, red iron oxide, lithopone, lead, cadmium, iron, cobalt, aluminum, hydrochloric acid salts, and sulfuric acid salts; organic pigments such as azo pigments and copper phthalocyanine pigments; and the like can be used as appropriate . Meanwhile, as the plasticizers, for example, derivatives of benzoic acid, phthalic acid, trimellitic acid, pyromellitic acid, adipic acid, sebacic acid, fumaric acid, maleic acid, itaconic acid, citric acid, and the like, as well as polyester-, polyether-, and epoxy-based plasticizers, and the like can be used as appropriate. As the plasticizers (softening agents), plasticizers usable for a thermoplastic elastomer can be used as appropriate from the viewpoint of further improving the flowability, and oils can also be used, for example. Note that, as the additives and the like, those listed as examples in Japanese Unexamined Patent Application Publication No. 2006-131663 may also be used as appropriate.

Note that when the thermoplastic elastomer composition of the present invention contains other components (for example, the above-described additives or the like) in addition to the elastomer component, the organically modified clay, the α-olefin-based resin having no chemical-bond cross-linking moiety, the paraffin oil, and the styrene block copolymer having no chemical-bond cross-linking moiety, the amounts of the other components contained are not particularly limited. When the other components are a polymer and a reinforcing material (bulking agent), the amount of each of them is preferably 400 parts by mass or less, and more preferably 20 to 300 parts by mass relative to 100 parts by mass of the elastomer component. If the amount of the other component contained is less than the lower limit, the effects obtained by use of the other component tend not to be expressed sufficiently. Meanwhile, if the amount of the other component contained exceeds the upper limit, the effects of the elastomer serving as a substrate tend to be less influential, so that the physical properties tend to deteriorate, although it depends on the type of the component used.

When the above-described other components are the other additives (when the above-described other components are other than the polymer and the reinforcing material (bulking agent)), the amount of each other component contained is preferably 20 parts by mass or less, and more preferably 0.1 to 10 parts by mass relative to 100 parts by mass of the elastomer component. If the amount of the other component contained is less than the lower limit, the effect by the use of the other component tends not to be expressed sufficiently. Meanwhile, if the amount of the other component contained exceeds the upper limit, the other component adversely affects the reaction of the elastomer serving as a substrate, so that the physical properties tend to deteriorate rather.

When the thermoplastic elastomer composition of the present invention is heated (for example, heated to 100 to 250°C), dissociation or the like of hydrogen bonds formed at the hydrogen-bond cross-linkable moieties and other cross-linking structures (such as physical cross-linkages in the case where a styrene block copolymer is contained) occurs, so that the thermoplastic elastomer composition softens to provide flowability. This is presumably because the heating weakens the interaction (interaction mainly by hydrogen bonds) created between side chains intermolecularly or intramolecularly. Note that an elastomer component containing at least a hydrogen-bond cross-linkable moiety in a side chain is contained in the present invention. Owing to the above feature and so on, when the thermoplastic elastomer composition is left after the flowability is provided by the heating, the dissociated hydrogen bonds again form the bonds to harden the thermoplastic elastomer composition. Hence, it is also possible to cause the thermoplastic elastomer composition to express recyclability more efficiently depending on the constitution.

Further, in the thermoplastic elastomer composition of the present invention, the melt flow rate (MFR) measured at 230°C under a load of 10 kg according to JIS K6922-2 (published in 2010) is preferably 2 g/10 min or more, more preferably 4 g/10 min or more, and more preferably 8 g/10 min or more. If the melt flow rate (MFR) is less than the lower limit, there is a tendency that the sufficient processability cannot be always expressed. Here, the melt flow rate (MFR) is a value measured according to the B method described in JIS K6922-2 (published in 2010) and can be obtained by using, as a melt flow rate measurement instrument, an instrument manufactured by Toyo Seiki Seisaku-sho, Ltd. under the trade name "Melt Indexer G-01". Specifically, 3 g of the thermoplastic elastomer composition is added to the furnace of the instrument, is heated to a temperature of 230°C, and then is left for 5 minutes at 230°C. Thereafter, under the conditions of the temperature kept at 230°C and a load of 10 kg, a mass (g) of the elastomer is measured, as the melt flow rate, which flows out for 10 minutes from an opening of the tubular orifice member having a diameter of 1 mm and a length of 8 mm, and connected to a lower portion of the furnace (the composition is left for 5 minutes at temperature of 230°C in the furnace, and then the measurement of the mass of the elastomer flowing out is started after the start of the load application).

Further, in the thermoplastic elastomer composition of the present invention, a 5% weight loss temperature is preferably 320°C or above, and more preferably 325°C or above. If the 5% weight loss temperature is less than the lower limit, the heat resistance tends to be poor. Here, the 5% weight loss temperature can be obtained by: preparing 10 mg of a thermoplastic elastomer composition as a measurement sample; using a thermogravimetric analyzer (TGA) as a measurement instrument to heat the thermoplastic elastomer composition at a rate of temperature rise of 10°C/min; and measuring a temperature at which the weight loss reaches 5% of the initial weight.

The thermoplastic elastomer composition of the present invention can be used for, for example, various rubber applications by utilizing the rubber elasticity. The use of the thermoplastic elastomer composition of the present invention as a hot-melt adhesive or an additive contained therein is preferable, because the heat resistance and the recyclability can be improved. The thermoplastic elastomer composition of the present invention can be used preferably for applications such as hot-melt adhesives or additives contained therein, automotive rubber components, hoses, belts, sheets, antivibration rubbers, rollers, lining, rubber-lined cloth, sealing materials, gloves, fenders, rubbers for medical applications (syringe gaskets, tubes, and catheters), gaskets (for home appliances and for architectural applications), asphalt modifiers, hot-melt adhesives, boots, grips, toys, shoes, sandals, keypads, gears, PET bottle cap liners, rubber components for printer, sealing materials, paint and coating materials, and printing inks.

Specific examples of the above-described automotive rubber components include tire portions such as tread, carcass, sidewall, inner-liner, under-tread, and belt portions of tires; radiator grilles, side molding, garnishes (pillar, rear, and cowl top), aero parts (airdams and spoilers), wheel covers, weather strips, cowbelt grilles, air outlet louvers, air scoops, hood bulges, parts of ventilation ports, barrier parts (overfenders, side-seal panels, molding (window, hood, and door belt)), marks in the exterior; parts for interiors and window frames such as weather strips for doors, lights, and wipers, glass runs, and glass run channels; air duct hoses, radiator hoses, and brake hoses; parts for lubricating oil systems such as crankshaft seals, valve stem seals, head cover gaskets, A/T oil cooler hoses, transmission oil seals, P/S hoses, and P/S oil seals; parts for fuel systems such as fuel hoses, emission control hoses, inlet filler hoses, and diaphragms; antivibration parts such as engine mounts and in-tank pump mounts; boots such as CVJ boots and rack and pinion boots; air conditioning parts such as A/C hoses and A/C seals; parts for belts such as timing belts and belts for auxiliaries; sealers such as windshield sealers, vinyl plastisol sealers, anaerobic sealers, body sealers, and spot weld sealers; and the like.

In addition, when the thermoplastic elastomer composition of the present invention is contained as a rubber modifier, for example, an anti-flowing agent in a resin or rubber that undergoes cold flow at room temperature, the flow during extrusion and cold flow can be prevented.

The thermoplastic elastomer composition of the present invention can be made to have a sufficiently high level of tear strength and achieve a sufficiently high level of tensile strength such as strength at break. Note that it is possible to cause the thermoplastic elastomer composition to exert necessary properties depending on an application (for example, properties such as self-repairing properties), as appropriate, by changing the constitution, as appropriate. Changing the constitution, as appropriate, as described above makes it possible to cause the thermoplastic elastomer composition to exert, as appropriate, necessary properties depending on an application of the thermoplastic elastomer composition in a balanced manner. Hence, when the thermoplastic elastomer composition is used for any of the above-described various applications, it is preferable to use the thermoplastic elastomer composition, with the types of components (constitution) in the composition being changed, as appropriate, considering the necessary properties depending on the application.

Hereinabove, the thermoplastic elastomer composition of the present invention is described. Next, description is provided for a method which can be preferably used as a method for producing the above-described thermoplastic elastomer composition of the present invention.

A method preferably usable as a method for producing a thermoplastic elastomer composition of the present invention preferably comprises:
a first step of mixing an organically modified clay into an elastomeric polymer (E) having a functional group to obtain a mixture; and
a second step of adding a raw material compound (M) that reacts with the functional group to the mixture, and causing a reaction between the elastomeric polymer (E) having a functional group and the raw material compound (M) to form an elastomer component, thereby obtaining a thermoplastic elastomer composition containing the elastomer component and the organically modified clay, wherein
the elastomeric polymer (E) and the raw material compound (M) are selected and used such that a combination of the elastomeric polymer (E) and the raw material compound (M) used in the reaction is any one of: a combination (I) of a maleic anhydride-modified elastomeric polymer (E1), and at least one compound (M1) among hydrocarbon compounds each having two or more substituents of at least one type selected from hydroxy groups, thiol groups, and amino groups; a combination (II) of a hydroxy group-containing elastomeric polymer (E2) and a compound (M2) having two or more substituents of at least one type selected from carboxy groups, alkoxysilyl groups, and isocyanate groups; a combination (III) of a carboxy group-containing elastomeric polymer (E3) and a compound (M3) having two or more substituents of at least one type selected from hydroxy groups, thiol groups, and amino groups; a combination (IV) of an amino group-containing elastomeric polymer (E4) and a compound (M4) having two or more substituents of at least one type selected from carboxy groups, epoxy groups, alkoxysilyl groups, and isocyanate groups; a combination (V) of an alkoxysilyl group-containing elastomeric polymer (E5) and a compound (M5) having two or more substituents of at least one type selected from hydroxy groups, carboxy groups, and amino groups; and a combination (VI) of an epoxy group-containing elastomeric polymer (E6) and a compound (M6) having two or more substituents of at least one type selected from thiol groups and amino groups,
in the first step, the organically modified clay is mixed such that an amount of the organically modified clay contained in the thermoplastic elastomer composition is 20 parts by mass or less relative to 100 parts by mass of the elastomer component formed by the reaction between the elastomeric polymer (E) and the raw material compound (M), and
the thermoplastic elastomer composition is the above-described thermoplastic elastomer composition of the present invention.

### (First Step)

The first step is a step of mixing an elastomeric polymer having a functional group and the organically modified clay to obtain a mixture.

Here, the "elastomeric polymer (E) having a functional group" used in the first step is selected and used from among the above-described elastomeric polymers (E1) to (E6) as appropriate according to a target design (the type of the compound (M1) to (M6) used) in order to prepare the above-described reaction product (I) to (VI). Note that the present invention uses the elastomeric polymer having a functional group selected in association with the raw material compound for use in the second step such that the combination of the elastomeric polymer having a functional group and the raw material compound used in the reaction satisfies the condition of any one of the above combinations (I) to (VI).

These elastomeric polymers (E1) to (E6) are the same as those described for the foregoing thermoplastic elastomer composition of the present invention. Further, the organically modified clay used in the first step is the same as the organically modified clay described for the foregoing thermoplastic elastomer composition of the present invention (its preferable ones are also the same).

Moreover, in the first step, the elastomeric polymer having a functional group and the organically modified clay are mixed together to obtain the mixture. In this regard, as for the addition of the organically modified clay to obtain the mixture, it is preferable to add the organically modified clay after the elastomeric polymer having a functional group is plasticized in advance, so that the organically modified clay can be sufficiently dispersed.

A method for plasticizing the elastomeric polymer having a functional group as mentioned above is not particularly limited, but it is possible to employ, as appropriate, a mastication method or the like using rolls, a kneader, an extruder, an all-purpose mixer, or the like at temperature at which the elastomeric polymer can be plasticized (for example, about 100 to 250°C) . The conditions such as temperature for plasticizing the elastomeric polymer (E) are not particularly limited, but may be set, as appropriate, according to the type of the contained component (for example, the type of the elastomeric polymer (E)) or the like.

Then, in this mixture preparation step, it is preferable to mix the elastomeric polymer (E) having a functional group and the organically modified clay together by using the organically modified clay at such a ratio that the amount of the organically modified clay contained in the finally obtained thermoplastic elastomer composition is 20 parts by mass or less (more preferably 0.1 to 10 parts by mass, further preferably 0.5 to 5 parts by mass, and particularly preferably 1 to 3 parts by mass) relative to 100 parts by mass of the elastomer component formed by the reaction between the elastomeric polymer (E) and the raw material compound (M) . If the amount of the organically modified clay contained exceeds the upper limit, the cross-linking is so strong that the tear strength tends to decrease rather. Meanwhile, if the amount of the organically modified clay contained is less than the lower limit, the amount of the clay is so small that the effects obtained by the use of the organically modified clay tend to decrease.

In addition, the amount of the organically modified clay contained in the mixture is preferably 20 parts by mass or less, more preferably 0.5 to 5 parts by mass, and further preferably 1 to 3 parts by mass relative to 100 parts by mass of the elastomeric polymer (E). If the amount of the clay contained is less than the lower limit, the amount of the organically modified clay is so small that the effects obtained by using the organically modified clay tend to decrease. Meanwhile, if the amount of the clay contained exceeds the upper limit, the cross-linking is so strong that the tear strength tends to decrease rather. Note that when the organically modified clay is contained in such an amount, the amount of the organically modified clay contained in the finally obtained thermoplastic elastomer composition has a value within the above-described range.

Moreover, as for the amount of the organically modified clay used for forming the mixture, the organically modified clay is preferably contained at such a ratio that the amount of the organically modified clay is 0.01 g to 2.0 g (more preferably 0.02 to 1.0 g) relative to 1 mmol of the functional group in the elastomeric polymer (E) (a maleic anhydride group, a hydroxy group, a carboxy group, an amino group, an alkoxysilyl group, or an epoxy group in the elastomeric polymer (E1) to (E6)). If the ratio of the organically modified clay to the functional group is less than the lower limit, the amount of the clay is so small that the effects tend to decrease. Meanwhile, if the ratio exceeds the upper limit, the cross-linking is so strong that the tear strength tends to decrease rather. Note that when the organically modified clay is contained within such a range of ratio, the organically modified clay contained in the mixture is efficiently delaminated, so that the single-layered clay can be produced efficiently, and the clay tends to achieve a higher level of dispersibility.

The mixing method for obtaining the mixture is not limited to a particular one, but any publicly known method or the like can be employed as appropriate. For example, it is possible to employ a method of mixing with rolls, a kneader, an extruder, an all-purpose mixer, or the like.

Here, from the viewpoint of enhancing the flowability and the mechanical strength, the mixture may further contain an α-olefin-based resin having no chemical-bond cross-linking moiety, a paraffin oil, a styrene block copolymer having no chemical-bond cross-linking moiety, and so on. These α-olefin-based resin having no chemical-bond cross-linking moiety, paraffin oil, and styrene block copolymer having no chemical-bond cross-linking moiety are respectively the same as the α-olefin-based resin having no chemical-bond cross-linking moiety, the paraffin oil, and the styrene block copolymer having no chemical-bond cross-linking moiety described for the foregoing thermoplastic elastomer composition of the present invention (their preferable ones are also the same).

Then, when the mixture further contains the α-olefin-based resin having no chemical-bond cross-linking moiety, the paraffin oil, and/or the styrene block copolymer having no chemical-bond cross-linking moiety, an order of addition of the elastomeric polymer (E), the organically modified clay, and the additive component (s) such as the α-olefin-based resin having no chemical-bond cross-linking moiety, the paraffin oil, and/or the styrene block copolymer having no chemical-bond cross-linking moiety is not limited to a particular order. However, from the viewpoint of more improving the dispersibility of the organically modified clay, it is preferable to prepare a mixture precursor containing the elastomeric polymer (E) and the additive component(s) (the α-olefin-based resin, the paraffin oil, and/or the styrene block copolymer having no chemical-bond cross-linking moiety), and thereafter to add the organically modified clay to the precursor.

Then, when the mixture contains the α-olefin-based resin (α-olefin-based resin having no chemical-bond cross-linking moiety), the amount of the α-olefin-based resin contained is preferably 250 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the elastomer component. If the amount of the α-olefin-based resin contained exceeds the upper limit, the mechanical properties (tensile strength at break and compression set) tend to decrease. Meanwhile, if the amount of the α-olefin-based resin contained is less than the lower limit, the flowability tends to decrease. Here, the amount of the α-olefin-based resin contained in the mixture is preferably 250 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the elastomeric polymer (E). If the amount of the α-olefin-based resin contained is less than the lower limit, the mechanical properties (tensile strength at break and compression set) tend to decrease. Meanwhile, if the amount of the α-olefin-based resin contained is less than the lower limit, the flowability tends to decrease.

When the mixture contains the paraffin oil, the amount of the paraffin oil contained is preferably 600 parts by mass or less, more preferably 10 to 600 parts by mass, further preferably 50 to 550 parts by mass, particularly preferably from 75 to 500 parts, and most preferably 100 to 400 parts by mass relative to 100 parts by mass of the elastomer component. When the mixture contains the styrene block copolymer having no chemical-bond cross-linking moiety, the amount of the styrene block copolymer contained is preferably 400 parts by mass or less, more preferably 10 to 400 parts by mass, further preferably 15 to 350 parts by mass, particularly preferably 20 to 300 parts, and most preferably 30 to 250 parts by mass relative to 100 parts by mass of the elastomer component.

Furthermore, unless the object of the present invention is not impaired, the mixture may further contain, depending on an application or the like of the finally obtained thermoplastic elastomer composition, an additional component(s) such as various kinds of additives including other polymers besides the elastomer component, the α-olefin-based resin and the styrene block copolymer, reinforcing agents (bulking agents), bulking agents to which amino groups are introduced (hereinafter, simply referred to as "amino group-introduced bulking agent"), amino group-containing compounds other than the amino group-introduced bulking agents, compounds containing metal elements (hereinafter, simply referred to as "metal salts"), maleic anhydride-modified polymers, anti-aging agents, antioxidants, pigments (dyes), plasticizers, thioxotropy-imparting agents, ultraviolet absorbers, flame retardants, solvents, surfactants (including leveling agents), dispersing agents, dehydrating agents, corrosion inhibitors, tackiness agents, antistats, fillers, and the like. When the mixture contains such an additional component, the component can be contained as appropriate in the finally obtained thermoplastic elastomer composition. Here, these additives and the like are not particularly limited, and commonly used ones (known ones) can be used, as appropriate. Then, as these additives and the like, those described above for the thermoplastic elastomer composition of the present invention may be used as appropriate.

Moreover, when an additional component is a polymer or a reinforcing agent (bulking agent), an amount of the additional component contained is preferably 500 parts by mass or less and more preferably 20 to 400 parts by mass relative to 100 parts by mass of the elastomer component. If the amount of the additional component contained is less than the lower limit, the effects obtained by the use of the additional component tend not to be expressed sufficiently. Meanwhile, if the amount of the additional component contained exceeds the upper limit, the effects of the elastomer serving as a substrate tend to be less influential, so that physical properties tend to deteriorate, although it depends on the type of the component used.

Meanwhile, when the additional components are the other additives (when the additional components are other than the polymers and reinforcing materials (bulking agents)), the amount of the additional components contained is preferably 20 parts by mass or less, and more preferably 0.1 to 10 parts by mass relative to 100 parts by mass of the elastomer component. If the amount of the additional components contained is less than the lower limit, the effect of the use of the additional components tends to be expressed insufficiently. Meanwhile, if the amount of the additional components contained exceeds the upper limit, the reaction of the elastomer serving as the substrate is adversely affected, so that physical properties tend to be lowered rather.

### (Second Step)

The second step is a step of adding a raw material compound (M) that reacts with the functional group to the mixture and causing a reaction between the elastomeric polymer (E) having a functional group and the raw material compound (M) to form an elastomer component, thereby obtaining a thermoplastic elastomer composition containing the elastomer component and the organically modified clay.

The "raw material compound (M) " is selected and used from among the above-described compounds (M1) to (M6) as appropriate according to the target design (the type of the elastomeric polymer (E) used) in order to prepare the above-described reaction product (I) to (VI). Note that, in the present invention, the reaction product (I) to (VI) can be prepared by selecting the elastomeric polymer having a functional group for use, in association with the elastomeric polymer (E), such that the combination of the elastomeric polymer having a functional group and the raw material compound used in the reaction satisfies the condition of any one of the above combinations (I) to (VI).

The compounds (M1) to (M6) as the raw material compound (M) are the same as those described above. Note that, depending on the type of the functional group of the elastomeric polymer (E), the raw material compound (M) may be a compound that forms a hydrogen-bond cross-linkable moiety upon a reaction with the functional group or a compound that forms both a hydrogen-bond cross-linkable moiety and a covalent-bond cross-linking moiety upon a reaction with the functional group.

Here, the compound that forms a hydrogen-bond cross-linkable moiety upon a reaction with the functional group is not particularly limited as long as it falls under the compounds (M1) to (M6). For example, however, a compound capable of introducing a nitrogen-containing heterocycle can be preferably used. Such a compound may be a compound (with the nitrogen-containing heterocycle having a substituent) in which a substituent (a substituent in the compound (M1) to (M6): a hydroxy group, a thiol group, an amino group, or the like) that reacts with the functional group in the elastomeric polymer (E) is bonded to the nitrogen-containing heterocycle. As the compound that forms a hydrogen-bond cross-linkable moiety, it is possible to use a compound that forms both a hydrogen-bond cross-linkable moiety and a covalent-bond cross-linking moiety (a compound capable of introducing a hydrogen-bond cross-linkable moiety and a covalent-bond cross-linking moiety simultaneously) (in this regard, a side chain having both a hydrogen-bond cross-linkable moiety and a covalent-bond cross-linking moiety can be said to be a preferred embodiment of the side chain having a hydrogen-bond cross-linkable moiety) .

In addition, the compound that forms a hydrogen-bond cross-linkable moiety, usable as the compound (M1) to (M6), is not particularly limited, and it is possible to select and use any of suitable compounds as appropriate according to the type of the side chain (the design of the side chain (a) or the side chain (a')) in the target polymer. Among them, however, from the viewpoint of obtaining higher reactivity, the compound is preferably any of triazole, pyridine, thiadiazole, imidazole, isocyanurate, triazine, and hydantoin each having the substituent described in the compound (M2) to (M6), is further preferably any of triazole, isocyanurate, and triazine each having the substituent, and is particularly preferably triazole having the substituent. Examples of the triazole, pyridine, thiadiazole, imidazole, and hydantoin each of which may have the substituent include 4H-3-amino-1,2,4-triazole, aminopyridine, aminoimidazole, aminotriazine, aminoisocyanurate, hydroxypyridine, hydroxyethyl isocyanurate, and the like.

Moreover, as the compound (M1) to (M6), a compound capable of forming a covalent-bond cross-linking moiety (a compound that forms a covalent bond) upon a reaction with the functional group in the elastomeric polymer (E) may be used as needed together with the aforementioned compound that forms a hydrogen-bond cross-linkable moiety. Preferably usable ones as such a compound capable of forming a covalent-bond cross-linking moiety are the same as those described for the "compound capable of forming a covalent-bond cross-linking moiety (compound that forms a covalent bond) " in the foregoing thermoplastic elastomer composition of the present invention (its preferable ones are also the same).

Moreover, as the compound (M1) to (M6), it is also possible to use a compound that forms both a hydrogen-bond cross-linkable moiety and a covalent-bond cross-linking moiety (a compound capable of introducing both a hydrogen-bond cross-linkable moiety and a covalent-bond cross-linking moiety simultaneously) (in this regard, a side chain having both a hydrogen-bond cross-linkable moiety and a covalent-bond cross-linking moiety can be said to be a preferred embodiment of the side chain having a covalent-bond cross-linkable moiety).

From the viewpoint of resistance to compression set, the compound that forms both a hydrogen-bond cross-linkable moiety and a covalent-bond cross-linking moiety is preferably tris(hydroxyethyl) isocyanurate, sulfamide, or polyether polyol, more preferably tris(hydroxyethyl) isocyanurate or sulfamide, and further preferably tris(hydroxyethyl) isocyanurate. In addition, as the compound (M1) to (M6), it is preferable to use a compound that forms both a hydrogen-bond cross-linkable moiety and a covalent-bond cross-linking moiety (a compound capable of introducing both a hydrogen-bond cross-linkable moiety and a covalent-bond cross-linking moiety simultaneously) upon a reaction with the functional group in the elastomeric polymer (E), because both the hydrogen-bond cross-linkable moiety and the covalent-bond cross-linking moiety can be introduced more efficiently into the composition. As such a compound that forms both a hydrogen-bond cross-linkable moiety and a covalent-bond cross-linking moiety, the heterocycle-containing polyol, the heterocycle-containing polyamine, and the heterocycle-containing polythiol can be preferably used. Among them, tris(hydroxyethyl) isocyanurate is particularly preferable.

In addition, the amount of the raw material compound(s) (M) (the compound(s) (M1) to (M6)) added (the total amount of them: when only one compound is used, the amount of the one compound) is not particularly limited. In the case where active hydrogen of an amine, an alcohol, or the like is contained in the compound, the amount of the raw material compound (M) is such that the amount of the active hydrogen of an amine, an alcohol, or the like in the compound is preferably 20 to 250% by mole, more preferably 50 to 150% by mole, and further preferably 80 to 120% by mole relative to 100% by mole of the functional group in the elastomeric polymer (E) . If the amount added is less than the lower limit, the amount of the side chain introduced is so small that it is difficult to obtain a sufficiently high level of cross-linking density, and the tensile strength and the tear strength tend to decrease. Meanwhile, if the amount added exceeds the upper limit, the amount of the compound used is so large that many branches tend to be formed, and the cross-linking density tends to be rather lowered.

In addition, regarding the amount of the raw material compound (s) (M) (the compound (s) (M1) to (M6)) added, the total amount thereof is preferably 0.1 to 30 parts by mass, more preferably 0.1 to 10 parts by mass, further preferably 0.3 to 7 parts by mass, and particularly preferably 0.5 to 5.0 parts by mass relative to 100 parts by mass of the polymer (the elastomeric polymer (E)) in the mixture. If the amount of the raw material compound (s) (M) (the compound (s) (M1) to (M6)) added (the amount based on parts by mass) is less than the lower limit, the amount is so small that sufficiently high cross-linking density may not be obtained, and desired physical properties tend not to be expressed. Meanwhile, if the amount exceeds the upper limit, the amount is so large that many branches tend to be formed, and the cross-linking density tends to be lowered.

When both the compound that forms a hydrogen-bond cross-linkable moiety and the compound capable of forming a covalent-bond cross-linking moiety are used as the raw material compounds (M) (the compounds (M1) to (M6)), the order of addition of these compounds is not particularly limited, and either one may be added first. In addition, when both the compound that forms a hydrogen-bond cross-linkable moiety and the compound capable of forming a covalent-bond cross-linking moiety are used, the compound that forms a hydrogen-bond cross-linkable moiety may be reacted with part of the functional groups in the elastomeric polymer (E). This also makes it possible to form a covalent-bond cross-linking moiety by a reaction of unreacted cyclic acid anhydride groups (cyclic acid anhydride groups not reacted) with the compound capable of forming a covalent-bond cross-linking moiety. The part mentioned here is preferably 1% by mole to 50% by mole, both inclusive, relative to 100% by mole of the functional groups in the elastomeric polymer (E) . Within this range, the effect of the introduction of the group derived from the compound that forms a hydrogen-bond cross-linkable moiety (for example, a nitrogen-containing heterocycle or the like) tends to be sufficiently expressed in the obtained elastomeric polymer (B), and the recyclability thereof tends to be further improved. Note that the compound capable of forming a covalent-bond cross-linking moiety is preferably reacted with the functional groups in the elastomeric polymer (E) such that a suitable number of cross-linkages (for example, 1 to 3 in one molecule) can be formed by the covalent bonds.

Note that, as for the elastomeric polymer (E) and the raw material compound (M) for use in the reaction, it is necessary to select and use suitable components from the following elastomeric polymers (E) and the following raw material compounds (M) as appropriate such that the combination is any one of: the combination (I) of a maleic anhydride-modified elastomeric polymer (E1), and at least one compound (M1) among hydrocarbon compounds each having two or more substituents of at least one type selected from hydroxy groups, thiol groups, and amino groups; the combination (II) of a hydroxy group-containing elastomeric polymer (E2) and a compound (M2) having two or more substituents of at least one type selected from carboxy groups, alkoxysilyl groups, and isocyanate groups; the combination (III) of a carboxy group-containing elastomeric polymer (E3) and a compound (M3) having two or more substituents of at least one type selected from hydroxy groups, thiol groups, and amino groups; the combination (IV) of an amino group-containing elastomeric polymer(E4) and a compound (M4) having two or more substituents of at least one type selected from carboxy groups, epoxy groups, alkoxysilyl groups, and isocyanate groups; the combination (V) of an alkoxysilyl group-containing elastomeric polymer (E5) and a compound (M5) having two or more substituents of at least one type selected from hydroxy groups, carboxy groups, and amino groups; and the combination (VI) of an epoxy group-containing elastomeric polymer (E6) and a compound (M6) having two or more substituents of at least one type selected from thiol groups and amino groups. This makes it possible to form the elastomer component comprising any one of the reaction products (I) to (VI).

Moreover, upon a reaction between the polymer (E) and the raw material compound (M), the functional group in the polymer (E) and the substituent in the raw material compound (M) react with each other and are chemically bonded. A temperature condition for the reaction between the polymer (E) and the raw material compound (M) is not particularly limited, but may be adjusted, depending on the type of the compound, the type of the polymer (E), and the like, to any temperature in a range at which the compound and the polymer can react with each other. In the above range, the temperature condition is more preferably 100 to 250°C, and further preferably 120 to 230°C from the viewpoint that they can be softened to enter a reaction instantaneously.

Such a reaction between the polymer (E) and the raw material compound (M) forms at least a hydrogen-bond cross-linkable moiety at a site where the compound that forms a hydrogen-bond cross-linkable moiety has reacted with the polymer (E). Hence, it is possible to cause a side chain of the polymer to contain a hydrogen-bond cross-linkable moiety (a moiety having a carbonyl-containing group and/or a nitrogen-containing heterocycle, and more preferably a moiety having a carbonyl-containing group and a nitrogen-containing heterocycle).

In addition, the reaction forms at least a covalent-bond cross-linking moiety at a site where the compound capable of forming a covalent-bond cross-linking moiety has reacted with the polymer (E) . Hence, a side chain of the polymer can be formed to contain a covalent-bonding cross-linking portion (the side chain (b) or the side chain (c)).

Note that groups (structures) and the like of side chains in such polymers can be identified by ordinarily used analytic techniques such as NMR or IR spectroscopy.

Thus, when the polymer (E) and the raw material compound (M) are used in any of the foregoing combinations (I) to (VI) and are reacted with each other, it is possible to form at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below.

In this way, the thermoplastic elastomer composition containing the elastomer component and the organically modified clay can be obtained by forming the elastomer component through a reaction between the elastomeric polymer (E) and the raw material compound (D). The elastomer component thus formed is a reaction product obtained by using the polymer (E) and the raw material compound (M) in any of the foregoing combinations (I) to (VI), and therefore is any of the foregoing reaction products (I) to (VI). For this reason, the thermoplastic elastomer composition obtained in the above method is a thermoplastic elastomer composition comprising at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below, wherein
the elastomer component is at least one reaction product selected from the group consisting of:
a reaction product (I) of a maleic anhydride-modified elastomeric polymer with at least one compound among hydrocarbon compounds each having two or more substituents of at least one type selected from hydroxy groups, thiol groups, and amino groups;
a reaction product (II) of a hydroxy group-containing elastomeric polymer with a compound having two or more substituents of at least one type selected from carboxy groups, alkoxysilyl groups, and isocyanate groups;
a reaction product (III) of a carboxy group-containing elastomeric polymer with a compound having two or more substituents of at least one type selected from hydroxy groups, thiol groups, and amino groups;
a reaction product (IV) of an amino group-containing elastomeric polymer with a compound having two or more substituents of at least one type selected from carboxy groups, epoxy groups, alkoxysilyl groups, and isocyanate groups;
a reaction product (V) of an alkoxysilyl group-containing elastomeric polymer with a compound having two or more substituents of at least one type selected from hydroxy groups, carboxy groups, and amino groups; and
a reaction product (VI) of an epoxy group-containing elastomeric polymer with a compound having two or more substituents of at least one type selected from thiol groups and amino groups, and
the composition further comprises an organically modified clay, a content ratio of which is 20 parts by mass or less relative to 100 parts by mass of the elastomer component.

Note that, in the above-described method for producing a thermoplastic elastomer composition of the present invention, the organically modified clay is dispersed in the elastomeric polymer (E) in advance in the first step. Thus, the functional groups in the polymer (E) and the organically modified clay interact with each other, so that the clay is delaminated into layers (note that the organically modified clay is one in which organic substance such as an ammonium salt is present between the layers and interaction of the organic substance with the functional groups facilitates the delamination of the clay into layers) and consequently the organically modified clay can be dispersed sufficiently. After that, the raw material compound (which functions as a cross-linking agent forming cross-linking, and hereinafter which is sometimes referred to as a "cross-linking agent") is added in the second step. Thus, the cross-linking agent reacts with the functional groups, and at least hydrogen-bond cross-linkable moieties (for example, carboxylic acid groups, or the like) are generated in the system. The hydrogen-bond cross-linkable moieties thus formed interact with the organically modified clay through hydrogen bonding, and thereby allow the organically modified clay to be dispersed even more uniformly in the elastomer. For this reason, the thermoplastic elastomer composition obtained in the present invention can be such that the single-layered organically modified clay is contained in the composition. Moreover, in the present invention, the obtained thermoplastic elastomer composition can be such that, when randomly selected three or more measurement points in a size of 5.63 µm² on a surface of the thermoplastic elastomer composition are observed under a transmission electron microscope (TEM), the single-layered clay is present at 50% or more (more preferably 70% or more, further preferably 80 to 100%, and particularly preferably 85 to 100%) of all the clay based on the number in all the measurement points . If the ratio of such a single-layered clay present is less than the lower limit, the elongation at break and the strength at break tend to decrease. The presence of such a clay in the single-layered morphology can be confirmed by observing the surface of the composition under a transmission electron microscope (TEM).

In addition, in the present invention, it is also possible to, for example, separately produce a thermoplastic elastomer composition containing an elastomeric polymer (A) as an elastomer component and a thermoplastic elastomer composition containing an elastomeric polymer (B) as an elastomer component, followed by mixing to prepare an thermoplastic elastomer composition containing the elastomeric polymers (A) and (B) as elastomer components. Meanwhile, when a thermoplastic elastomer composition containing a combination of the elastomeric polymers (A) and (B) as elastomer components is produced, it is also possible to cause a desired property to be exhibited by changing the ratio of the elastomeric polymer (A) and the elastomeric polymer (B), as appropriate, to change, as appropriate, the ratio between the hydrogen-bond cross-linkable moieties and the covalent-bond cross-linking moieties present in the composition and the like.

Hereinabove, the method preferably usable as the method for producing a thermoplastic elastomer composition of the present invention is described. However, the method for producing a thermoplastic elastomer composition of the present invention is not limited to the above-described method, but any other method may be employed as appropriate. Examples of such other methods employable include a method including forming a mixture by adding the elastomeric polymer, the raw material compound, and the organically modified clay at one time, and allowing the elastomeric polymer and the raw material compound to react with each other in the mixture to obtain a thermoplastic elastomer composition, a method including forming a mixture of the elastomeric polymer and the raw material compound, allowing the elastomeric polymer and the raw material compound to react with each other in the mixture to form an elastomer component, and thereafter adding the organically modified clay to the mixture containing the elastomer component, and any other method as appropriate.

### [Examples]

Hereinafter, the present invention is described more specifically on the basis of Examples and Comparative Examples; however, the present invention is not limited to Examples below.

First, methods for evaluating properties of thermoplastic elastomer compositions obtained in Examples and Comparative Examples are described.

### <Method for Preparing Sheets for Forming Test Pieces for Use in Tests>

A 2 mm thick sheet (a thickness of 2 mm, a length of 150 mm, and a width of 150 mm) was formed by using 42 g of each of thermoplastic elastomer compositions obtained in Examples and Comparative Examples. Specifically, the thermoplastic elastomer was put in a mold with a thickness of 2 mm, a length of 150 mm, and a width of 150 mm, which had been heated under conditions of a temperature of 200°C and a preheating time of 3 minutes, was pressed by a heating press under conditions of a temperature of 200°C, a pressure of 18 MPa, and a pressing time of 5 minutes, then was pressed by a water cooling press under conditions of a pressure of 18 MPa and a pressing time of 2 minutes, and finally was taken out from the mold as the sheet.

### <Measurement of Strength at Break and Modulus at 100%>

Using each of the 2 mm thick sheets (a thickness of 2 mm, a length of 150 mm, and a width of 150 mm) obtained as described above, test pieces in the No. 3 dumbbell shape were formed, and then were subjected to a tensile test at a tensile speed of 500 mm/min according to JIS K6251 (published in 2010) to measure the strength at break (T_{B}) [unit: MPa] and the modulus at 100% (M₁₀₀) [MPa] at room temperature (25°C).

### <Tear Strength>

Using each of the 2 mm thick sheets (a thickness of 2 mm, a length of 150 mm, and a width of 150 mm) obtained as described above, angled test pieces each having a nick of 1 mm were punched out, and then were subjected to a tensile test at a tensile speed of 500 mm/min according to JIS K6252 (published in 2007) to measure the maximum strength [N/cm] at room temperature (25°C) .

### (Example 1)

First, 20 g of a styrene block copolymer (a styrene-ethylene-butylene-styrene block copolymer (SEBS): manufactured by Kraton Corporation under the trade name of "G1633", molecular weight: 400,000 to 500,000, styrene content: 30% by mass) was placed into a pressure kneader, 40 g of a paraffin oil (manufactured by JXTG Nippon Oil & Energy Corporation under the trade name of "Super Oil M Series P500S", kinematic viscosity: 472 mm²/s, Cp value: 68.7%, aniline point: 123°C) was dropwise added to the pressure kneader during kneading under the condition of 200°C, and the styrene-ethylene-butylene-styrene block copolymer and the paraffin oil were mixed together for 1 minute. Thereafter, 10 g of a maleic anhydride-modified ethylene-butene copolymer (maleic EBM: manufactured by Mitsui Chemicals, Inc. under the trade name of "TAFMER MH5040", crystallinity: 4%), 7.5 g of an α-olefin-based resin, that is, an ethylene-butene copolymer (EBM: manufactured by Mitsui Chemicals, Inc. under the trade name of "TAFMER DF7350", crystallinity: 10%, MFR: 35 g/10 min (2.16 kg, 190°C), Mw: 100,000), and 0.0778 g of an anti-aging agent (manufactured by ADEKA Corporation under the trade name of "AO-50") were further added to the pressure kneader, followed by kneading for 2 minutes at temperature of 200°C to obtain a first mixture (a mixture containing the PP and the maleic EBM) . Here, the first mixture was plasticized in the mastication step. Subsequently, 0.01 g of an organically modified clay (manufactured by HOJUN Co., Ltd. under the trade name of "S-VEN WX") was further added to the first mixture in the pressure kneader, followed by kneading for 4 minutes at 200°C to obtain a second mixture.

Next, 0.102 g of pentaerythritol (manufactured by the Nippon Synthetic Chemical Industry Co., Ltd. under the trade name of "Neulizer P") was added to the second mixture in the pressure kneader, followed by mixing for 8 minutes at 200°C to prepare the thermoplastic elastomer composition. Table 1 presents the constitution of the obtained thermoplastic elastomer composition and Table 3 presents data such as property evaluation results thereof.

Note that the elastomeric polymer thus formed is a reaction product of the maleic anhydride-modified ethylene-butene copolymer and the pentaerythritol, and has a side chain formed by the reaction of an acid anhydride group in the maleic anhydride-modified ethylene-butene copolymer with a hydroxy group in the pentaerythritol. Thus, a cross-linking structure containing a carboxylate group is formed at a side chain (the side chain is a side chain containing both a hydrogen-bond cross-linkable moiety and a covalent-bond cross-linking moiety).

### (Example 2)

The thermoplastic elastomer composition was prepared in the same manner as in Example 1 except that 10 g of hydroxy-terminated polybutadiene (manufactured by Idemitsu Kosan Co., Ltd. under the trade name of "Polybd R-45HT", hydroxy equivalent: 1,400) was used instead of the use of 10 g of the maleic anhydride-modified ethylene-butene copolymer (maleic EBM), 0.597 g of 2,6-pyridinedicarboxylic acid (manufactured by AIR WATER INC. under the trade name of "2,6-pyridinedicarboxylic acid") was used instead of the use of 0.102 g of the pentaerythritol (manufactured by the Nippon Synthetic Chemical Industry Co., Ltd. under the trade name of "Neulizer P"), and the amount of the anti-aging agent (manufactured by ADEKA Corporation under the trade name of "AO-50") used was changed from 0.0778 g to 0.0782 g. Table 1 presents the constitution of the obtained thermoplastic elastomer composition and Table 3 presents data such as property evaluation results thereof.

Note that the elastomeric polymer thus formed is a reaction product of the hydroxy-terminated polybutadiene with the 2,6-pyridinedicarboxylic acid, and has a side chain formed by the reaction of the hydroxy group at a terminal of the polybutadiene with a carbonyl group in the 2,6-pyridinedicarboxylic acid. Thus, a cross-linking structure containing a pyridine ring and a carboxylate group is formed at a side chain (the side chain is a side chain containing both a hydrogen-bond cross-linkable moiety and a covalent-bond cross-linking moiety).

### (Example 3)

The thermoplastic elastomer composition was prepared in the same manner as in Example 1 except that 10 g of carboxy group-containing polyisoprene (manufactured by KURARAY CO., LTD. under the trade name of "LIR-410", carboxy equivalent: 4000) was used instead of the use of 10 g of the maleic anhydride-modified ethylene-butene copolymer (maleic EBM), 0.218 g of tris(hydroxyethyl) isocyanurate (manufactured by NISSEI CORPORATION under the trade name of "TANAC") was used instead of the use of 0.102 g of the pentaerythritol (manufactured by the Nippon Synthetic Chemical Industry Co., Ltd. under the trade name of "Neulizer P"), 15 g of high-density Polyethylene (HDPE: manufactured by Japan Polyethylene Corporation under the trade name of "HJ590N") was used instead of the use of 7.5 g of the ethylene-butene copolymer (EBM: manufactured by Mitsui Chemicals, Inc. under the trade name of "TAFMER DF7350"), and the amount of the anti-aging agent (manufactured by ADEKA Corporation under the trade name of "AO-50") used was changed from 0.0778 g to 0.0853 g. Table 1 presents the constitution of the obtained thermoplastic elastomer composition and Table 3 presents data such as property evaluation results thereof.

Note that the elastomeric polymer thus formed is a reaction product of the carboxy group-containing polyisoprene with the tris(hydroxyethyl) isocyanurate, and has a side chain formed by the reaction of a carboxy group in the polyisoprene with a hydroxy group in the tris (hydroxyethyl) isocyanurate. Thus, a cross-linking structure containing an isocyanurate ring and a carboxylate group is formed at a side chain (the side chain is a side chain containing both a hydrogen-bond cross-linkable moiety and a covalent-bond cross-linking moiety).

### (Example 4)

The thermoplastic elastomer composition was prepared in the same manner as in Example 3 except that 0.085 g of pentaerythritol (manufactured by the Nippon Synthetic Chemical Industry Co., Ltd. under the trade name of "Neulizer P") was used instead of the use of 0.218 g of the tris(hydroxyethyl) isocyanurate (manufactured by NISSEI CORPORATION under the trade name of "TANAC"), and the amount of the anti-aging agent (manufactured by ADEKA Corporation under the trade name of "AO-50") used was changed from 0.0853 g to 0.0852 g. Table 1 presents the constitution of the obtained thermoplastic elastomer composition and Table 3 presents data such as property evaluation results thereof.

Note that the elastomeric polymer thus formed is a reaction product of the carboxy group-containing polyisoprene with the pentaerythritol, and has a side chain formed by the reaction of a carboxy group in the polyisoprene with a hydroxy group in the pentaerythritol. Thus, a cross-linking structure containing a carboxylate group and a hydroxy group is formed at a side chain (the side chain is a side chain containing both a hydrogen-bond cross-linkable moiety and a covalent-bond cross-linking moiety).

### (Example 5)

The thermoplastic elastomer composition was prepared in the same manner as in Example 3 except that 0.234 g of 2,4-diamino-6-phenyl-1,3,5-triazine (manufactured by NIPPON SHOKUBAI CO., LTD. under the trade name of "Benzoguanamine") was used instead of the use of 0.218 g of the tris (hydroxyethyl) isocyanurate (manufactured by NISSEI CORPORATION under the trade name of "TANAC"). Table 1 presents the constitution of the obtained thermoplastic elastomer composition and Table 3 presents data such as property evaluation results thereof.

Note that the elastomeric polymer thus formed is a reaction product of the carboxy group-containing polyisoprene with the 2,4-diamino-6-phenyl-1,3,5-triazine, and has a side chain formed by the reaction of a carboxy group in the polyisoprene with an amino group (-NH₂) in the 2,4-diamino-6-phenyl-1,3,5-triazine. Thus, a cross-linking structure containing a triazine ring and a bond moiety represented by an amide bond (formula: -CONH-) is formed at a side chain (the side chain is a side chain containing both a hydrogen-bond cross-linkable moiety and a covalent-bond cross-linking moiety).

### (Example 6)

The thermoplastic elastomer composition was prepared in the same manner as in Example 3 except that 0.438 g of tris[(3-mercaptopropionyloxy)-ethyl] isocyanurate (manufactured by SC Organic Chemical Co., Ltd.) was used instead of the use of 0.218 g of the tris(hydroxyethyl) isocyanurate (manufactured by NISSEI CORPORATION under the trade name of "TANAC"), 7.5 g of an ethylene-butene copolymer (EBM: manufactured by Mitsui Chemicals, Inc. under the trade name of "TAFMER DF7350") was used instead of the use of 15 g of the high-density polyethylene (HDPE: manufactured by Japan Polyethylene Corporation under the trade name of "HJ590N"), and the amount of the anti-aging agent (manufactured by ADEKA Corporation under the trade name of "AO-50") used was changed from 0.0853 g to 0.078 g. Table 1 presents the constitution of the obtained thermoplastic elastomer composition and Table 3 presents data such as property evaluation results thereof.

Note that the elastomeric polymer thus formed is a reaction product of the carboxy group-containing polyisoprene with the tris[(3-mercaptopropionyloxy)-ethyl] isocyanurate, and has a side chain formed by the reaction of a carboxy group in the polyisoprene with a thiol group (-SH) in the tris[(3-mercaptopropionyloxy)-ethyl] isocyanurate. Thus, a cross-linking structure containing an isocyanurate ring and a thioester (a group represented by the formula: -CO-S-) is formed at a side chain (the side chain is a side chain containing both a hydrogen-bond cross-linkable moiety and a covalent-bond cross-linking moiety).

### (Example 7)

The thermoplastic elastomer composition was prepared in the same manner as in Example 1 except that 10 g of an amino group-containing polyethylene imine (manufactured by NIPPON SHOKUBAI CO., LTD. under the trade name of "EPOMIN SP-200", amine value: 18 mmol/g) was used instead of the use of 10 g of the maleic anhydride-modified ethylene-butene copolymer (maleic EBM), 1.504 g of 2,6-pyridinedicarboxylic acid (manufactured by AIR WATER INC. under the trade name of "2,6-pyridinedicarboxylic acid") was used instead of the use of 0.102 g of the pentaerythritol (manufactured by the Nippon Synthetic Chemical Industry Co., Ltd. under the trade name of "Neulizer P"), 15 g of high-density polyethylene (HDPE: manufactured by Japan Polyethylene Corporation under the trade name of "HJ590N") was used instead of the use of 7.5 g of the ethylene-butene copolymer (EBM: manufactured by Mitsui Chemicals, Inc. under the trade name of "TAFMER DF7350"), and the amount of the anti-aging agent (manufactured by ADEKA Corporation under the trade name of "AO-50") used was changed from 0.0778 g to 0.0866 g. Table 1 presents the constitution of the obtained thermoplastic elastomer composition and Table 3 presents data such as property evaluation results thereof.

Note that the elastomeric polymer thus formed is a reaction product of the amino group-containing polyethylene imine with the 2,6-pyridinedicarboxylic acid, and has a side chain formed by the reaction of an amino group in the polyethylene imine with a carboxy group in the 2,6-pyridinedicarboxylic acid. Thus, a cross-linking structure containing a pyridine ring and a bond moiety represented by an amide bond (formula: -CONH-) is formed at a side chain (the side chain is a side chain containing both a hydrogen-bond cross-linkable moiety and a covalent-bond cross-linking moiety).

### (Example 8)

The thermoplastic elastomer composition was prepared in the same manner as in Example 7 except that 1.784 g of tris(2,3-epoxypropyl) isocyanurate (manufactured by Nissan Chemical Industries, Ltd.) was used instead of the use of 1.504 g of the 2,6-pyridinedicarboxylic acid (manufactured by AIR WATER INC. under the trade name of "2,6-Pyridinedicarboxylic acid"), 7.5 g of an ethylene-butene copolymer (EBM: manufactured by Mitsui Chemicals, Inc. under the trade name of "TAFMER DF7350") was used instead of the use of 15 g of the high-density polyethylene (HDPE: manufactured by Japan Polyethylene Corporation under the trade name of "HJ590N"), and the amount of the anti-aging agent (manufactured by ADEKA Corporation under the trade name of "AO-50") used was changed from 0.0866 g to 0.0794 g. Table 1 presents the constitution of the obtained thermoplastic elastomer composition and Table 3 presents data such as property evaluation results thereof.

Note that the elastomeric polymer thus formed is a reaction product of the amino group-containing polyethylene imine with the tris(2,3-epoxypropyl) isocyanurate, and has a side chain formed by the reaction of an amino group in the polyethylene imine with an epoxy group in the tris(2,3-epoxypropyl) isocyanurate. Thus, a cross-linking structure containing an isocyanurate ring, a hydroxy group (-OH group), and an imino group is formed at a side chain (the side chain is a side chain containing both a hydrogen-bond cross-linkable moiety and a covalent-bond cross-linking moiety).

### (Example 9)

The thermoplastic elastomer composition was prepared in the same manner as in Example 1 except that 10 g of alkoxysilyl group-containing polyethylene (manufactured by Mitsubishi Chemical Corporation under the trade name of "LINKLON", alkoxy equivalent: 10,000) was used instead of the use of 10 g of the maleic anhydride-modified ethylene-butene copolymer (maleic EBM), 0.087 g of tris (hydroxyethyl) isocyanurate (manufactured by NISSEI CORPORATION under the trade name of "TANAC") was used instead of the use of 0.102 g of the pentaerythritol (manufactured by the Nippon Synthetic Chemical Industry Co., Ltd. under the trade name of "Neulizer P"), 15 g of high-density polyethylene (HDPE: manufactured by Japan Polyethylene Corporation under the trade name of "HJ590N") was used instead of the use of 7.5 g of the ethylene-butene copolymer (EBM: manufactured by Mitsui Chemicals, Inc. under the trade name of "TAFMER DF7350"), and the amount of the anti-aging agent (manufactured by ADEKA Corporation under the trade name of "AO-50") used was changed from 0.0778 g to 0.0852 g. Table 1 presents the constitution of the obtained thermoplastic elastomer composition and Table 3 presents data such as property evaluation results thereof.

Note that the elastomeric polymer thus formed is a reaction product of the alkoxysilyl group-containing polyethylene with the tris (hydroxyethyl) isocyanurate, and has a side chain formed by the reaction of an alkoxysilyl group in the polyethylene with a hydroxy group in the tris(hydroxyethyl) isocyanurate. Thus, a cross-linking structure containing an isocyanurate ring and a silyloxy bond (-O-Si-O-) is formed at a side chain (the side chain is a side chain containing both a hydrogen-bond cross-linkable moiety and a covalent-bond cross-linking moiety).

### (Example 10)

The thermoplastic elastomer composition was prepared in the same manner as in Example 9 except that 0.034 g of pentaerythritol (manufactured by the Nippon Synthetic Chemical Industry Co., Ltd. under the trade name of "Neulizer P") was used instead of the use of 0.087 g of the tris(hydroxyethyl) isocyanurate (manufactured by NISSEI CORPORATION under the trade name of "TANAC"), and the amount of the anti-aging agent (manufactured by ADEKA Corporation under the trade name of "AO-50") used was changed from 0.0852 g to 0.0851 g. Table 1 presents the constitution of the obtained thermoplastic elastomer composition and Table 3 presents data such as property evaluation results thereof.

Note that the elastomeric polymer thus formed is a reaction product of the alkoxysilyl group-containing polyethylene with the pentaerythritol, and has a side chain formed by the reaction of an alkoxysilyl group in the polyethylene with a hydroxy group in the pentaerythritol. Thus, a cross-linking structure containing a silyloxy bond (-O-Si-O-) and a hydroxy group is formed at a side chain (the side chain is a side chain containing both a hydrogen-bond cross-linkable moiety and a covalent-bond cross-linking moiety).

### (Example 11)

The thermoplastic elastomer composition was prepared in the same manner as in Example 1 except that 10 g of alkoxysilyl group-containing polyethylene (manufactured by Mitsubishi Chemical Corporation under the trade name of "LINKLON") was used instead of the use of 10 g of the maleic anhydride-modified ethylene-butene copolymer (maleic EBM), 0.094 g of 2,4-diamino-6-phenyl-1,3,5-triazine (manufactured by NIPPON SHOKUBAI CO., LTD. under the trade name of "Benzoguanamine") was used instead of the use of 0.102 g of the pentaerythritol (manufactured by the Nippon Synthetic Chemical Industry Co., Ltd. under the trade name of "Neulizer P"), and the amount of the anti-aging agent (manufactured by ADEKA Corporation under the trade name of "AO-50") used was changed from 0.0778 g to 0.0777 g. Table 1 presents the constitution of the obtained thermoplastic elastomer composition and Table 3 presents data such as property evaluation results thereof.

Note that the elastomeric polymer thus formed is a reaction product of the alkoxysilyl group-containing polyethylene with the 2,4-diamino-6-phenyl-1,3,5-triazine, and has a side chain formed by the reaction of an alkoxysilyl group in the polyethylene with an amino group in the 2,4-diamino-6-phenyl-1,3,5-triazine. Thus, a cross-linking structure containing an isocyanurate ring and a silylamino bond is formed at a side chain (the side chain is a side chain containing both a hydrogen-bond cross-linkable moiety and a covalent-bond cross-linking moiety).

### (Example 12)

The thermoplastic elastomer composition was prepared in the same manner as in Example 1 except that 10 g of an epoxy compound of a styrene-butadiene block copolymer (manufactured by DAICEL CORPORATION under the trade name of "EPOFRIEND", epoxy equivalent: 1,000) was used instead of the use of 10 g of the maleic anhydride-modified ethylene-butene copolymer (maleic EBM), 0.936 g of 2,4-diamino-6-phenyl-1,3,5-triazine (manufactured by NIPPON SHOKUBAI CO., LTD. under the trade name of "Benzoguanamine") was used instead of the use of 0.102 g of the pentaerythritol (manufactured by the Nippon Synthetic Chemical Industry Co., Ltd. under the trade name of "Neulizer P"), 15 g of high-density polyethylene (HDPE: manufactured by Japan Polyethylene Corporation under the trade name of "HJ590N") was used instead of the use of 7.5 g of the ethylene-butene copolymer (EBM: manufactured by Mitsui Chemicals, Inc. under the trade name of "TAFMER DF7350"), and the amount of the anti-aging agent (manufactured by ADEKA Corporation under the trade name of "AO-50") used was changed from 0.0778 g to 0.086 g. Table 1 presents the constitution of the obtained thermoplastic elastomer composition and Table 3 presents data such as property evaluation results thereof.

Note that the elastomeric polymer thus formed is a reaction product of the epoxy compound of the styrene-butadiene block copolymer with the 2,4-diamino-6-phenyl-1,3,5-triazine, and has a side chain formed by the reaction of an epoxy group in the epoxy compound with an amino group in the 2,4-diamino-6-phenyl-1,3,5-triazine. Thus, a cross-linking structure containing a triazine ring, a hydroxy group, and an imino bond is formed at a side chain (the side chain is a side chain containing both a hydrogen-bond cross-linkable moiety and a covalent-bond cross-linking moiety).

### (Example 13)

The thermoplastic elastomer composition was prepared in the same manner as in Example 1 except that 10 g of an epoxy compound of a styrene-butadiene block copolymer (manufactured by DAICEL CORPORATION under the trade name of "EPOFRIEND") was used instead of the use of 10 g of the maleic anhydride-modified ethylene-butene copolymer (maleic EBM), 1.75 g of tris[(3-mercaptopropionyloxy)-ethyl] isocyanurate (manufactured by SC Organic Chemical Co., Ltd.) was used instead of the use of 0.102 g of the pentaerythritol (manufactured by the Nippon Synthetic Chemical Industry Co., Ltd. under the trade name of "Neulizer P"), and the amount of the anti-aging agent (manufactured by ADEKA Corporation under the trade name of "AO-50") used was changed from 0.0778 g to 0.0793 g. Table 1 presents the constitution of the obtained thermoplastic elastomer composition and Table 3 presents data such as property evaluation results thereof.

Note that the elastomeric polymer thus formed is a reaction product of the epoxy compound of the styrene-butadiene block copolymer with the tris[(3-mercaptopropionyloxy)-ethyl] isocyanurate, and has a side chain formed by the reaction of an epoxy group in the epoxy compound with an amino group in the tris[(3-mercaptopropionyloxy)-ethyl] isocyanurate. Thus, a cross-linking structure containing a hydroxy group, a thioether bond, and an isocyanurate ring is formed at a side chain (the side chain is a side chain containing both a hydrogen-bond cross-linkable moiety and a covalent-bond cross-linking moiety).

### (Example 14)

The thermoplastic elastomer composition was prepared in the same manner as in Example 1 except that 10 g of hydroxy-terminated polybutadiene (manufactured by Idemitsu Kosan Co., Ltd. under the trade name of "Polybd R-45HT", hydroxy equivalent: 1,400) was used instead of the use of 10 g of the maleic anhydride-modified ethylene-butene copolymer (maleic EBM), 0.672 g of m-xylylene diisocyanate (manufactured by Mitsui Chemicals, Inc.) was used instead of the use of 0.102 g of the pentaerythritol (manufactured by the Nippon Synthetic Chemical Industry Co., Ltd. under the trade name of "Neulizer P"), and the amount of the anti-aging agent (manufactured by ADEKA Corporation under the trade name of "AO-50") used was changed from 0.0778 g to 0.0783 g. Table 1 presents the constitution of the obtained thermoplastic elastomer composition and Table 3 presents data such as property evaluation results thereof.

Note that the elastomeric polymer thus formed is a reaction product of the hydroxy-terminated polybutadiene with the m-xylylene diisocyanate, and has a side chain formed by the reaction of a hydroxy group at a terminal of the polybutadiene with an isocyanate group in the m-xylylene diisocyanate. Thus, a cross-linking structure containing a benzene ring and a urethane bond is formed at a side chain (the side chain is a side chain containing both a hydrogen-bond cross-linkable moiety and a covalent-bond cross-linking moiety).

### (Comparative Examples 1 to 14)

The thermoplastic elastomer compositions for comparison were prepared in the same manners as in Examples 1 to 14, respectively, except that the organically modified clay was not used. Table 2 presents the constitutions of the obtained thermoplastic elastomer compositions and Table 3 presents data such as property evaluation results thereof.

**[Table 1]**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|
| | Maleic Anhydride-Modified Ethylene-Butene Copolymer (Functional Group: Maleic Anhydride Group, Main Chain: EBM) | 100 | - | - | - | - | - | - | - | - | - | - | - | - | - |
| | Hydroxy-terminated Polybutadiene (Functional Group: OH Group, Main Chain: Polybutadiene, Hydroxy Equivalent: 1400) | - | 100 | - | - | - | - | - | - | - | - | - | - | - | 100 |
| Elastomeric | Carboxy Group-Containing Polyisoprene (Functional Group: COOH Group, Main Chain: Polyisoprene, Carboxy Equivalent: 4000) | - | - | 100 | 100 | 100 | 100 | - | - | - | - | - | - | - | - |
| Polymer (E) | Amino Group-Containing Polyethylene Imine (Functional Group: NH₂ Group, Main Chain: Polyethylene Imine, Amine Value: 18 mmol/g) | - | - | - | - | - | - | 100 | 100 | - | - | - | - | - | - |
| | Alkoxysilyl Group-Containing Polyethylene (Functional Group: SiOR₃ Group, Main Chain: Polyethylene, Alkoxysilyl Equivalent: 10000) | - | - | - | - | - | - | - | - | 100 | 100 | 100 | - | - | - |
| | Epoxy Compound of Styrene-Butadiene Block Copolymer (Functional Group: Epoxy Group, Main Chain: Styrene-Butadiene Block Copolymer, Epoxy Equivalent: 1000) | - | - | - | - | - | - | - | - | - | - | - | 100 | 100 | - |
| | Tris(Hydroxyethyl) Isocyanurate (TANAC, Hydroxy Equivalent: 87.08) | - | - | 2.18 | - | | - | - | - | 0.87 | - | - | - | - | - |
| | Pentaerythritol (Neulizer P, Molecular Weight: 136, Hydroxy Equivalent: 34) | 1.02 | - | - | 0.85 | - | - | - | - | - | 0.34 | - | - | - | - |
| | 2,6-Pyridinedicarboxylic Acid (Molecular Weight: 167.12, Carboxy Equivalent:83.56) | - | 5.97 | - | - | - | - | 15.04 | - | - | - | - | - | - | - |
| Compound | 2,4-Diamino-6-Phenyl-1,3,5-Triazine (Benzoguanamine, Molecular Weight: 187.17, Amino Group Equivalent: 93.59) | - | - | - | - | 2.34 | - | - | - | - | - | 0.94 | 9.36 | - | - |
| (M) | Tris(2,3-Epoxypropyl) Isocyanurate (Molecular Weight: 297.27, Epoxy Equivalent: 99.09) | - | - | - | - | - | - | - | 17.84 | - | - | - | - | - | - |
| | Tris[(3-Mercaptopropionyloxy)-Ethyl] Isocyanurate (Molecular Weight: 525.62, Mercapto Equivalent: 184.2) | - | - | - | - | - | 4.38 | - | - | - | - | - | - | 17.5 | - |
| | m-Xylylene Diisocyanate (Molecular Weight: 118.18, Isocyanate Equivalent: 94.09) | - | - | - | - | - | - | - | - | - | - | - | - | - | 6.72 |
| Organically Modified Clay (S-VEN WX) | | 0.1 | 0.1 | 0.1 | 0.1 | 0.1 | 0.1 | 0.1 | 0.1 | 0.1 | 0.1 | 0.1 | 0.1 | 0.1 | 0.1 |
| Anti-Aging Agent (AO-50) | | 0.778 | 0.782 | 0.853 | 0.852 | 0.853 | 0.78 | 0.866 | 0.794 | 0.852 | 0.851 | 0.777 | 0.86 | 0.793 | 0.783 |
| SEBS (G1633) | | 200 | 200 | 200 | 200 | 200 | 200 | 200 | 200 | 200 | 200 | 200 | 200 | 200 | 200 |
| Paraffin Oil (P500S) | | 400 | 400 | 400 | 400 | 400 | 400 | 400 | 400 | 400 | 400 | 400 | 400 | 400 | 400 |
| α-Olefin Resir | Ethylene-Butene Copolymer (EBM: DF7350) [Crystallinity: 10%] | 75 | 75 | - | - | - | 75 | - | 75 | - | - | 75 | - | 75 | 75 |
| | High-Density Polyethylene (HDPE: HJ590N) | - | - | 150 | 150 | 150 | - | 150 | - | 150 | 150 | - | 150 | - | - |
| Total Amount of Composition (parts by mass) | | 776.898 | 781.852 | 853.133 | 851.802 | 853.293 | 780.26 | 866.006 | 793.734 | 851822 | 851.291 | 776.817 | 860.32 | 793.393 | 782.603 |

In Table 1, the symbol"-" indicates 0 and each numerical value is a value (parts by mass) relative to 100 parts by mass of the polymer (E).

**[Table 2]**

| | | Comp. Ex. 1 | Comp. E., 2 | Comp. Ex. 3 | Comp. Ex. 4 | Comp. E. 5 | Comp. Ex. 6 | Comp. Ex 7 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|---|---|---|---|---|---|
| | Maleic Anhydride-Modified Ethylene-Butene Copolymer (Functional Group: Maleic Anhydride Group, Main Chain: EBM) | 100 | - | - | - | - | - | - | - | - | - | - | - | - | - |
| | Hydroxy-terminated Polybutadiene (Functional Group: OH Group, Main Chain: Polybutadiene, Hydroxy Equivalent: 1400) | - | 100 | - | - | - | - | - | - | - | - | - | - | - | 100 |
| Elastomeric | Carboxy Group-Containing Polyisoprene(Functional Group: COOH Group, Main Chain: Polyisoprene, Carboxy Equivalent: 4000) | - | - | 100 | 100 | 100 | 100 | - | - | - | - | - | - | - | - |
| Polymer (E) | Amino Group-Containing Polyethylene Imine (Functional Group: NH₂ Group, Main Chain: Polyethylene Imine, Amine Value: 18 mmol/g) | - | - | - | - | - | - | 100 | 100 | - | - | - | - | - | - |
| | Alkoxysilyl Group-Containing Polyethylene (Functional Group: SiOR₃ Group, Main Chain: Polyethylene, Alkoxysilyl Equivalent: 10000) | - | - | - | - | - | - | - | - | 100 | 100 | 100 | - | - | - |
| | Epoxy Compound of Styrene-Butadiene Block Copolymer (Functional Group: Epoxy Group, Main Chain: Styrene-Butadiene Block Copolymer, Epoxy Equivalent: 1000) | - | - | - | - | - | - | - | - | - | - | - | 100 | 100 | - |
| | Tris(Hydroxyethyl) Isocyanurate (TANAC, Hydroxy Equivalent: 87.08) | - | - | 2.18 | - | - | - | - | - | 0.87 | - | - | - | - | - |
| | Pentaerythritol (Neulizer P, Molecular Weight: 136, Hydroxy Equivalent: 34) | 1.02 | - | - | 0.85 | - | - | - | - | - | 0.34 | - | - | - | - |
| | 2,6-Pyridinedicarboxylic Acid (Molecular Weight: 167.12, Carboxy Equivalent: 83.56) | - | 5.97 | - | - | - | - | 15.04 | - | - | - | - | - | - | - |
| Compound | 2,4-Diamino-6-Phenyl-1,3,5-Triazine (Benzoguanamine, Molecular Weight: 187.17, Amino Group Equivalent: 93.59) | - | - | - | - | 2.34 | - | - | - | - | - | 0.94 | 9.36 | - | - |
| (M) | Tris(2,3-Epoxypropyl) Isocyanurate (Molecular Weight: 297.27, Epoxy Equivalent: 99.09) | - | - | - | - | - | - | - | 17.84 | - | - | - | - | - | - |
| | Tris[(3-Mercaptopropionyloxy)-Ethyl] Isocyanurate (Molecular Weight: 525.62, Mercapto Equivalent: 184.2) | - | - | - | - | - | 4.38 | - | - | - | - | - | - | 17.5 | - |
| | m-Xylylene Diisocyanate (Molecular Weight: 118.18, Isocyanate Equivalent: 94.09) | - | - | - | - | - | - | - | - | - | - | - | - | - | 6.72 |
| Organically Modified Clay (S-VEN WX) | | - | - | - | - | - | - | - | - | - | - | - | - | - | - |
| Anti-Aging Agent (AO-50) | | 0.778 | 0.782 | 0.853 | 0.852 | 0.853 | 0.78 | 0.866 | 0.794 | 0.852 | 0.851 | 0.777 | 0.86 | 0.793 | 0.783 |
| SEBS (G1633) | | 200 | 200 | 200 | 200 | 200 | 200 | 200 | 200 | 200 | 200 | 200 | 200 | 200 | 200 |
| Paraffin Oil (P500S) | | 400 | 400 | 400 | 400 | 400 | 400 | 400 | 400 | 400 | 400 | 400 | 400 | 400 | 400 |
| α-Olefin Resin | Ethylene-Butene Copolymer (EBM: DF7350) [Crystallinity: 10%] | 75 | 75 | - | - | - | 75 | - | 75 | - | - | 75 | - | 75 | 75 |
| | High-Density Polyethylene (HDPE: HJ590N) | - | - | 150 | 150 | 150 | - | 150 | - | 150 | 150 | - | 150 | - | - |
| Total Amount of Composition (parts by mass) | | 776.798 | 781.752 | 853.033 | 851.702 | 853.193 | 780.16 | 865.906 | 793.634 | 851.722 | 851.191 | 776.717 | 860.22 | 793.293 | 782.503 |

In Table 2, the symbol "-" indicates 0 and each numerical value is a value (parts by mass) relative to 100 parts by mass of the polymer (E).

**[Table 3]**

| | Modulus at 100% (MPa) | Strength at Break (MPa) | Tear Strength (N/cm) |
|---|---|---|---|
| Ex. 1 | 0.39 | 2.47 | 63 |
| Ex. 2 | 0.37 | 2.38 | 65 |
| Ex. 3 | 1.35 | 9.28 | 221 |
| Ex. 4 | 1.33 | 9.20 | 224 |
| Ex. 5 | 1.34 | 9.18 | 232 |
| Ex. 6 | 0.36 | 2.56 | 68 |
| Ex. 7 | 1.42 | 9.08 | 236 |
| Ex. 8 | 0.40 | 2.51 | 66 |
| Ex. 9 | 1.38 | 9.21 | 238 |
| Ex. 10 | 1.36 | 9.24 | 239 |
| Ex. 11 | 0.38 | 2.52 | 64 |
| Ex. 12 | 1.37 | 9.15 | 240 |
| Ex. 13 | 0.39 | 2.47 | 67 |
| Ex. 14 | 0.35 | 2.43 | 68 |
| Comp. Ex. 1 | 0.25 | 1.58 | 45 |
| Comp. Ex. 2 | 0.26 | 1.59 | 44 |
| Comp. Ex. 3 | 0.98 | 6.56 | 155 |
| Comp. Ex. 4 | 0.96 | 6.72 | 157 |
| Comp. Ex. 5 | 0.94 | 6,66 | 158 |
| Comp. Ex. 6 | 0.22 | 1.61 | 42 |
| Comp. Ex. 7 | 0.93 | 6.72 | 161 |
| Comp. Ex. 8 | 0.27 | 1.61 | 41 |
| Comp. Ex. 9 | 0.91 | 6.58 | 159 |
| Comp. Ex. 10 | 0.95 | 6.00 | 155 |
| Comp. Ex. 11 | 0.27 | 1.68 | 40 |
| Comp. Ex. 12 | 0.89 | 6.54 | 156 |
| Comp. Ex. 13 | 0.25 | 1.56 | 42 |
| Comp. Ex. 14 | 0.23 | 1.54 | 40 |

First, in reference to the results presented in Table 3 and the constitutions presented in Tables 1 and 2, comparisons were made between the compounds having the same constitutions except for the presence/absence of the organically modified clays (a comparison between Example and Comparative Example with the same number) . As a result, all the thermoplastic elastomer compositions of the present invention (Examples 1 to 14) using the organically modified clays were found achieving higher values in the modulus at 100% and also higher values in the strength at break than in the respective cases not using the organically modified clays. Moreover, the comparisons between the compounds having the same constitutions except for the presence/absence of the organically modified clays (the comparison between Example and Comparative Example with the same number) demonstrated that all the thermoplastic elastomer compositions of the present invention (Examples 1 to 14) using the organically modified clays achieved sufficiently high values in the tear strength as comparted with the respective cases not using the organically modified clays.

From these results, it was found that a sufficiently high level of tear strength can be obtained by the thermoplastic elastomer compositions of the present invention (Examples 1 to 14) each using the elastomer component and the organically modified clay in combination. In addition, it was found that a higher level of tensile strength (mechanical strength) based on the modulus at 100% and the strength at break can be obtained by the thermoplastic elastomer compositions of the present invention (Examples 1 to 14) each using the elastomer component and the organically modified clay in combination.

### [Industrial Applicability]

As has been described above, according to the present invention, it is possible to provide a thermoplastic elastomer composition which can achieve a higher level of tensile strength based on modulus at 100% and strength at break and which also can have a sufficiently high level of tear strength.

Thus, the thermoplastic elastomer compositions of the present invention are useful as materials and the like for producing various rubber components in the fields of, for example, electrical and electronic instruments, home appliances, chemicals, pharmaceuticals, glass, earth materials, steels, nonferrous metals, machineries, precision equipment, cosmetics, textiles, mining, pulp, paper, construction/civil engineering/building, foods/beverages, general consumer goods/services, transportation equipment, construction machines, electrical equipment, facilities (industrial facilities, air conditioners, hot water supplies, energy farms), metals, media, information, communication devices, lighting devices, displays, agriculture, fishery, forestry, marine industry, agribusiness, biotechnologies, nanotechnologies, and the like (more specifically, products and the like for use in applications such as automobile-related products, hoses, belts, seats, anti-vibration rubbers, rollers, linings, rubber-coated fabrics, sealing materials, gloves, fenders, rubbers for medical use (syringe gaskets, tubes, catheters), gaskets (for home appliances, for construction), asphalt modifiers, hot melt adhesives, boots, grips, toys, shoes, sandals, keypads, gears, PET bottle cap liners, rubber parts for printers, sealing materials, paints and coating materials, printing inks, and so on) .

## Claims

1. A thermoplastic elastomer composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below, wherein
the elastomer component is at least one reaction product selected from the group consisting of the following reaction products (I) to (VI):
a reaction product (I) of a maleic anhydride-modified elastomeric polymer with at least one compound among hydrocarbon compounds each having two or more substituents of at least one type selected from hydroxy groups, thiol groups, and amino groups;
a reaction product (II) of a hydroxy group-containing elastomeric polymer with a compound having two or more substituents of at least one type selected from carboxy groups, alkoxysilyl groups, and isocyanate groups;
a reaction product (III) of a carboxy group-containing elastomeric polymer with a compound having two or more substituents of at least one type selected from hydroxy groups, thiol groups, and amino groups;
a reaction product (IV) of an amino group-containing elastomeric polymer with a compound having two or more substituents of at least one type selected from carboxy groups, epoxy groups, alkoxysilyl groups, and isocyanate groups;
a reaction product (V) of an alkoxysilyl group-containing elastomeric polymer with a compound having two or more substituents of at least one type selected from hydroxy groups, carboxy groups, and amino groups; and
a reaction product (VI) of an epoxy group-containing elastomeric polymer with a compound having two or more substituents of at least one type selected from thiol groups and amino groups, and
the composition further comprises an organically modified clay, a content ratio of which is 20 parts by mass or less relative to 100 parts by mass of the elastomer component.

2. The thermoplastic elastomer composition according to claim 1, wherein a main chain of the polymer contained as the elastomer component is at least one selected from the group consisting of diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers.
